(19) Europäisches Patentamt / European Patent Office / Office européen des brevets

(11) **EP 3 051 620 A1**

(12) **EUROPEAN PATENT APPLICATION**
published in accordance with Art. 153(4) EPC

(43) Date of publication:
**03.08.2016 Bulletin 2016/31**

(51) Int Cl.:
**H01M 10/0568** (2010.01)   **H01G 11/06** (2013.01)
**H01G 11/60** (2013.01)   **H01G 11/62** (2013.01)
**H01M 10/0569** (2010.01)

(21) Application number: **14848198.9**

(22) Date of filing: **25.09.2014**

(86) International application number:
**PCT/JP2014/004913**

(87) International publication number:
**WO 2015/045389 (02.04.2015 Gazette 2015/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:
25.09.2013   JP 2013198303
25.09.2013   JP 2013198414
25.09.2013   JP 2013198556
25.09.2013   JP 2013198598
25.09.2013   JP 2013198595
10.12.2013   JP 2013255097
10.12.2013   JP 2013255087
10.12.2013   JP 2013255075
12.09.2014   JP 2014186295
12.09.2014   JP 2014186296
12.09.2014   JP 2014186297
12.09.2014   JP 2014186298
12.09.2014   JP 2014186294

(71) Applicant: **The University of Tokyo**
**Tokyo 113-8654 (JP)**

(72) Inventors:
• **YAMADA, Atsuo**
**Tokyo 113-8654 (JP)**
• **YAMADA, Yuki**
**Tokyo 113-8654 (JP)**
• **KAWAI, Tomoyuki**
**Kariya-shi**
**Aichi 448-8671 (JP)**
• **HASEGAWA, Yuki**
**Kariya-shi**
**Aichi 448-8671 (JP)**
• **NAKAGAKI, Yoshihiro**
**Kariya-shi**
**Aichi 448-8671 (JP)**
• **MASE, Kohei**
**Kariya-shi**
**Aichi 448-8671 (JP)**
• **MIYOSHI, Manabu**
**Kariya-shi**
**Aichi 448-8671 (JP)**
• **NIWA, Junichi**
**Kariya-shi**
**Aichi 448-8671 (JP)**
• **GODA, Nobuhiro**
**Kariya-shi**
**Aichi 448-8671 (JP)**

(74) Representative: **TBK**
**Bavariaring 4-6**
**80336 München (DE)**

(54) **ELECTROLYTE SOLUTION FOR ELECTRICITY STORAGE DEVICES SUCH AS BATTERIES AND CAPACITORS CONTAINING SALT, WHEREIN ALKALI METAL, ALKALINE EARTH METAL OR ALUMINUM SERVES AS CATIONS, AND ORGANIC SOLVENT HAVING HETERO ELEMENT, METHOD FOR PRODUCING SAME, AND CAPACITOR PROVIDED WITH SAID ELECTROLYTE SOLUTION**

(57)   Provided is an electrolytic solution in which a metal salt and a solvent exist in a new state. The electrolytic solution of the present invention is an electrolytic solution containing a salt whose cation is an alkali metal, an alkaline earth metal, or aluminum, and an organic solvent having a heteroelement. Regarding an intensity of a peak derived from the organic solvent in a vibrational spectroscopy spectrum of the electrolytic solution, $I_s > I_o$ is satisfied when an intensity of an original peak of the organic solvent is represented as $I_o$ and an intensity of a peak resulting from shifting of the original peak is represented as $I_s$.

**Description**

Technical Field

The present invention relates to: an electrolytic solution, for electrical storage devices such as batteries and capacitors, containing a salt whose cation is an alkali metal, an alkaline earth metal, or aluminum, and an organic solvent having a heteroelement; a method for producing the electrolytic solution; and a capacitor including the electrolytic solution.

Background Art

Generally, a battery includes, as main components, a positive electrode, a negative electrode, and an electrolytic solution. In the electrolytic solution, an appropriate electrolyte is added at an appropriate concentration range. For example, in an electrolytic solution of a lithium ion secondary battery, a lithium salt such as $LiClO_4$, $LiAsF_6$, $LiPF_6$, $LiBF_4$, $CF_3SO_3Li$, and $(CF_3SO_2)_2NLi$ is commonly added as an electrolyte, and the concentration of the lithium salt in the electrolytic solution is generally set at about 1 mol/L.

As a matter of fact, Patent Literature 1 discloses a lithium ion secondary battery using an electrolytic solution containing $LiPF_6$ at a concentration of 1 mol/L. Furthermore, Patent Literature 2 discloses a lithium ion secondary battery using an electrolytic solution containing $(CF_3SO_2)_2NLi$ at a concentration of 1 mol/L. The viscosity of electrolytic solutions disclosed in Patent Literature 1 and 2 is not larger than about 5 mpa·s.

In addition, for the purpose of improving performance of batteries, studies are actively conducted for various additives to be added to an electrolytic solution containing a lithium salt.

For example, Patent Literature 3 describes an electrolytic solution obtained by adding, to an electrolytic solution containing $LiPF_6$ at a concentration of 1 mol/L, a small amount of a specific additive, and discloses a lithium ion secondary battery using the electrolytic solution. In addition, Patent Literature 4 also describes an electrolytic solution obtained by adding, to an electrolytic solution containing $LiPF_6$ at a concentration of 1 mol/L, a small amount of phenyl glycidyl ether, and discloses a lithium ion secondary battery using the electrolytic solution. The viscosities of the electrolytic solutions described in Patent Literature 3 and 4 are both not larger than about 5 mpa·s.

Generally, a capacitor refers to an electric condenser that releases or accumulates charge in accordance with the capacitance thereof. The action mechanism of charging and discharging of electricity by the capacitor is based on adsorption and desorption of charge to an electrode. Since this action mechanism does not accompany electrochemical reactions, the capacitor is highly stable, and transfer of charge in the capacitor occurs quickly.

Among capacitors, some include an electrolytic solution, and electrical double layer capacitors are known as examples thereof. In an electrical double layer capacitor, when an electric potential difference is generated between electrodes, at a positive electrode, anions of the electrolytic solution are aligned in a layer at an interface between the positive electrode and the electrolytic solution, and, at a negative electrode, cations of the electrolytic solution are aligned in a layer at an interface between the negative electrode and the electrolytic solution. Such a layer state possesses capacitance, and the state is a charged state for the electrical double layer capacitor.

As a capacitor including an electrolytic solution, other than the electrical double layer capacitor, a lithium ion capacitor having improved operating voltage is known. The lithium ion capacitor refers to a capacitor whose positive electrode is an electrode similar to that of the electrical double layer capacitor, whose negative electrode is an electrode formed of a material similar to the negative electrode of the lithium ion secondary battery, and whose electrolytic solution is a general electrolytic solution for lithium ion secondary batteries. Since the potential of the negative electrode of the lithium ion capacitor is lowered through pre-doping in which the negative electrode is pre-doped with lithium ions, the lithium ion capacitor displays high electric capacitance.

During charging and discharging of the lithium ion capacitor, the negative electrode is reversibly doped with and undoped of, i. e. , inserted with and eliminated of, a part of the lithium ions with which the negative electrode had been pre-doped. Thus, an electrochemical reaction (cell reaction) identical to that occurring in a lithium ion secondary battery is considered to be occurring between the electrolytic solution and the negative electrode of the lithium ion capacitor. On the other hand, adsorption and desorption of charge, which are characteristic of capacitors, are occurring between the electrolytic solution and the positive electrode.

Electric capacitance (J) utilizable by a capacitor is determined from (Capacity of Electrode) × (Voltage) × (Voltage) / 2. For the purpose of increasing the electric capacitance, a measure of using a material having a large specific surface area for the electrode, a measure of using an organic solvent-containing electrolytic solution as the electrolytic solution, and the like have been considered.

A specific example of the measures described above is an attempt, which is conducted actively, for increasing the capacity of the electrode by increasing the specific surface area of a carbon material used for the electrode to increase the number of sites for adsorbing charge.

As specific measures focusing on the electrolytic solution, capacitors using ionic liquids as the electrolytic solutions are disclosed in Patent Literature 5 to 9. As disclosed in Patent Literature 10 and 11, as the electrolytic solutions of conventional capacitors and lithium ion capacitors, solutions obtained by dissolving $LiPF_6$ or $(C_2H_5)_4NBF_4$ in a solvent such as propylene carbonate at a concentration of about 1 mol/L are commonly used.

Citation List

[Patent Literature]

Patent Literature 1: JP2013149477 (A)
Patent Literature 2: JP2013134922 (A)
Patent Literature 3: JP2013145724 (A)
Patent Literature 4: JP2013137873 (A)
Patent Literature 5: JP2004111294 (A)
Patent Literature 6: JP2008010613 (A)
Patent Literature 7: WO2004019356 (A1)
Patent Literature 8: WO2004027789 (A1)
Patent Literature 9: WO2005076299 (A1)
Patent Literature 10: JPH1131637 (A)
Patent Literature 11: JPH1027733 (A)

Summary of Invention

Technical Problem

As described in Patent Literature 1 to 4, conventionally, in an electrolytic solution used in a lithium ion secondary battery, to have a lithium salt contained at a concentration of about 1 mol/L has been technical common knowledge. In addition, as described in Patent Literature 3 and 4, studies for improving electrolytic solutions have been generally conducted with a focus on additives, which are separate from the lithium salt.

Contrary to such conventional technical common knowledge, one mode of the present invention focuses on the relationship between a metal salt and a solvent in an electrolytic solution, and a purpose of the mode is to provide an electrolytic solution in which a metal salt and a solvent exist in a new state, and a method for producing the electrolytic solution.

Unlike the focus of a person skilled in the art hitherto, one mode of the present invention focuses on the relationship between density and concentration in an electrolytic solution, and a purpose of the mode is to provide a group of suitable electrolytic solutions.

One mode of the present invention focuses on the viscosity of an electrolytic solution itself, and a purpose of the mode is to provide an electrolytic solution whose viscosity is in a range which has not been conventionally used.

An ionic liquid consists of a cation having a large ion radius and an anion having a large ion radius, and is in a liquid state at an ordinary temperature. Since an electrolytic solution formed of an ionic liquid only consists of ions, the electrolytic solution formed of the ionic liquid has a high ion concentration when compared to an electrolytic solution with the same volume . Although the ionic liquid has a large ion radius, since the ion concentration of the electrolytic solution is high, an electric capacitance of a capacitor including the electrolytic solution formed of an ionic liquid is comparable to an electric capacitance of a capacitor including a conventional electrolytic solution.

However, the electric capacitance of a capacitor including the electrolytic solution formed of an ionic liquid also has limits. Thus, search has been performed for a new means capable of improving the electric capacitance of a capacitor.

One mode of the present invention has been made in view of such circumstances, and a purpose of the mode is to provide a capacitor including an electrolytic solution in which a metal salt and a solvent exist in a new state.

Solution to Problem

The present inventors have conducted thorough investigation with much trial and error. As a result, the present inventors have discovered that, contrary to technical common knowledge, an electrolytic solution having added thereto, as an electrolyte, a lithium salt at an amount more than a commonly used amount maintains a solution state. In addition, the present inventors have found that such an electrolytic solution suitably acts as an electrolytic solution of a battery. After performing an analysis on the electrolytic solution, the present inventors discovered that an electrolytic solution in which a specific relationship exists in peaks observed in an IR spectrum or a Raman spectrum is particularly advantageous as an electrolytic solution of a battery, and arrived at one mode of the present invention.

An electrolytic solution which is one mode of the present invention is an electrolytic solution containing a salt whose cation is an alkali metal, an alkaline earth metal, or aluminum, and an organic solvent having a heteroelement, and, regarding an intensity of a peak derived from the organic solvent in a vibrational spectroscopy spectrum of the electrolytic solution, Is>Io is satisfied when an intensity of an original peak of the organic solvent is represented as Io and an intensity of a peak resulting from shifting of the original peak of the organic solvent is represented as Is.

A method, which is one mode of the present invention, for producing an electrolytic solution includes: a first dissolution step of preparing a first electrolytic solution by mixing an organic solvent having a heteroelement and a salt whose cation is an alkali metal, an alkaline earth metal, or aluminum to dissolve the salt; a second dissolution step of preparing a second electrolytic solution in a supersaturation state by adding the salt to the first electrolytic solution under stirring and/or heating conditions to dissolve the salt; and a third dissolution step of preparing a third electrolytic solution by adding the salt to the second electrolytic solution under stirring and/or heating conditions to dissolve the salt.

The present inventors have conducted thorough investigation without being confined to conventional technical common knowledge with much trial and error. As a result, the present inventors have discovered, among electrolytic solutions including a metal salt and an organic solvent, a large number of suitable electrolytic solutions, particularly suitable as electrolytic solutions for lithium ion secondary batteries. Regarding the relationship between a suitable electrolytic solution and a conventional electrolytic solution, although the present inventors have attempted to find a definitive rule that depends on the concentration of the metal salt but does not depend on the type of the metal salt and the type of the organic solvent, this attempt has ended in failure. More specifically, a linear relationship regarding metal salt concentration not depending on the type of the metal salt and the type of the organic solvent could not be found. After further investigation, the present inventors unexpectedly discovered that a group of electrolytic solutions, in which a specific relationship exists between density and concentration, act suitably as an electrolytic solution of a battery when compared to a conventional electrolytic solution, and arrived at one mode of the present invention.

An electrolytic solution which is one mode of the present invention is an electrolytic solution containing a salt whose cation is an alkali metal, an alkaline earth metal, or aluminum, and an organic solvent having a heteroelement, wherein d/c obtained by dividing a density d (g/cm$^3$) of the electrolytic solution by a salt concentration c (mol/L) of the electrolytic solution satisfies $0.15 \leq d/c \leq 0.71$.

As described above, the present inventors have discovered that an electrolytic solution having added thereto a specific lithium salt at an amount more than a commonly used amount maintains a solution state. In addition, the present inventors have found that such an electrolytic solution displays ionic conductivity and has a high viscosity when compared to a conventional electrolytic solution. Furthermore, the present inventors, after performing an analysis on the electrolytic solution, discovered that an electrolytic solution in which a specific relationship exists between viscosity and ionic conductivity is advantageous particularly as an electrolytic solution of a battery, and arrived at one mode of the present invention.

An electrolytic solution which is one mode of the present invention is an electrolytic solution containing a salt whose cation is an alkali metal, an alkaline earth metal, or aluminum, and an organic solvent having a heteroelement, wherein a viscosity $\eta$ (mPa·s) of the electrolytic solution satisfies $10 < \eta < 500$, and an ionic conductivity $\sigma$ (mS/cm) of the electrolytic solution satisfies $1 \leq \sigma$.

As described above, the present inventors have discovered that, contrary to technical common knowledge, an electrolytic solution having added thereto, as an electrolyte, a lithium salt at an amount more than a commonly used amount maintains a solution state. In addition, the present inventors have found that such an electrolytic solution suitably acts as an electrolytic solution of a capacitor. After performing an analysis on the electrolytic solution, the present inventors discovered that an electrolytic solution in which a specific relationship exists in peaks observed in an IR spectrum or a Raman spectrum is particularly advantageous as an electrolytic solution of a capacitor, and arrived at one mode of the present invention.

A capacitor of the present invention is a capacitor including an electrolytic solution containing a salt whose cation is an alkali metal, an alkaline earth metal, or aluminum, and an organic solvent having a heteroelement, wherein, regarding an intensity of a peak derived from the organic solvent in a vibrational spectroscopy spectrum of the electrolytic solution, Is>Io is satisfied when an intensity of an original peak of the organic solvent is represented as Io and an intensity of a peak resulting from shifting of the original peak is represented as Is.

Advantageous Effects of Invention

A new electrolytic solution according to each of the modes of the present invention improves various battery characteristics. In addition, a new capacitor of the present invention displays suitable electric capacitance.

Brief Description of Drawings

Fig. 1 is an IR spectrum of an electrolytic solution of Example 4;
Fig. 2 is an IR spectrum of an electrolytic solution of Example 3;
Fig. 3 is an IR spectrum of an electrolytic solution of Example 14;
Fig. 4 is an IR spectrum of an electrolytic solution of Example 13;
Fig. 5 is an IR spectrum of an electrolytic solution of Example 11;
Fig. 6 is an IR spectrum of an electrolytic solution of Comparative Example 7;
Fig. 7 is an IR spectrum of an electrolytic solution of Comparative Example 14;
Fig. 8 is an IR spectrum of acetonitrile;
Fig. 9 is an IR spectrum of $(CF_3SO_2)_2NLi$;
Fig. 10 is an IR spectrum of $(FSO_2)_2NLi$ (2100 to 2400 $cm^{-1}$);
Fig. 11 is an IR spectrum of an electrolytic solution of Example 15;
Fig. 12 is an IR spectrum of an electrolytic solution of Example 16;
Fig. 13 is an IR spectrum of an electrolytic solution of Example 17;
Fig. 14 is an IR spectrum of an electrolytic solution of Example 18;
Fig. 15 is an IR spectrum of an electrolytic solution of Example 19;
Fig. 16 is an IR spectrum of an electrolytic solution of Comparative Example 15;
Fig. 17 is an IR spectrum of dimethyl carbonate;
Fig. 18 is an IR spectrum of an electrolytic solution of Example 20;
Fig. 19 is an IR spectrum of an electrolytic solution of Example 21;
Fig. 20 is an IR spectrum of an electrolytic solution of Example 22;
Fig. 21 is an IR spectrum of an electrolytic solution of Comparative Example 16;
Fig. 22 is an IR spectrum of ethyl methyl carbonate;
Fig. 23 is an IR spectrum of an electrolytic solution of Example 23;
Fig. 24 is an IR spectrum of an electrolytic solution of Example 24;
Fig. 25 is an IR spectrum of an electrolytic solution of Example 25;
Fig. 26 is an IR spectrum of an electrolytic solution of Comparative Example 17;
Fig. 27 is an IR spectrum of diethyl carbonate;
Fig. 28 is an IR spectrum of $(FSO_2)_2NLi$ (1900 to 1600 $cm^{-1}$);
Fig. 29 is an IR spectrum of an electrolytic solution of Example 26;
Fig. 30 is an IR spectrum of an electrolytic solution of Example 27;
Fig. 31 is a Raman spectrum of an electrolytic solution of Example 12;
Fig. 32 is a Raman spectrum of an electrolytic solution of Example 13;
Fig. 33 is a Raman spectrum of an electrolytic solution of Comparative Example 14;
Fig. 34 is a Raman spectrum of an electrolytic solution of Example 15;
Fig. 35 is a Raman spectrum of an electrolytic solution of Example 17;
Fig. 36 is a Raman spectrum of an electrolytic solution of Example 19;
Fig. 37 is a Raman spectrum of an electrolytic solution of Comparative Example 15;
Fig. 38 shows a result of responsivity against repeated rapid charging/discharging in Evaluation Example 10;
Fig. 39 is a DSC chart obtained when an electrolytic solution and a charged-state positive electrode of a lithium ion secondary battery of Example B in Evaluation Example 11 were placed together;
Fig. 40 is a DSC chart obtained when an electrolytic solution and a charged-state positive electrode of a lithium ion secondary battery of Comparative Example B in Evaluation Example 11 were placed together;
Fig. 41 shows charging/discharging curves of a half-cell of Example E;
Fig. 42 shows charging/discharging curves of a half-cell of Example F;
Fig. 43 shows charging/discharging curves of a half-cell of Example G;
Fig. 44 shows charging/discharging curves of a half-cell of Example H;
Fig. 45 shows charging/discharging curves of a half-cell of Comparative Example E;
Fig. 46 is a graph showing the relationship between potential (3.1 to 4.6 V) and response current in a half-cell of Example I;
Fig. 47 is a graph showing the relationship between potential (3.1 to 5.1 V) and response current in the half-cell of Example I;
Fig. 48 is a graph showing the relationship between potential (3.1 to 4.6 V) and response current in a half-cell of Example J;
Fig. 49 is a graph showing the relationship between potential (3.1 to 5.1 V) and response current in the half-cell of Example J;

Fig. 50 is a graph showing the relationship between potential (3.1 to 4.6 V) and response current in a half-cell of Example L;

Fig. 51 is a graph showing the relationship between potential (3.1 to 5.1 V) and response current in the half-cell of Example L;

Fig. 52 is a graph showing the relationship between potential (3.1 to 4.6 V) and response current in a half-cell of Example M;

Fig. 53 is a graph showing the relationship between potential (3.1 to 5.1 V) and response current in the half-cell of Example M;

Fig. 54 is a graph showing the relationship between potential (3.1 to 4.6 V) and response current in a half-cell of Comparative Example F;

Fig. 55 is a graph showing the relationship between potential (3.0 to 4.5 V) and response current in a half-cell of Example J;

Fig. 56 is a graph showing the relationship between potential (3.0 to 5.0 V) and response current in the half-cell of Example J;

Fig. 57 is a graph showing the relationship between potential (3.0 to 4.5 V) and response current in a half-cell of Example K;

Fig. 58 is a graph showing the relationship between potential (3.0 to 5.0 V) and response current in the half-cell of Example K;

Fig. 59 is a graph showing the relationship between potential (3.0 to 4.5 V) and response current in a half-cell of Comparative Example G;

Fig. 60 is a graph showing the relationship between potential (3.0 to 5.0 V) and response current in the half-cell of Comparative Example G;

Fig. 61 is a graph showing voltage curves of a lithium ion secondary battery of Example N at respective current rates;

Fig. 62 is a graph showing voltage curves of a lithium ion secondary battery of Comparative Example H at respective current rates;

Fig. 63 is a planar plot of complex impedance of a battery in Evaluation Example 18;

Fig. 64 shows charging/discharging curves of capacitors of Example R and Comparative Example J;

Fig. 65 shows charging/discharging curves of capacitors of Example S and Comparative Example K;

Fig. 66 shows charging/discharging curves of the capacitor of Example S at cut-off voltages of 0 to 2 V;

Fig. 67 shows charging/discharging curves of the capacitor of Example S at cut-off voltages of 0 to 2.5 V;

Fig. 68 shows charging/discharging curves of the capacitor of Example S at cut-off voltages of 0 to 3 V;

Fig. 69 shows discharging curves of the capacitor of Example S at respective cut-off voltages; and

Fig. 70 shows charging/discharging curves of a lithium ion capacitor of Example T.

Description of Embodiments

The following describes embodiments of the present invention. Unless mentioned otherwise in particular, a numerical value range of "a to b" described in the present application includes, in the range thereof, a lower limit "a" and an upper limit "b." A numerical value range can be formed by arbitrarily combining such upper limit values, lower limit values, and numerical values described in Examples. In addition, numerical values arbitrarily selected within the numerical value range can be used as upper limit and lower limit numerical values.

An electrolytic solution which is one mode of the present invention is an electrolytic solution containing a salt whose cation is an alkali metal, an alkaline earth metal, or aluminum, and an organic solvent having a heteroelement. With regard to an intensity of a peak derived from the organic solvent in a vibrational spectroscopy spectrum of the electrolytic solution, $Is>Io$ is satisfied when an intensity of a peak at a wave number of an original peak of the organic solvent is represented as $Io$ and an intensity of a peak resulting from wave-number shifting of the original peak of the organic solvent is represented as $Is$.

The relationship between $Is$ and $Io$ in a conventional electrolytic solution is $Is<Io$.

An electrolytic solution which is one mode of the present invention is an electrolytic solution containing a salt whose cation is an alkali metal, an alkaline earth metal, or aluminum, and an organic solvent having a heteroelement. "d/c" obtained by dividing a density $d$ ($g/cm^3$) of the electrolytic solution by a salt concentration $c$ (mol/L) of the electrolytic solution satisfies $0.15 \leq d/c \leq 0.71$.

A conventional common electrolytic solution does not satisfy the above described relationships.

An electrolytic solution which is one mode of the present invention is an electrolytic solution containing a salt whose cation is an alkali metal, an alkaline earth metal, or aluminum, and an organic solvent having a heteroelement. A viscosity $\eta$ (mPa·s) of the electrolytic solution satisfies $10<\eta<500$, and an ionic conductivity $\sigma$ (mS/cm) of the electrolytic solution satisfies $1 \leq \sigma$.

A capacitor of the present invention is a capacitor including an electrolytic solution containing a salt whose cation is an alkali metal, an alkaline earth metal, or aluminum, and an organic solvent having a heteroelement. With regarding an intensity of a peak derived from the organic solvent in a vibrational spectroscopy spectrum of the electrolytic solution, Is>Io is satisfied when an intensity of a peak at a wave number of an original peak of the organic solvent is represented as Io and an intensity of a peak resulting from wave-number shifting of the original peak is represented as Is.

Hereinafter, "a salt whose cation is an alkali metal, an alkaline earth metal, or aluminum" is sometimes referred to as "a metal salt" or simply "a salt," and the electrolytic solutions of respective modes of the present invention are sometimes collectively referred to as "the electrolytic solution of the present invention."

The metal salt may be a compound used as an electrolyte such as $LiClO_4$, $LiAsF_6$, $LiPF_6$, $LiBF_4$, or $LiAlCl_4$ commonly contained in an electrolytic solution of a battery or a capacitor. Examples of a cation of the metal salt include alkali metals such as lithium, sodium, and potassium, alkaline earth metals such as beryllium, magnesium, calcium, strontium, and barium, and aluminum. The cation of the metal salt is preferably a metal ion identical to a charge carrier of the battery in which the electrolytic solution is used. For example, when the electrolytic solution of the present invention is to be used as an electrolytic solution for lithium ion secondary batteries, the cation of the metal salt is preferably lithium.

The chemical structure of an anion of the salt may include at least one element selected from a halogen, boron, nitrogen, oxygen, sulfur, or carbon. Specific examples of the chemical structure of the anion including a halogen or boron include: $ClO_4$, $PF_6$, $AsF_6$, $SbF_6$, $TaF_6$, $BF_4$, $SiF_6$, $B(C_6H_5)_4$, $B(oxalate)_2$, Cl, Br, and I.

The chemical structure of the anion including nitrogen, oxygen, sulfur, or carbon is described specifically in the following.

The chemical structure of the anion of the salt is preferably a chemical structure represented by the following general formula (1), general formula (2), or general formula (3).

$$(R^1X^1)(R^2X^2)N \qquad \text{General Formula (1)}$$

($R^1$ is selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; CN; SCN; or OCN.

$R^2$ is selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; CN; SCN; or OCN.

Furthermore, $R^1$ and $R^2$ optionally bind with each other to form a ring.

$X^1$ is selected from $SO_2$, C=O, C=S, $R^aP$=O, $R^bP$=S, S=O, or Si=O.

$X^2$ is selected from $SO_2$, C=O, C=S, $R^cP$=O, $R^dP$=S, S=O, or Si=O.

$R^a$, $R^b$, $R^c$, and $R^d$ are each independently selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; OH; SH; CN; SCN; or OCN.

In addition, $R^a$, $R^b$, $R^c$, and $R^d$ each optionally bind with $R^1$ or $R^2$ to form a ring.)

$$R^3X^3Y \qquad \text{General Formula (2)}$$

($R^3$ is selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; CN; SCN; or OCN.

$X^3$ is selected from $SO_2$, C=O, C=S, $R^eP=O$, $R^fP=S$, S=O, or Si=O.

$R^e$ and $R^f$ are each independently selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; OH; SH; CN; SCN; or OCN.

In addition, $R^e$ and $R^f$ each optionally bind with $R^3$ to form a ring.

Y is selected from O or S.)

$$(R^4X^4)(R^5X^5)(R^6X^6)C \qquad \text{General Formula (3)}$$

($R^4$ is selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; CN; SCN; or OCN.

$R^5$ is selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; CN; SCN; or OCN.

$R^6$ is selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; CN; SCN; or OCN.

In addition, any two or three of $R^4$, $R^5$, and $R^6$ optionally bind with each other to form a ring.

$X^4$ is selected from $SO_2$, C=O, C=S, $R^gP=O$, $R^hP=S$, S=O, or Si=O.

$X^5$ is selected from $SO_2$, C=O, C=S, $R^iP=O$, $R^jP=S$, S=O, or Si=O.

$X^6$ is selected from $SO_2$, C=O, C=S, $R^kP=O$, $R^lP=S$, S=O, or Si=O.

$R^g$, $R^h$, $R^i$, $R^j$, $R^k$, and $R^l$ are each independently selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; OH; SH; CN; SCN; or OCN.

In addition, $R^g$, $R^h$, $R^i$, $R^j$, $R^k$, and $R^l$ each optionally bind with $R^4$, $R^5$, or $R^6$ to form a ring.)

The wording of "optionally substituted with a substituent group" in the chemical structures represented by the above described general formulae (1) to (3) is to be described. For example, "an alkyl group optionally substituted with a substituent group" refers to an alkyl group in which one or more hydrogen atoms of the alkyl group is substituted with a substituent group, or an alkyl group not including any particular substituent groups.

Examples of the substituent group in the wording of "optionally substituted with a substituent group" include alkyl groups, alkenyl groups, alkynyl groups, cycloalkyl groups, unsaturated cycloalkyl groups, aromatic groups, heterocyclic groups, halogens, OH, SH, CN, SCN, OCN, nitro group, alkoxy groups, unsaturated alkoxy groups, amino group, alkylamino groups, dialkylamino groups, aryloxy groups, acyl groups, alkoxycarbonyl groups, acyloxy groups, aryloxycarbonyl groups, acylamino groups, alkoxycarbonylamino groups, aryloxycarbonylamino groups, sulfonylamino groups, sulfamoyl groups, carbamoyl group, alkylthio groups, arylthio groups, sulfonyl group, sulfinyl group, ureido groups, phosphoric acid amide groups, sulfo group, carboxyl group, hydroxamic acid groups, sulfino group, hydrazino group, imino group, and silyl group, etc. These substituent groups may be further substituted. In addition, when two or more substituent groups exist, the substituent groups may be identical or different from each other.

The chemical structure of the anion of the salt is more preferably a chemical structure represented by the following general formula (4), general formula (5), or general formula (6).

$$(R^7X^7)(R^8X^8)N \qquad \text{General Formula (4)}$$

($R^7$ and $R^8$ are each independently $C_nH_aF_bCl_cBr_dI_e(CN)_f(SCN)_g(OCN)_h$.

"n," "a," "b," "c," "d," "e," "f," "g," and "h" are each independently an integer not smaller than 0, and satisfy $2n+1=a+b+c+d+e+f+g+h$.

In addition, $R^7$ and $R^8$ optionally bind with each other to form a ring, and, in that case, satisfy $2n=a+b+c+d+e+f+g+h$.

$X^7$ is selected from $SO_2$, C=O, C=S, $R^mP$=O, $R^nP$=S, S=O, or Si=O.

$X^8$ is selected from $SO_2$, C=O, C=S, $R^oP$=O, $R^pP$=S, S=O, or Si=O.

$R^m$, $R^n$, $R^o$, and $R^p$ are each independently selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; OH; SH; CN; SCN; or OCN.

In addition, $R^m$, $R^n$, $R^o$, and $R^p$ each optionally bind with $R^7$ or $R^8$ to form a ring.)

$$R^9X^9Y \qquad \text{General Formula (5)}$$

($R^9$ is $C_nH_aF_bCl_cBr_dI_e(CN)_f(SCN)(OCN)_h$.

"n," "a," "b," "c," "d," "e," "f," "g," and "h" are each independently an integer not smaller than 0, and satisfy $2n+1=a+b+c+d+e+f+g+h$.

$X^9$ is selected from $SO_2$, C=O, C=S, $R^qP$=O, $R^rP$=S, S=O, or Si=O.

$R^q$ and $R^r$ are each independently selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; OH; SH; CN; SCN; or OCN.

In addition, $R^q$ and $R^r$ each optionally bind with $R^9$ to form a ring.

Y is selected from O or S.)

$$(R^{10}X^{10})(R^{11}X^{11})(R^{12}X^{12})C \qquad \text{General Formula (6)}$$

($R^{10}$, $R^{11}$, and $R^{12}$ are each independently $C_nH_aF_bCl_cBr_dI_e(CN)_f(SCN)(OCN)_h$.

"n," "a," "b," "c," "d," "e," "f," "g," and "h" are each independently an integer not smaller than 0, and satisfy $2n+1=a+b+c+d+e+f+g+h$.

Any two of $R^{10}$, $R^{11}$, and $R^{12}$ optionally bind with each other to form a ring, and, in that case, groups forming the ring satisfy $2n=a+b+c+d+e+f+g+h$. In addition, the three of $R^{10}$, $R^{11}$, and $R^{12}$ optionally bind with each other to form a ring, and, in that case, among the three, two groups satisfy $2n=a+b+c+d+e+f+g+h$ and one group satisfies $2n-1=a+b+c+d+e+f+g+h$.

$X^{10}$ is selected from $SO_2$, C=O, C=S, $R^sP$=O, $R^tP$=S, S=O, or Si=O.

$X^{11}$ is selected from $SO_2$, C=O, C=S, $R^u1P$=O, $R^vP$=S, S=O, or Si=O.

$X^{12}$ is selected from $SO_2$, C=O, C=S, $R^wP$=O, $R^xP$=S, S=O, or Si=O.

$R^s$, $R^t$, $R^u$, $R^v$, $R^w$, and $R^x$ are each independently selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; OH; SH; CN; SCN; or OCN.

In addition, $R^s$, $R^t$, $R^u$, $R^v$, $R^w$, and $R^x$ each optionally bind with $R^{10}$, $R^{11}$, or $R^{12}$ to form a ring.)

In the chemical structures represented by the general formulae (4) to (6), the meaning of the wording of "optionally substituted with a substituent group" is synonymous with that described for the general formulae (1) to (3).

In the chemical structures represented by the general formulae (4) to (6), "n" is preferably an integer from 0 to 6, more preferably an integer from 0 to 4, and particularly preferably an integer from 0 to 2. In the chemical structures represented by the general formulae (4) to (6), when $R^7$ and $R^8$ bind with each other or $R^{10}$, $R^{11}$, and $R^{12}$ bind with each other to form a ring; "n" is preferably an integer from 1 to 8, more preferably an integer from 1 to 7, and particularly preferably an integer from 1 to 3.

The chemical structure of the anion of the salt is further preferably represented by the following general formula (7), general formula (8), or general formula (9).

$$(R^{13}SO_2)(R^{14}SO_2)N \qquad \text{General Formula (7)}$$

($R^{13}$ and $R^{14}$ are each independently $C_nH_aF_bCl_cBr_dI_e$.

"n," "a," "b," "c," "d," and "e" are each independently an integer not smaller than 0, and satisfy $2n+1=a+b+c+d+e$.

In addition, $R^{13}$ and $R^{14}$ optionally bind with each other to form a ring, and, in that case, satisfy $2n=a+b+c+d+e$.)

$$R^{15}SO_3 \qquad \text{General Formula (8)}$$

($R^{15}$ is $C_nH_aF_bCl_cBr_dI_e$.

"n," "a," "b," "c," "d," and "e" are each independently an integer not smaller than 0, and satisfy $2n+1=a+b+c+d+e$.)

$$(R^{16}SO_2)(R^{17}SO_2)(R^{18}SO_2)C \qquad \text{General Formula (9)}$$

($R^{16}$, $R^{17}$, and $R^{18}$ are each independently $C_nH_aF_bCl_cBr_dI_e$.

"n," "a," "b," "c," "d," and "e" are each independently an integer not smaller than 0, and satisfy $2n+1=a+b+c+d+e$.

Any two of $R^{16}$, $R^{17}$, and $R^{18}$ optionally bind with each other to form a ring, and, in that case, groups forming the ring satisfy $2n=a+b+c+d+e$. In addition, the three of $R^{16}$, $R^{17}$, and $R^{18}$ optionally bind with each other to form a ring, and, in that case, among the three, two groups satisfy $2n=a+b+c+d+e$ and one group satisfies $2n-1=a+b+c+d+e$.)

In the chemical structures represented by the general formulae (7) to (9), "n" is preferably an integer from 0 to 6, more preferably an integer from 0 to 4, and particularly preferably an integer from 0 to 2. In the chemical structures represented by the general formulae (7) to (9), when $R^{13}$ and $R^{14}$ bind with each other or $R^{16}$, $R^{17}$, and $R^{18}$ bind with each other to form a ring; "n" is preferably an integer from 1 to 8, more preferably an integer from 1 to 7, and particularly preferably an integer from 1 to 3.

In addition, in the chemical structures represented by the general formulae (7) to (9), those in which "a," "c," "d," and "e" are 0 are preferable.

The metal salt is particularly preferably $(CF_3SO_2)_2NLi$ (hereinafter, sometimes referred to as "LiTFSA"), $(FSO_2)_2NLi$ (hereinafter, sometimes referred to as "LiFSA"), $(C_2F_5SO_2)_2NLi$, $FSO_2(CF_3SO_2)NLi$, $(SO_2CF_2CF_2SO_2)NLi$, $(SO_2CF_2CF_2CF_2SO_2)NLi$, $FSO_2(CH_3SO_2)NLi$, $FSO_2(C_2F_5SO_2)NLi$, or $FSO_2(C_2H_5SO_2)NLi$.

As the metal salt of the present invention, one that is obtained by combining appropriate numbers of a cation and an anion described above may be used. Regarding the metal salt in the electrolytic solution of the present invention, a single type may be used, or a combination of two or more types may be used.

As the organic solvent having a heteroelement, an organic solvent whose heteroelement is at least one selected from nitrogen, oxygen, sulfur, or a halogen is preferable, and an organic solvent whose heteroelement is at least one selected from nitrogen or oxygen is more preferable. In addition, as the organic solvent having the heteroelement, an aprotic solvent not having a proton donor group such as NH group, $NH_2$ group, OH group, and SH group is preferable.

Specific examples of "the organic solvent having the heteroelement" (hereinafter, sometimes simply referred to as "organic solvent") include nitriles such as acetonitrile, propionitrile, acrylonitrile, and malononitrile, ethers such as 1,2-dimethoxyethane, 1,2-diethoxyethane, tetrahydrofuran, 1,2-dioxane, 1,3-dioxane, 1,4-dioxane, 2,2-dimethyl-1,3-dioxolane, 2-methyltetrahydropyran, 2-methyltetrahydrofuran, and crown ethers, carbonates such as ethylene carbonate, propylene carbonate, dimethyl carbonate, diethyl carbonate, and ethyl methyl carbonate, amides such as formamide, N,N-dimethylformamide, N,N-dimethylacetamide, and N-methylpyrrolidone, isocyanates such as isopropyl isocyanate, n-propylisocyanate, and chloromethyl isocyanate, esters such as methyl acetate, ethyl acetate, propyl acetate, methyl propionate, methyl formate, ethyl formate, vinyl acetate, methyl acrylate, and methyl methacrylate, epoxies such as glycidyl methyl ether, epoxy butane, and 2-ethyloxirane, oxazoles such as oxazole, 2-ethyloxazole, oxazoline, and 2-methyl-2-oxazoline, ketones such as acetone, methyl ethyl ketone, and methyl isobutyl ketone, acid anhydrides such as acetic anhydride and propionic anhydride, sulfones such as dimethyl sulfone and sulfolane, sulfoxides such as dimethyl sulfoxide, nitros such as 1-nitropropane and 2-nitropropane, furans such as furan and furfural, cyclic esters such as γ-butyrolactone, γ-valerolactone, and δ-valerolactone, aromatic heterocycles such as thiophene and pyridine, heterocycles such as tetrahydro-4-pyrone, 1-methylpyrrolidine, and N-methylmorpholine, and phosphoric acid esters such as trimethyl phosphate and triethyl phosphate.

Examples of the organic solvent include linear carbonates represented by the following general formula (10).

$$R^{19}OCOOR^{20}$$      General Formula (10)

($R^{19}$ and $R^{20}$ are each independently selected from $C_nH_aF_bCl_cBr_dI_e$ that is a linear alkyl, or $C_mH_fF_gCl_hBr_iI_j$ whose chemical structure includes a cyclic alkyl. "n," "a," "b," "c," "d," "e," "m," "f," "g," "h," "i," and "j" are each independently an integer not smaller than 0, and satisfy $2n+1=a+b+c+d+e$ and $2m=f+g+h+i+j$.)

In the linear carbonates represented by the general formula (10), "n" is preferably an integer from 1 to 6, more preferably an integer from 1 to 4, and particularly preferably an integer from 1 to 2. "m" is preferably an integer from 3 to 8, more preferably an integer from 4 to 7, and particularly preferably an integer from 5 to 6. In addition, among the linear carbonates represented by the general formula (10), dimethyl carbonate (hereinafter, sometimes referred to as "DMC"), diethyl carbonate (hereinafter, sometimes referred to as "DEC"), and ethyl methyl carbonate (hereinafter, sometimes referred to as "EMC") are particularly preferable.

As the organic solvent, a solvent whose relative permittivity is not smaller than 20 or that has ether oxygen having donor property is preferable, and examples of such an organic solvent include nitriles such as acetonitrile, propionitrile, acrylonitrile, and malononitrile, ethers such as 1,2-dimethoxyethane, 1,2-diethoxyethane, tetrahydrofuran, 1,2-dioxane, 1,3-dioxane, 1,4-dioxane, 2,2-dimethyl-1,3-dioxolane, 2-methyltetrahydropyran, 2-methyltetrahydrofuran, and crown ethers, N,N-dimethylformamide, acetone, dimethyl sulfoxide, and sulfolane. Among those, acetonitrile (hereinafter, sometimes referred to as "AN") and 1,2-dimethoxyethane (hereinafter, sometimes referred to as "DME") are particularly preferable.

Regarding these organic solvents, a single type may be used by itself in the electrolytic solution, or a combination of two or more types may be used.

As reference, the densities (g/cm³) of organic solvents having a heteroelement are listed in Table 1.

[Table 1]

| Organic solvent | Density (g/cm³) |
|---|---|
| 1,2-dimethoxyethane | 0.869 |
| diethyl ether | 0.714 |
| diisopropyl ether | 0.724 |
| ethyl acetate | 0.901 |
| acetic anhydride | 1.083 |
| tetrahydrofuran | 0.889 |
| 1,4-dioxane | 1.034 |
| acetone | 0.790 |
| methyl ethyl ketone | 0.805 |
| carbon tetrachloride | 1.594 |
| chloroform | 1.489 |
| dichloromethane | 1.326 |
| 1,2-dichloroethan | 1.252 |
| acetonitrile | 0.782 |
| nitromethane | 1.138 |
| dimethylformamide | 0.949 |
| hexamethylphosphoric triamide | 1.027 |
| triethylamine | 0.728 |
| pyridine | 0.983 |

(continued)

| Organic solvent | Density (g/cm$^3$) |
|---|---|
| dimethyl sulfoxide | 1.100 |
| carbon bisulfide | 1.263 |
| ethylene carbonate | 1.321 |
| dimethyl carbonate | 1.07 |
| ethyl methyl carbonate | 1.015 |
| diethyl carbonate | 0.976 |
| sulfolane | 1.261 |

A feature of the electrolytic solution of the present invention is, in its vibrational spectroscopy spectrum and regarding an intensity of a peak derived from the organic solvent contained in the electrolytic solution, satisfying Is>Io when an intensity of an original peak of the organic solvent is represented as Io and an intensity of "a peak resulting from shifting of the original peak of the organic solvent" (hereinafter, sometimes referred to as "shift peak") is represented as Is. More specifically, in a vibrational spectroscopy spectrum chart obtained by subjecting the electrolytic solution of the present invention to vibrational spectroscopy measurement, the relationship between the two peak intensities is Is>Io.

Here, "an original peak of the organic solvent" refers to a peak observed at a peak position (wave number) when the vibrational spectroscopy measurement is performed only on the organic solvent. The value of the intensity Io of the original peak of the organic solvent and the value of the intensity Is of the shift peak are the heights or area sizes from a baseline of respective peaks in the vibrational spectroscopy spectrum.

In the vibrational spectroscopy spectrum of the electrolytic solution of the present invention, when multiple peaks resulting from shifting of the original peak of the organic solvent exist, the relationship may be determined based on a peak enabling determination of the relationship between Is and Io most easily. In addition, when multiple types of the organic solvent having the heteroelement are used in the electrolytic solution of the present invention, an organic solvent enabling determination of the relationship between Is and Io most easily (resulting in the largest difference between Is and Io) is selected, and the relationship between Is and Io may be determined based on the obtained peak intensity. In addition, when the peak shift amount is small and peaks before and after shifting overlap with each other to give an appearance like a smooth mountain, the relationship between Is and Io may be determined by performing peak resolution with known means.

In the vibrational spectroscopy spectrum of the electrolytic solution using multiple types of the organic solvent having the heteroelement, a peak of an organic solvent most easily coordinated with a cation (hereinafter, sometimes referred to as "preferential coordination solvent") shifts preferentially from others. In the electrolytic solution using multiple types of the organic solvent having the heteroelement, the mass% of the preferential coordination solvent with respect to the whole organic solvent having the heteroelement is preferably 40% or higher, more preferably 50% or higher, further preferably 60% or higher, and particularly preferably 80% or higher. In addition, in the electrolytic solution using multiple types of the organic solvent having the heteroelement, the vol% of the preferential coordination solvent with respect to the whole organic solvent having the heteroelement is preferably 40% or higher, more preferably 50% or higher, further preferably 60% or higher, and particularly preferably 80% or higher.

The relationship between the two peak intensities in the vibrational spectroscopy spectrum of the electrolytic solution of the present invention preferably satisfies a condition of Is>2×Io, more preferably satisfies a condition of Is>3×Io, further preferably satisfies a condition of Is>5×Io, and particularly preferably satisfies a condition of Is>7×Io. A most preferable electrolytic solution is one in which the intensity Io of the original peak of the organic solvent is not observed and the intensity Is of the shift peak is observed in the vibrational spectroscopy spectrum of the electrolytic solution of the present invention. This means that, in the electrolytic solution, all molecules of the organic solvent contained in the electrolytic solution are completely solvated with the metal salt. The electrolytic solution of the present invention is most preferably in a state in which all molecules of the organic solvent contained in the electrolytic solution are completely solvated with the metal salt (a state of Io=0).

In the electrolytic solution of the present invention, the metal salt and the organic solvent having the heteroelement (or the preferential coordination solvent) are estimated to interact with each other. Specifically, the metal salt and the heteroelement in the organic solvent having the heteroelement (or the preferential coordination solvent) are estimated to form a coordinate bond and form a stable cluster formed of the metal salt and the organic solvent having the heteroelement (or the preferential coordination solvent). Based on results from later described Examples, this cluster is estimated to be formed mostly from coordination of 2 molecules of the organic solvent having the heteroelement (or the preferential coordination solvent) with respect to 1 molecule of the metal salt. When this point is taken into consideration, in the electrolytic solution of the present invention, the mol range of the organic solvent having the heteroelement (or the preferential coordination solvent) with respect to 1 mol of the metal salt is preferably not lower than 1.4 mol but lower than 3.5 mol, more preferably not lower than 1.5 mol but not higher than 3.1 mol, and further preferably not lower than 1.6 mol but not higher than 3 mol.

In addition, theoretically, the electrolytic solution of the capacitor obtains a higher capacity when the salt concentration is higher. Considering the description above, in the electrolytic solution of the present invention, the mol range of the organic solvent having the heteroelement (or the preferential coordination solvent) with respect to 1 mol of the metal salt is preferably lower than 3.5 mol, more preferably not higher than 3.1 mol, and further preferably not higher than 3 mol. Although a higher salt concentration for the electrolytic solution of the capacitor has been described above as being preferable, if a lower limit of the mol range of the organic solvent having a heteroelement (or the preferential coordination solvent) with respect to 1 mol of the metal salt in the electrolytic solution of the present invention is to be shown, examples of the mol range include not lower than 1.1 mol, not lower than 1.4 mol, not lower than 1.5 mol, and not lower than 1.6 mol.

In the electrolytic solution of the present invention, since a cluster is estimated to be formed mostly from coordination of 2 molecules of the organic solvent having the heteroelement (or the preferential coordination solvent) with respect to 1 molecule of the metal salt, the concentration (mol/L) of the electrolytic solution of the present invention depends on respective molecular weights of the metal salt and the organic solvent, and the density in the solution. Thus, unconditionally defining the concentration of the electrolytic solution of the present invention is not appropriate.

Concentration (mol/L) of each of the electrolytic solutions of the present invention is shown in Table 2.

[Table 2]

| Metal salt | Organic solvent | Concentration (mol/L) |
|---|---|---|
| LiTFSA | DME | 2.2 to 3.4 |
| LiTFSA | AN | 3.2 to 4.9 |
| LiFSA | DME | 2.6 to 4.1 |
| LiFSA | AN | 3.9 to 6.0 |
| LiFSA | DMC | 2.3 to 4.5 |
| LiFSA | EMC | 2.0 to 3.8 |
| LiFSA | DEC | 1.8 to 3.6 |
| $LiBF_4$ | DMC | 3.4 to 5.9 |
| $LiPF_6$ | DMC | 3.2 to 5.3 |

An organic solvent forming the cluster and an organic solvent not involved in the formation of the cluster are different in terms of the environment in which the respective organic solvents exist. Thus, in the vibrational spectroscopy measurement, a peak derived from the organic solvent forming the cluster is observed to be shifted toward the high wave number side or the low wave number side with respect to the wave number observed at a peak (original peak of the organic solvent) derived from the organic solvent not involved in the formation of the cluster. Thus, the shift peak represents a peak of the organic solvent forming the cluster.

Examples of the vibrational spectroscopy spectrum include an IR spectrum or a Raman spectrum. Examples of measuring methods of IR measurement include transmission measuring methods such as Nujol mull method and liquid film method, and reflection measuring methods such as ATR method. Regarding which of the IR spectrum and the Raman spectrum is to be selected, a spectrum enabling easy determination of the relationship between Is and Io may be selected as the vibrational spectroscopy spectrum of the electrolytic solution of the present invention. The vibrational spectroscopy measurement is preferably performed in a condition where the effect of moisture in the atmosphere can be lessened or ignored. For example, performing the IR measurement under a low humidity or zero humidity condition such as in a dry room or a glovebox is preferable, or performing the Raman measurement in a state where the electrolytic solution is kept inside a sealed container is preferable.

Here, specific description is provided regarding a peak of the electrolytic solution of the present invention containing LiTFSA as the metal salt and acetonitrile as the organic solvent.

When the IR measurement is performed on acetonitrile alone, a peak derived from stretching vibration of a triple bond between C and N is ordinarily observed at around 2100 to 2400 cm-1.

Here, based on conventional technical common knowledge, a case is envisioned in which an electrolytic solution is obtained by dissolving LiTFSA in an acetonitrile solvent at a concentration of 1 mol/L. Since 1 L of acetonitrile corresponds to approximately 19 mol, 1 mol of LiTFSA and 19 mol of acetonitrile exist in 1 L of a conventional electrolytic solution. Then, in the conventional electrolytic solution, at the same time when acetonitrile solvated with LiTFSA (coordinated with Li) exists, a large amount of acetonitrile not solvated with LiTFSA (not coordinated with Li) exists. Since an acetonitrile molecule solvated with LiTFSA and an acetonitrile molecule not solvated with LiTFSA are different regarding the environments in which the respective acetonitrile molecules are placed, the acetonitrile peaks of both molecules are distinctively observed in the IR spectrum. More specifically, although a peak of acetonitrile not solvated with LiTFSA is observed at the same position (wave number) as in the case with the IR measurement on acetonitrile alone, a peak of acetonitrile solvated with LiTFSA is observed such that its peak position (wave number) is shifted toward the high wave number side.

Since a large amount of acetonitrile not solvated with LiTFSA exists at the concentration of the conventional electrolytic solution, the relationship between the intensity Io of the original peak of acetonitrile and the intensity Is of the peak resulting from shift of the original peak of acetonitrile becomes Is<Io in the vibrational spectroscopy spectrum of the conventional electrolytic solution.

On the other hand, when compared to the conventional electrolytic solution, the electrolytic solution of the present invention has a high concentration of LiTFSA, and the number of acetonitrile molecules solvated (forming a cluster) with LiTFSA in the electrolytic solution is larger than the number of acetonitrile molecules not solvated with LiTFSA. As a result, the relationship between the intensity Io of the original peak of acetonitrile and the intensity Is of the peak resulting from shifting of the original peak of acetonitrile becomes Is>Io in the vibrational spectroscopy spectrum of the electrolytic solution of the present invention.

In Table 3, wave numbers and attributions thereof are exemplified for organic solvents considered to be useful when calculating Io and Is in the vibrational spectroscopy spectrum of the electrolytic solution of the present invention. Depending on measuring devices, measuring environments, and measuring conditions used for obtaining the vibrational spectroscopy spectrum, the wave number of the observed peak may be different from the following wave numbers.

[Table 3]

| Organic solvent | Wave number (cm$^{-1}$) | Attribution |
|---|---|---|
| ethylene carbonate | 1769 | Double bond between C and O |
| propylene carbonate | 1829 | Double bond between C and O |
| acetic anhydride | 1785, 1826 | Double bond between C and O |
| acetone | 1727 | Double bond between C and O |
| acetonitrile | 2250 | Triple bond between C and N |
| acetonitrile | 899 | C-C single bond |
| DME | 1099 | C-O single bond |
| DME | 1124 | C-O single bond |
| N,N-dimethylformamide | 1708 | Double bond between C and O |
| $\gamma$-butyrolactone | 1800 | Double bond between C and O |
| nitropropane | 1563 | Double bond between N and O |
| pyridine | 977 | Unknown |
| dimethyl sulfoxide | 1017 | Double bond between S and O |

Regarding a wave number of an organic solvent and an attribution thereof, well-known data may be referenced. Examples of the reference include "Raman spectrometry" Spectroscopical Society of Japan measurement method series 17, Hiroo Hamaguchi and Akiko Hirakawa, Japan Scientific Societies Press, pages 231 to 249. In addition, a wave number of an organic solvent considered to be useful for calculating Io and Is, and a shift in the wave number when the organic solvent and the metal salt coordinate with each other are predicted from a calculation using a computer. For example, the calculation may be performed by using Gaussian09 (Registered trademark, Gaussian, Inc.), and setting the density function to B3LYP and the basis function to 6-311G++ (d, p). A person skilled in the art can calculate Io and Is by referring to the description in Table 3, well-known data, and a calculation result from a computer to select a peak of an organic solvent.

The density d (g/cm$^3$) of the electrolytic solution of the present invention refers to the density at 20°C. The density d

(g/cm$^3$) preferably satisfies d≥1.2 or d≤2.2, and is more preferably within a range of 1.2≤d≤2.2, even more preferably within a range of 1.24≤d≤2.0, further preferably within a range of 1.26≤d≤1.8, and particularly preferably within a range of 1.27≤d≤1.6.

"d/c" of the electrolytic solution of the present invention is within a range of 0.15≤d/c≤0.71, more preferably within a range of 0.15≤d/c≤0.56, even more preferably within a range of 0.25≤d/c≤0.56, further preferably within a range of 0.26≤d/c≤0.50, and particularly preferably within a range of 0.27≤d/c≤0.47.

"d/c" of the electrolytic solution of the present invention is defined also when the metal salt and the organic solvent are specified. For example, when LiTFSA and DME are respectively selected as the metal salt and the organic solvent, d/c is preferably within a range of 0.42<-≤d/c≤0.56 and more preferably within a range of 0.44≤d/c≤0.52. When LiTFSA and AN are respectively selected as the metal salt and the organic solvent, d/c is preferably within a range of 0.35≤d/c≤0.41 and more preferably within a range of 0.36≤d/c≤0.39. When LiFSA and DME are respectively selected as the metal salt and the organic solvent, d/c is preferably within a range of 0.32≤d/c≤0.46 and more preferably within a range of 0.34≤d/c≤0.42. When LiFSA and AN are respectively selected as the metal salt and the organic solvent, d/c is preferably within a range of 0.25≤d/c≤0.31 and more preferably within a range of 0.26≤d/c≤0.29. When LiFSA and DMC are respectively selected as the metal salt and the organic solvent, d/c is preferably within a range of 0.32≤d/c≤0.48, more preferably within a range of 0.32≤d/c≤0.46, and further preferably within a range of 0.34≤d/c≤0.42. When LiFSA and EMC are respectively selected as the metal salt and the organic solvent, d/c is preferably within a range of 0.34≤d/c≤0.50 and more preferably within a range of 0.37≤d/c≤0.45. When LiFSA and DEC are respectively selected as the metal salt and the organic solvent, d/c is preferably within a range of 0.36≤d/c≤0.54 and more preferably within a range of 0.39≤d/c≤0.48.

Since the electrolytic solution of the present invention has the metal salt and the organic solvent exist in a different environment and has a high metal salt concentration or density when compared to the conventional electrolytic solution; improvement in a metal ion transportation rate in the electrolytic solution (particularly improvement of lithium transference number when the metal is lithium), improvement in reaction rate between an electrode and an electrolytic solution interface, mitigation of uneven distribution of salt concentration in the electrolytic solution caused when a battery undergoes high-rate charging and discharging, and increase in the capacity of an electrical double layer are expected. In the electrolytic solution of the present invention, since most of the organic solvent having the heteroelement is forming a cluster with the metal salt or since the density is high in the electrolytic solution of the present invention, the vapor pressure of the organic solvent contained in the electrolytic solution becomes low. As a result, volatilization of the organic solvent from the electrolytic solution of the present invention is reduced.

A capacitor has a small volume energy density when compared to a battery. Generally, in order to increase the electric capacitance of a capacitor, adsorption sites of an electrode of the capacitor are increased for increasing the absolute amount of ions. However, when the adsorption sites of the electrode and the electrolytic solution are increased, the volume of the battery increases and the size of the battery itself becomes large.

As described above, the electrolytic solution of the present invention has a high metal salt concentration when compared to a conventional electrolytic solution. Thus, the capacitor of the present invention including the electrolytic solution of the present invention has a larger absolute amount of ions capable of aligning at the interface between the electrode and the electrolytic solution when compared to a capacitor including a conventional electrolytic solution. As a result, the electric capacitance of the capacitor of the present invention improves when compared to an electric capacitance of a capacitor including a conventional electrolytic solution.

In the electrolytic solution of the present invention, the environment in which the metal salt and the organic solvent exist forms a specific cluster. Here, when compared to anions and cations forming a general ionic liquid and having large ion radii, the cluster in the electrolytic solution of the present invention is estimated to have a small radius. As a result, since the absolute amount of ions capable of aligning at the interface between the electrode and the electrolytic solution increases, the electric capacitance of the capacitor of the present invention improves when compared to the electric capacitance of a capacitor including a conventional electrolytic solution or an electrolytic solution formed of an ionic liquid.

Since the cation of the electrolytic solution of the present invention is a metal ion, voltage of the capacitor is increased by using a material such as carbon capable of causing a redox reaction through insertion/elimination of the metal ion with respect to the negative electrode of the capacitor of the present invention to obtain a potential at a state in which ions are inserted in the negative electrode. For example, when an electrolytic solution including a salt that uses lithium as the cation is used, an electrical double layer capacitor and a lithium ion capacitor are achieved by changing the electrode configuration. In particular, a lithium ion capacitor is advantageous in terms of voltage and has provided one way to achieve high energy for a capacitor. Generally, since a lithium ion capacitor needs to include an electrolytic solution containing lithium, an electrolytic solution used for an ordinary electrical double layer capacitor cannot be used since lithium is not contained. Thus, as an electrolytic solution of a lithium ion capacitor, an electrolytic solution for lithium ion secondary batteries is used. However, since the electrolytic solution, whose cation is lithium, of the present invention contains lithium, the electrolytic solution is also usable not only for an electrical double layer capacitor but also for a lithium ion capacitor. For usage in a lithium ion capacitor, a process of doping an electrode with lithium ions in advance is necessary to maximize performance. For a doping step, doping may be performed by attaching metal lithium to an electrode and immersing and dissolving the metal lithium in the electrolytic solution, or, as disclosed in JP4732072 (B2), by disposing metal lithium at a central part and an outer circumferential part of a wound type lithium ion capacitor using a current collector with an opening and performing a charging operation. In addition, as disclosed in J. Electrochem. Soc. 2012, Volume 159, Issue 8, Pages A1329-A1334, lithium doping may be performed by adding in advance a transition metal oxide including excessive lithium to a positive electrode, and performing charging. Since lithium occupies a large portion of the structure of the transition metal oxide including excessive lithium, the particle shape of the transition metal oxide turn into fine powder when the transition metal oxide nearly completes releasing lithium. The transition metal oxide whose particle shape has turned into fine powder displays lithium adsorption capacity, even though the lithium adsorption amount is lower than that of activated carbon. Thus, by performing a conductive treatment on the transition metal oxide, including excessive lithium, added to the positive electrode of the lithium ion capacitor, the transition metal oxide after releasing lithium is used as adsorption sites of the positive electrode. Since the transition metal oxide including excessive lithium has a small surface area but a high density when compared to carbon used in a general electrode, the transition metal oxide may act advantageously in terms of volume energy.

The viscosity of the electrolytic solution of the present invention is high compared to the viscosity of a conventional electrolytic solution. Thus, even if a battery or a capacitor using the electrolytic solution of the present invention is damaged, leakage of the electrolytic solution is suppressed. Furthermore, a lithium ion secondary battery using the conventional electrolytic solution has displayed a significant decrease in capacity when subjected to high-rate charging and discharging cycles. One conceivable reason thereof is the inability of the electrolytic solution to supply sufficient amount of Li to a reaction interface with an electrode because of Li concentration unevenness generated in the electrolytic solution when charging and discharging are repeated rapidly, i.e., uneven distribution of Li concentration in the electrolytic solution. However, the metal concentration of the electrolytic solution of the present invention is higher than that of a conventional electrolytic solution. For example, a preferable Li concentration for the electrolytic solution of the present invention is about 2 to 5 times of the Li concentration of a general electrolytic solution. Thus, in the electrolytic solution of the present invention containing Li at a high concentration, uneven distribution of Li is thought to be reduced. As a result, decrease in capacity during high-speed charging/discharging cycles is thought to be suppressed. The reason why the decrease in capacity is suppressed is thought to be the ability to suppress uneven distribution of Li concentration in the electrolytic solution due to physical properties regarding high viscosity, high ionic conduction, and high cation transport in the electrolytic solution of the present invention. In addition, another conceivable reason for the suppression of decrease in capacity when undergoing high-rate charging and discharging cycles is, because of the electrolytic solution of the present invention having a high viscosity, improvement in liquid retaining property of the electrolytic solution at an electrode interface, resulting in suppression of a state of lacking the electrolytic solution at the electrode interface (i.e., liquid run-out state).

Regarding a viscosity $\eta$ (mPa·s) of the electrolytic solution of the present invention, a range of $10<\eta<500$ is preferable, a range of $12<\eta<400$ is more preferable, a range of $15<\eta<300$ is further preferable, a range of $18<\eta<150$ is particularly preferable, and a range of $20<\eta<140$ is most preferable.

Ions can move within an electrolytic solution easier when an ionic conductivity $\sigma$ (mS/cm) of the electrolytic solution is higher. Thus, such an electrolytic solution is an excellent electrolytic solution for batteries. The ionic conductivity $\sigma$ (mS/cm) of the electrolytic solution of the present invention preferably satisfies $1\leq\sigma$. Regarding the ionic conductivity $\sigma$ (mS/cm) of the electrolytic solution of the present invention, if a suitable range including an upper limit is to be shown, a range of $2<\sigma<200$ is preferable, a range of $3<\sigma<100$ is more preferable, a range of $4<\sigma<50$ is further preferable, and a range of $5<\sigma<35$ is particularly preferable.

In addition, the electrolytic solution of the present invention shows suitable cation transference number ("lithium transference number" when the metal in the electrolytic solution of the present invention is lithium) . The cation transference number is preferably not lower than 0.4 and more preferably not lower than 0.45.

The electrolytic solution of the present invention contains a cation of the metal salt at a high concentration. Thus, the distance between adjacent cations is extremely small within the electrolytic solution of the present invention. When a cation such as a lithium ion moves between a positive electrode and a negative electrode during charging and discharging of the secondary battery, a cation located most closely to an electrode that is a movement destination is firstly supplied to the electrode. Then, to the place where the supplied cation had been located, another cation adj acent to the cation moves. Thus, in the electrolytic solution of the present invention, a domino toppling-like phenomenon is predicted to be occurring in which adj acent cations sequentially change their positions one by one toward an electrode that is a supply target. Because of that, the distance for which a cation moves during charging and discharging is thought to be short, and movement speed of the cation is thought to be high, accordingly. Because of this reason, the secondary battery having the electrolytic solution of the present invention is thought to have a high reaction rate.

The method for producing the electrolytic solution of the present invention is described. Since the electrolytic solution of the present invention contains a large amount of the metal salt or has a high density compared to the conventional electrolytic solution, a production method of adding the organic solvent to a solid (powder) metal salt results in an aggregate, and producing an electrolytic solution in a solution state is difficult. Thus, in the method for producing the electrolytic solution of the present invention, the metal salt is preferably gradually added to the organic solvent while a solution state of the electrolytic solution is maintained during production.

Depending on the types of the metal salt and the organic solvent, the electrolytic solution of the present invention includes a liquid in which the metal salt is dissolved in the organic solvent in a manner exceeding a conventionally regarded saturation solubility. A method for producing the electrolytic solution of the present invention includes : a first dissolution step of preparing a first electrolytic solution by mixing the organic solvent having the heteroelement and the metal salt to dissolve the metal salt; a second dissolution step of preparing a second electrolytic solution in a supersaturation state by adding the metal salt to the first electrolytic solution under stirring and/or heating conditions to dissolve the metal salt; and a third dissolution step of preparing a third electrolytic solution by adding the metal salt to the second electrolytic solution under stirring and/or heating conditions to dissolve the metal salt.

Here, the "supersaturation state" described above refers to a state in which a metal salt crystal is deposited from the electrolytic solution when the stirring and/or heating conditions are discontinued or when crystal nucleation energy such as vibration is provided thereto. The second electrolytic solution is in the "supersaturation state," whereas the first electrolytic solution and the third electrolytic solution are not in the "supersaturation state."

In other words, with the method for producing the electrolytic solution of the present invention, via the first electrolytic solution encompassing a conventional metal salt concentration and being in a thermodynamically stable liquid state, and via the second electrolytic solution in a thermodynamically unstable liquid state, the third electrolytic solution, i.e., the electrolytic solution of the present invention, in a thermodynamically stable new liquid state is obtained.

Since the third electrolytic solution in the stable liquid state maintains its liquid state at an ordinary condition, in the third electrolytic solution, for example, a cluster, formed of 2 molecules of the organic solvent with respect to 1 molecule of a lithium salt and stabilized by a strong coordinate bond between these molecules, is estimated to be inhibiting crystallization of the lithium salt.

The first dissolution step is a step of preparing the first electrolytic solution by mixing the organic solvent having a heteroatom with the metal salt to dissolve the metal salt.

The first dissolution step is preferably performed under stirring and/or heating conditions. The stirring condition may be obtained by performing the first dissolution step in a stirring device accompanied with a stirrer such as a mixer, or the stirring condition may be obtained by performing the first dissolution step using a stirring bar and a device (stirrer) for moving the stirring bar. The stirring speed may be set suitably. The heating condition is preferably controlled suitably using a temperature controlled bath such as a water bath or an oil bath. Since dissolution heat is generated when dissolving the metal salt, the temperature condition is preferably strictly controlled such that the solution temperature does not reach the degradation temperature of the metal salt when a metal salt that is unstable against heat is to be used. In addition, the organic solvent may be cooled in advance before usage, or the first dissolution step may be performed under a cooling condition. For the purpose of mixing the organic solvent having a heteroatom with the metal salt, the metal salt may be added with respect to the organic solvent having a heteroatom, or the organic solvent having a heteroatom may be added with respect to the metal salt. When the generation of dissolution heat of the metal salt is taken into consideration in a case where a metal salt that is unstable against heat is used, a method of gradually adding the metal salt to the organic solvent having the heteroatom is preferable.

The first dissolution step and the second dissolution step may be performed continuously, or the first electrolytic solution obtained from the first dissolution step may be temporarily kept (left still), and the second dissolution step may be performed after a certain period of time has elapsed.

The second dissolution step is a step of preparing the second electrolytic solution in the supersaturation state by adding the metal salt to the first electrolytic solution under stirring and/or heating conditions to dissolve the metal salt.

Performing the second dissolution step under the stirring and/or heating conditions is essential for preparing the second electrolytic solution in the thermodynamically unstable supersaturation state. The stirring condition may be obtained by performing the second dissolution step in a stirring device accompanied with a stirrer such as a mixer, or the stirring condition may be obtained by performing the second dissolution step using a stirring bar and a device (stirrer) for moving the stirring bar. The heating condition is preferably controlled suitably using a temperature controlled bath such as a water bath or an oil bath. Needless to say, performing the second dissolution step using an apparatus or a system having both a stirring function and a heating function is particularly preferable. "Heating" in the method for producing the electrolytic solution of the present invention refers to warming an object to a temperature not lower than an ordinary temperature (25°C). The heating temperature is more preferably not lower than 30°C and further preferably not lower than 35°C. In addition, the heating temperature is preferably a temperature lower than the boiling point of the organic solvent.

In the second dissolution step, when the added metal salt does not dissolve sufficiently, increasing the stirring speed and/or further heating are performed. When the added metal salt does not dissolve sufficiently, dissolution of the metal salt may be promoted by adding a small amount of the organic solvent including the heteroatom to the electrolytic solution at the second dissolution step. Furthermore, the second dissolution step may be performed under a pressurized condition.

Since temporarily leaving still the second electrolytic solution obtained in the second dissolution step causes deposition of crystal of the metal salt, the second dissolution step and the third dissolution step are preferably performed continuously.

The third dissolution step is a step of preparing the third electrolytic solution by adding the metal salt to the second electrolytic solution under stirring and/or heating conditions to dissolve the metal salt. In the third dissolution step, since adding and dissolving the metal salt in the second electrolytic solution in the supersaturation state are necessary, performing the step under stirring and/or heating conditions similarly to the second dissolution step is essential. Specific stirring and/or heating conditions are similar to the conditions for the second dissolution step. Similarly to the second dissolution step, when the added metal salt does not dissolve sufficiently, increasing the stirring speed and/or further heating is performed. In addition, when the added metal salt does not dissolve sufficiently, dissolution of the metal salt may be promoted by adding a small amount of the organic solvent including the heteroatom to the electrolytic solution. Furthermore, the third dissolution step may be performed under a pressurized condition.

When the mole ratio of the organic solvent and the metal salt added throughout the first dissolution step, the second dissolution step, and the third dissolution step reaches roughly about 2:1, production of the third electrolytic solution (the electrolytic solution of the present invention) ends. Production of third electrolytic solution (the electrolytic solution of the present invention) may end at a time point when the value of d/c of the electrolytic solution at third dissolution step falls within a desired range. A metal salt crystal is not deposited from the electrolytic solution of the present invention even when the stirring and/or heating conditions are discontinued. Based on these circumstances, in the electrolytic solution of the present invention, for example, a cluster, formed of 2 molecules of the organic solvent with respect to 1 molecule of a lithium salt and stabilized by a strong coordinate bond between these molecules, is estimated to be formed.

When producing the electrolytic solution of the present invention, even without via the supersaturation state at processing temperatures of each of the dissolution steps, the electrolytic solution of the present invention is suitably produced using the specific dissolution means described in the first to third dissolution steps depending on the types of the metal salt and the organic solvent.

When vibrational spectroscopy measurement such as IR measurement or Raman measurement is performed on the first electrolytic solution at the first dissolution step, an original peak and a shift peak, both derived from the organic solvent contained in the first electrolytic solution, are observed in the obtained vibrational spectroscopy spectrum. In the vibrational spectroscopy spectrum of the first electrolytic solution, the intensity of the original peak of the organic solvent is larger than the intensity of the shift peak.

As the process advances from the first dissolution step to the third dissolution step, the relationship between the original organic-solvent peak intensity and the shift peak intensity changes, and, in a vibrational spectroscopy spectrum of the third electrolytic solution, the shift peak intensity becomes larger than the original organic-solvent peak intensity.

By utilizing this phenomenon, in the method for producing the electrolytic solution of the present invention, a vibrational spectroscopy measurement step of performing vibrational spectroscopy measurement on an electrolytic solution that is being produced is preferably included. Since the relationship between Is and Io or the level (proportion) of coordination between the metal salt and the organic solvent in the electrolytic solution is confirmed during production by including the vibrational spectroscopy measurement step in the method for producing the electrolytic solution of the present invention, whether or not an electrolytic solution that is being produced has reached the electrolytic solution which is one mode of the present invention is determined, and, when the electrolytic solution that is being produced has not reached the electrolytic solution which is one mode of the present invention, how much more of the metal salt is to be added for reaching the electrolytic solution which is one mode of the present invention is understood. As a specific vibrational spectroscopy measurement step, for example, a method in which a portion of each of the electrolytic solutions being produced is sampled to be subjected to vibrational spectroscopy measurement may be performed, or a method in which vibrational spectroscopy measurement is conducted on each of the electrolytic solutions *in situ* may be performed. Examples of the method of conducting the vibrational spectroscopy measurement on the electrolytic solution *in situ* include a method of introducing the electrolytic solution that is being produced in a transparent flow cell and conducting the vibrational spectroscopy measurement, and a method of using a transparent production container and conducting Raman measurement from outside the container. The vibrational spectroscopy measurement is preferably performed in a condition where the effect of moisture in the atmosphere can be lessened or ignored. For example, performing the IR measurement under a low humidity or zero humidity condition such as in a dry room or a glovebox is preferable, or performing the Raman measurement in a state where the electrolytic solution is kept inside a sealed container is preferable.

In the method for producing the electrolytic solution of the present invention, a density-concentration measurement step of measuring the values of density and concentration in the electrolytic solution that is being produced is preferably included. As a specific measurement step, for example, a method of sampling one portion of each of the electrolytic solutions that is being produced to be subjected to density and concentration measurements maybe performed, or a method in which measurements of density and concentration are performed on each of the electrolytic solution *in situ* may be performed.

Similarly to the vibrational spectroscopy measurement step described above, since the density and concentration in the electrolytic solution that is being produced are confirmed by including the density-concentration measurement step to the method for producing the electrolytic solution of the present invention, whether or not an electrolytic solution that is being produced has reached the electrolytic solution which is one mode of the present invention is determined, and, when the electrolytic solution that is being produced has not reached the electrolytic solution which is one mode of the present invention, how much more of the metal salt is to be added for reaching the electrolytic solution which is one mode of the present invention is understood.

Additionally, in the method for producing the electrolytic solution of the present invention, a viscosity measurement step of measuring the viscosity of the electrolytic solution that is being produced is preferably included. As a specific viscosity measurement step, for example, a method of sampling one portion of each of the electrolytic solutions that is being produced to be subjected to viscosity measurement may be performed, or a method of subjecting each of the electrolytic solution to viscosity measurement *in situ* by combining a viscosity measuring device and a production device of the electrolytic solution may be performed. Since the viscosity of the electrolytic solution that is being produced is confirmed by including the viscosity measurement step in the method for producing the electrolytic solution of the present invention, whether or not an electrolytic solution that is being produced has reached the electrolytic solution which is one mode of the present invention is determined, and, when the electrolytic solution that is being produced has not reached the electrolytic solution which is one mode of the present invention, how much more of the metal salt is to be added for reaching the electrolytic solution which is one mode of the present invention is understood.

Furthermore, in the method for producing the electrolytic solution of the present invention, an ionic conductivity measurement step of measuring ionic conductivity of the electrolytic solution that is being produced is preferably included. As a specific ionic conductivity measurement step, for example, a method of sampling one portion of each of the electrolytic solutions that is being produced to be subjected to ionic conductivity measurement may be performed, or a method of subjecting each of the electrolytic solution to ionic conductivity measurement *in situ* by combining a ionic conductivity measuring device and a production device of the electrolytic solution may be performed. Since the ionic conductivity of the electrolytic solution that is being produced is confirmed by including the ionic conductivity measurement step in the method for producing the electrolytic solution of the present invention, whether or not an electrolytic solution that is being produced has reached the electrolytic solution which is one mode of the present invention is determined, and, when the electrolytic solution that is being produced has not reached the electrolytic solution which is one mode of the present invention, how much more of the metal salt is to be added for reaching the electrolytic solution which is one mode of the present invention is understood.

To the electrolytic solution of the present invention, other than the organic solvent having the heteroelement, a solvent that has a low polarity (low permittivity) or a low donor number and that does not display particular interaction with the metal salt, i.e., a solvent that does not affect formation andmaintenance of the cluster in the electrolytic solution of the present invention, may be added. Adding such a solvent to the electrolytic solution of the present invention is expected to provide an effect of lowering the viscosity of the electrolytic solution while maintaining the formation of the cluster in the electrolytic solution of the present invention. As may apply to the case above, when d/c of the electrolytic solution obtained at the end changes, the electrolytic solution which is one mode of the present invention may be regarded as an electrolytic solution obtained during production.

Specific examples of the solvent that does not display particular interaction with the metal salt include benzene, toluene, ethylbenzene, o-xylene, m-xylene, p-xylene, 1-methylnaphthalene, hexane, heptane, and cyclohexane.

To the method for producing the electrolytic solution of the present invention, a step of adding a solvent that does not display particular interaction with the metal salt may be added. This step may be added before or after the first, second, or third dissolution step, or during the first, second, or third dissolution step.

In addition, to the electrolytic solution of the present invention, a fire-resistant solvent other than the organic solvent having the heteroelement may be added. By adding the fire-resistant solvent to the electrolytic solution of the present invention, safety of the electrolytic solution of the present invention is further enhanced. Examples of the fire-resistant solvent include halogen based solvents such as carbon tetrachloride, tetrachloroethane, and hydrofluoroether, and phosphoric acid derivatives such as trimethyl phosphate and triethyl phosphate.

To the method for producing the electrolytic solution of the present invention, a step of adding the fire-resistant solvent may be added. This step may be added before or after the first, second, or third dissolution step, or during the first, second, or third dissolution step.

Furthermore, when the electrolytic solution of the present invention is mixed with a polymer or an inorganic filler to form a mixture, the mixture enables containment of the electrolytic solution to provide a pseudo solid electrolyte. By using the pseudo solid electrolyte as an electrolytic solution of a battery, leakage of the electrolytic solution is suppressed in the battery or a capacitor.

As the polymer, a polymer used in batteries such as lithium ion secondary batteries and a general chemically cross-linked polymer are used. In particular, a polymer capable of turning into a gel by absorbing an electrolytic solution, such as polyvinylidene fluoride and polyhexafluoropropylene, and one obtained by introducing an ion conductive group to a polymer such as polyethylene oxide are suitable.

Specific examples of the polymer includepolymethyl acrylate, polymethyl methacrylate, polyethylene oxide, polypropylene oxide, polyacrylonitrile, polyvinylidene fluoride, polyethylene glycol dimethacrylate, polyethylene glycol acrylate, polyglycidol, polytetrafluoroethylene, polyhexafluoropropylene, polysiloxane, polyvinyl acetate, polyvinyl alcohol, polyacrylic acid, polymethacrylic acid, polyitaconic acid, polyfumaric acid, polycrotonic acid, polyangelic acid, polycarboxylic acid such as carboxymethyl cellulose, styrene-butadiene rubbers, nitrile-butadiene rubbers, polystyrene, polycarbonate, unsaturated polyester obtained through copolymerization of maleic anhydride and glycols, polyethylene oxide derivatives having a substituent group, and a copolymer of vinylidene fluoride and hexafluoropropylene. In addition, as the polymer, a copolymer obtained through copolymerization of two or more types of monomers forming the above described specific polymers may be selected.

Polysaccharides are also suitable as the polymer. Specific examples of the polysaccharides include glycogen, cellulose, chitin, agarose, carrageenan, heparin, hyaluronic acid, pectin, amylopectin, xyloglucan, and amylose. In addition, materials containing these polysaccharides may be used as the polymer, and examples of the materials include agar containing polysaccharides such as agarose.

As the inorganic filler, inorganic ceramics such as oxides and nitrides are preferable.

Inorganic ceramics have hydrophilic and hydrophobic functional groups on their surfaces. Thus, a conductive passage may form within the inorganic ceramics when the functional groups attract the electrolytic solution. Furthermore, the inorganic ceramics dispersed in the electrolytic solution form a network among the inorganic ceramics themselves due to the functional groups, and may serve as containment of the electrolytic solution. With such a function by the inorganic ceramics, leakage of the electrolytic solution in the battery is further suitably suppressed. In order to have the inorganic ceramics suitably exert the function described above, the inorganic ceramics having a particle shape are preferable, and those whose particle sizes are nano level are particularly preferable.

Examples of the types of the inorganic ceramics include common alumina, silica, titania, zirconia, and lithium phosphate. In addition, inorganic ceramics that have lithium conductivity themselves are preferable, and specific examples thereof include $Li_3N$, $LiI$, $LiI-Li_3N-LiOH$, $LiI-Li_2S-P_2O_5$, $LiI-Li_2S-P_2S_5$, $LiI-Li_2S-B_2S_3$, $Li_2O-B_2S_3$, $Li_2O-V_2O_3-SiO_2$, $Li_2O-B_2O_3-P_2O_3$, $Li_2O-B_2O_3-ZnO$, $Li_2O-Al_2O_3-TiO_2-SiO_2-P_2O_5$, $LiTi_2(PO_4)_3$, $Li-\beta Al_2O_3$, and $LiTaO_3$.

Glass ceramics may be used as the inorganic filler. Since glass ceramics enables containment of ionic liquids, the same effect is expected for the electrolytic solution of the present invention. Examples of the glass ceramics include compounds represented by $xLi_2S-(1-x)P_2S_5$, and those in which one portion of S in the compound is substituted with another element and those in which one portion of P in the compound is substituted with germanium.

To the method for producing the electrolytic solution of the present invention, a step of mixing the third electrolytic solution with the polymer and/or the inorganic filler may be added.

Since the electrolytic solution of the present invention described above displays excellent ionic conductivity, the electrolytic solution is suitably used as an electrolytic solution of a power storage device such as a battery and a capacitor. The electrolytic solution of the present invention is preferably used particularly as electrolytic solutions of secondary batteries, and, among those, preferably used as electrolytic solutions of lithium ion secondary batteries. In addition, the electrolytic solution of the present invention is preferably used as electrolytic solutions of electrical double layer capacitors or lithium ion capacitors.

In the following, description of the lithium ion secondary battery using the electrolytic solution of the present invention is provided.

The lithium ion secondary battery of the present invention includes a negative electrode having a negative electrode active material capable of occluding and releasing lithium ions, a positive electrode having a positive electrode active material capable of occluding and releasing lithium ions, and the electrolytic solution of the present invention in which a lithium salt is used as the metal salt.

As the negative electrode active material, a material capable of occluding and releasing lithium ions is used. Thus, the material is not particularly limited as long as the material is an elemental substance, an alloy, or a compound capable of occluding and releasing lithium ions. For example, respective elemental substances of Li, group 14 elements such as carbon, silicon, germanium, and tin, group 13 elements such as aluminum and indium, group 12 elements such as zinc and cadmium, group 15 elements such as antimony and bismuth, alkaline earth metals such as magnesium and calcium, and group 11 elements such as silver and gold may be used as the negative electrode active material. When silicon or the like is used as the negative electrode active material, a high capacity active material is obtained since a single silicon atom reacts with multiple lithium atoms. However, a fear of occurrence of a problem exists regarding a significant expansion and contraction of volume associated with occlusion and release of lithium. Thus, in order to mitigate the fear, an alloy or a compound obtained by combining an elemental substance of silicon or the like with another element such as a transition metal is suitably used as the negative electrode active material. Specific examples of the alloy or the compound include tin based materials such as Ag-Sn alloys, Cu-Sn alloys, and Co-Sn alloys, carbon based materials such as various graphites, silicon based materials such as $SiO_x$ ($0.3 \leq x \leq 1.6$) that undergoes disproportionation into the elemental substance silicon and silicon dioxide, and a complex obtained by combining a carbon based material with elemental substance silicon or a silicon based material. In addition, as the negative electrode active material, an oxide such as $Nb_2O_5$, $TiO_2$, $Li_4Ti_5O_{12}$, $WO_2$, $MoO_2$, and $Fe_2O_3$, or a nitride represented by $Li_{3-x}M_xN$ (M=Co, Ni, Cu) may be used. With regard to the negative electrode active material, one or more types described above may be used.

The negative electrode includes a current collector, and a negative electrode active material layer bound to the surface of the current collector.

The current collector refers to a fine electron conductor that is chemically inert for continuously sending a flow of current to the electrode during discharging or charging of the lithium ion secondary battery. Examples of the current collector include at least one selected from silver, copper, gold, aluminum, tungsten, cobalt, zinc, nickel, iron, platinum, tin, indium, titanium, ruthenium, tantalum, chromium, or molybdenum, and metal materials such as stainless steel. The current collector may be coated with a protective layer known in the art. One obtained by treating the surface of the current collector with a method known in the art may be used as the current collector.

The current collector takes forms such as a foil, a sheet, a film, a line shape, a bar shape, and a mesh. Thus, as the current collector, for example, metal foils such as copper foil, nickel foil, aluminum foil, and stainless steel foil are suitably used. When the current collector is in the form of a foil, a sheet, or a film, its thickness is preferably within a range of 1 μm to 100 μm.

The negative electrode active material layer includes a negative electrode active material, and, if necessary, a binding agent and/or a conductive additive.

The binding agent serves a role of fastening the active material and the conductive additive to the surface of the current collector.

Examples of the binding agent include fluorine-containing resins such as polyvinylidene fluoride, polytetrafluoroethylene, and fluororubbers, thermoplastic resins such as polypropylene and polyethylene, imide based resins such as polyimide and polyamide-imide, and alkoxysilyl group-containing resins.

In addition, a polymer having a hydrophilic group may be used as the binding agent. Examples of the hydrophilic group of the polymer having the hydrophilic group include carboxyl group, sulfo group, silanol group, amino group, hydroxyl group, and phosphoric acid based group such as phosphoric acid group. Among those described above, a polymer including a carboxyl group in its molecule, such as polyacrylic acid (PAA), carboxymethyl cellulose (CMC), and polymethacrylic acid, and a polymer including a sulfo group such as poly(p-styrenesulfonic acid) are preferable.

A polymer including a large number of carboxyl groups and/or sulfo groups, such as polyacrylic acid or a copolymer of acrylic acid and vinylsulfonic acid, is water soluble. Thus, the polymer including the hydrophilic group is preferably a water-soluble polymer, and is preferably a polymer including multiple carboxyl groups and/or sulfo groups in a single molecule thereof.

A polymer including a carboxyl group in its molecule is produced through a method of such as, for example, polymerizing an acid monomer, or imparting a carboxyl group to a polymer. Examples of the acid monomer include acid monomers having one carboxyl group in respective molecules such as acrylic acid, methacrylic acid, vinylbenzoic acid, crotonic acid, pentenoic acid, angelic acid, and tiglic acid, and acid monomers having two or more carboxyl groups in respective molecules such as itaconic acid, mesaconic acid, citraconic acid, fumaric acid, maleic acid, 2-pentenedioic acid, methylenesuccinic acid, allylmalonic acid, isopropylidene succinic acid, 2,4-hexadienedioic acid, and acetylene dicarboxylic acid. A copolymer obtained through polymerization of two or more types of monomers selected from those described above may be used.

For example, as disclosed in JP2013065493 (A), a polymer that is formed of a copolymer of acrylic acid and itaconic acid and that includes, in its molecule, an acid anhydride group formed through condensation of carboxyl groups is preferably used as the binding agent. By having a structure derived from a monomer with high acidity by having two or more carboxyl groups in a single molecule thereof, lithium ions and the like are thought to be easily trapped before a degradative reaction of the electrolytic solution occurs during charging. Furthermore, the acidity does not rise excessively since, as the acidity rises when more carboxyl groups exist compared to polyacrylic acid and polymethacrylic acid, a certain amount of the carboxyl groups change into acid anhydride groups. Thus, a secondary battery having a negative electrode formed using the binding agent has improved initial efficiency and input-output characteristics.

The blending ratio of binding agent in the negative electrode active material layer in mass ratio is preferably negative electrode active material : binding agent = 1:0.005 to 1:0.3. The reason is that when too little of the binding agent is contained, moldability of the electrode deteriorates, whereas when too much of the binding agent is contained, energy density of the electrode becomes low.

The conductive additive is added for increasing conductivity of the electrode. Thus, the conductive additive is preferably added optionally when conductivity of an electrode is insufficient, and does not have to be added when conductivity of an electrode is sufficiently superior. As the conductive additive, a fine electron conductor that is chemically inert may be used, and examples thereof include carbonaceous fine particles such as carbon black, graphites, acetylene black, Ketchen black (Registered Trademark), and vapor grown carbon fiber (VGCF), and various metal particles. With regard to the conductive additives described above, a single type by itself, or a combination of two or more types may be added to the active material layer. The blending ratio of the conductive additive in the negative electrode active material layer in mass ratio is preferably negative electrode active material : conductive additive = 1:0.01 to 1:0.5. The reason is that when too little of the conductive additive is contained, efficient conducting paths cannot be formed, whereas when too much of the conductive additive is contained, moldability of the negative electrode active material layer deteriorates and energy density of the electrode becomes low.

The positive electrode used in the lithium ion secondary battery includes a positive electrode active material capable of occluding and releasing lithium ions. The positive electrode includes a current collector and the positive electrode active material layer bound to the surface of the current collector. The positive electrode active material layer includes a positive electrode active material, and, if necessary, a binding agent and/or a conductive additive. The current collector of the positive electrode is not particularly limited as long as the current collector is a metal capable of withstanding a voltage suited for the active material that is used. Examples of the current collector include at least one selected from silver, copper, gold, aluminum, tungsten, cobalt, zinc, nickel, iron, platinum, tin, indium, titanium, ruthenium, tantalum, chromium, or molybdenum, and metal materials such as stainless steel.

When the potential of the positive electrode is set to not lower than 4 V using lithium as reference, aluminum is preferably used as the current collector.

Specifically, one formed from aluminum or an aluminum alloy is preferably used as the positive electrode current collector. Here, aluminum refers to pure aluminum, and an aluminum whose purity is equal to or higher than 99.0% is referred to as pure aluminum. An alloy obtained by adding various elements to pure aluminum is referred to as an aluminum alloy. Examples of the aluminum alloy include those that are Al-Cu based, Al-Mn based, Al-Fe based, Al-Si based, Al-Mg based, AL-Mg-Si based, and Al-Zn-Mg based.

In addition, specific examples of aluminum or the aluminum alloy include A1000 series alloys (pure aluminum based) such as JIS A1085, A1N30, etc., A3000 series alloys (Al-Mn based) such as JIS A3003, A3004, etc., and A8000 series alloys (Al-Fe based) such as JIS A8079, A8021, etc.

The current collector may be coated with a protective layer known in the art. One obtained by treating the surface of the current collector with a method known in the art may be used as the current collector.

The current collector takes forms such as a foil, a sheet, a film, a line shape, a bar shape, and a mesh. Thus, as the current collector, for example, metal foils such as copper foil, nickel foil, aluminum foil, and stainless steel foil are suitably used. When the current collector is in the form of a foil, a sheet, or a film, its thickness is preferably within a range of 1 $\mu$m to 100 $\mu$m.

The binding agent and the conductive additive of the positive electrode are similar to those described in relation to the negative electrode.

Examples of the positive electrode active material include layer compounds that are $Li_aNi_bCo_cMn_dD_eO_f$ (0.2$\leq$a$\leq$1.2; b+c+d+e=1; 0$\leq$e$\leq$1; D is at least one element selected from Li, Fe, Cr, Cu, Zn, Ca, Mg, S, Si, Na, K, Al, Zr, Ti, P, Ga, Ge, V, Mo, Nb, W, or La; 1.7$\leq$f$\leq$2.1) and $Li_2MnO_3$. Additional examples of the positive electrode active material include spinel such as $LiMn_2O_4$, a solid solution formed from a mixture of spinel and a layer compound, and polyanion based compounds such as $LiMPO_4$, $LiMVO_4$, or $Li_2MSiO_4$ (wherein, "M" is selected from at least one of Co, Ni, Mn, or Fe). Further additional examples of the positive electrode active material include tavorite based compounds represented by $LiMPO_4F$ ("M" is a transition metal) such as $LiFePO_4F$ and borate based compounds represented by $LiMBO_3$ ("M" is a transition metal) such as $LiFeBO_3$. Any metal oxide used as the positive electrode active material may have a basic composition of the composition formulae described above, and those in which a metal element included in the basic composition is substituted with another metal element may also be used. In addition, as the positive electrode active material, one that does not include a charge carrier (e.g., a lithium ion contributing to the charging and discharging) may also be used. For example, elemental substance sulfur (S), a compound that is a composite of sulfur and carbon, metal sulfides such as $TiS_2$, oxides such as $V_2O_5$ and $MnO_2$, polyaniline and anthraquinone and compounds including such aromatics in the chemical structure, conjugate based materials such as conjugate diacetic acid based organic matters, and other materials known in the art may be used. Furthermore, a compound having a stable radical such as nitroxide, nitronyl nitroxide, galvinoxyl, and phenoxyl may be used as the positive electrode active material. When a positive electrode active material not containing a charge carrier such as lithium is to be used, a charge carrier has to be added in advance to the positive electrode and/or the negative electrode using a method known in the art. The charge carrier may be added in an ionic state, or may be added in a nonionic state such as a metal. For example, when the charge carrier is lithium, a lithium foil may be pasted to, and integrated with the positive electrode and/or the negative electrode.

In order to form the active material layer on the surface of the current collector, the active material may be applied on the surface of the current collector using a conventional method known in the art such as roll coating method, die coating method, dip coating method, doctor blade method, spray coating method, and curtain coating method. Specifically, an active material layer forming composition including the active material and, if necessary, the binding agent and the conductive additive are prepared, and, after adding a suitable solvent to this composition to obtain a paste, the paste is applied on the surface of the current collector and then dried. Examples of the solvent include N-methyl-2-pyrrolidone, methanol, methyl isobutyl ketone, and water. In order to increase electrode density, compression may be performed after drying.

A separator is used in the lithium ion secondary battery, if necessary. The separator is for separating the positive electrode and the negative electrode to allow passage of lithium ions while preventing short circuiting of current due to a contact of both electrodes. Examples of the separator include porous materials, nonwoven fabrics, and woven fabrics using one or more types of materials having electrical insulation property such as: synthetic resins such as polytetrafluoroethylene, polypropylene, polyethylene, polyimide, polyamide, polyaramide (aromatic polyamide), polyester, and polyacrylonitrile; polysaccharides such as cellulose and amylose; natural polymers such as fibroin, keratin, lignin, and suberin; and ceramics. In addition, the separator may have a multilayer structure. Since the electrolytic solution of the present invention has a high polarity and a slightly high viscosity, a film easily impregnated with a polar solvent such as water is preferable. Specifically, a film in which 90% or more of gaps existing therein are impregnated with a polar solvent such as water is preferable.

An electrode assembly is formed from the positive electrode, the negative electrode, and, if necessary, the separator interposed therebetween. The electrode assembly may be a laminated type obtained by stacking the positive electrode, the separator, and the negative electrode, or a wound type obtained by winding the positive electrode, the separator, and the negative electrode. The lithium ion secondary battery is preferably formed by respectively connecting, using current collecting leads or the like, the positive electrode current collector to a positive electrode external connection terminal and the negative electrode current collector to a negative electrode external connection terminal , and adding the electrolytic solution of the present invention to the electrode assembly. In addition, the lithium ion secondary battery of the present invention preferably executes charging and discharging at a voltage range suitable for the types of active materials included in the electrodes.

The form of the lithium ion secondary battery of the present invention is not particularly limited, and various forms such as a cylindrical type, square type, a coin type, and a laminated type, etc., are used.

The lithium ion secondary battery of the present invention may be mounted on a vehicle. The vehicle may be a vehicle that uses, as all or one portion of the source of power, electrical energy obtained from the lithium ion secondary battery, and examples thereof include electric vehicles and hybrid vehicles. When the lithium ion secondary battery is to be mounted on the vehicle, a plurality of the lithium ion secondary batteries may be connected in series to form an assembled battery. Other than the vehicles, examples of instruments on which the lithium ion secondary battery may be mounted include various home appliances, office instruments, and industrial instruments driven by a battery such as personal computers and portable communication devices. In addition, the lithium ion secondary battery of the present invention maybe used as power storage devices and power smoothing devices for wind power generation, photovoltaic power generation, hydroelectric power generation, and other power systems, power supply sources for auxiliary machineries and/or power of ships, etc., power supply sources for auxiliary machineries and/or power of aircraft and spacecraft, etc., auxiliary power supply for vehicles that do not use electricity as a source of power, power supply for movable household robots, power supply for system backup, power supply for uninterruptible power supply devices, and power storage devices for temporarily storing power required for charging at charge stations for electric vehicles.

In the following, description of the electrical double layer capacitor and the lithium ion capacitor is provided.

The electrical double layer capacitor and the lithium ion capacitor of the present invention each include the electrolytic solution of the present invention, one pair of electrodes, and a separator.

The electrodes are each formed of a current collector, and a carbon-containing layer containing a carbon material and formed on the current collector.

The current collector refers to a fine electron conductor that is chemically inert for continuously sending a flow of current to the electrode during discharging or charging of electricity. The current collector may be one that is used in an ordinary electrical double layer capacitor or lithium ion capacitor, and examples thereof include at least one selected from silver, copper, gold, aluminum, tungsten, cobalt, zinc, nickel, iron, platinum, tin, indium, titanium, ruthenium, tantalum, chromium, or molybdenum, and metal materials such as stainless steel. The current collector may be coated with a protective film known in the art.

The current collector takes forms such as a foil, a sheet, a film, a line shape, a bar shape, and a mesh. Thus, as the current collector, for example, metal foils such as copper foil, nickel foil, aluminum foil, and stainless steel foil are suitably used. When the current collector is in the form of a foil, a sheet, or a film, its thickness is preferably within a range of 1 $\mu$m to 100 $\mu$m.

The carbon-containing layer includes a carbon material, and, if necessary, a binding agent (dispersant) and a conductive additive.

As the carbon material, one that is ordinarily used in an electrical double layer capacitor may be used, and examples thereof include activated carbon produced from various materials. As the activated carbon, one that has a large specific surface area is preferable. In addition, a material such as 2, 2, 6, 6-tetra methyl piperidine-N-oxyl (TEMPO) used in a redox capacitor in which a large capacity is obtained through adsorption and desorption of an anion, and a conductive polymer such as polyacene may be used.

However, since the carbon material of the carbon-containing layer of the negative electrode in the lithium ion capacitor needs to be a material capable of occluding and releasing lithium ions, a graphite-containing material such as a natural graphite or an artificial graphite is used.

The binding agent serves a role of fastening the carbon material and the conductive additive to the surface of the current collector.

The binding agent may be one that is used in an ordinary electrical double layer capacitor or lithium ion capacitor, and examples thereof include fluorine-containing resins such as polyvinylidene fluoride, polytetrafluoroethylene, and fluororubbers, thermoplastic resins such as polypropylene and polyethylene, imide based resins such as polyimide and polyamide-imide, and alkoxysilyl group-containing resins. The blending ratio of the binding agent in the carbon-containing layer in mass ratio is preferably carbon material : binding agent = 1:0.005 to 1:0.3.

The conductive additive is added for increasing conductivity of the electrode. Thus, the conductive additive is preferably added optionally when conductivity of an electrode is insufficient, and does not have to be added when conductivity of an electrode is sufficiently superior. As the conductive additive, one that is used in an ordinary electrical double layer capacitor or lithium ion capacitor may be used, and examples thereof include carbonaceous fine particles such as carbon black, a natural graphite, an artificial graphite, acetylene black, Ketchen black (Registered Trademark), and vapor grown carbon fiber (VGCF), and various metal particles. With regard to the conductive additives described above, a single type by itself, or a combination of two or more types may be added to the carbon-containing layer. The blending ratio of the conductive additive in the carbon-containing layer in mass ratio is preferably carbon material : conductive additive = 1:0.01 to 1:0.5.

The carbon-containing layer of the positive electrode of the lithium ion capacitor may include a lithium oxide, a mixture of a lithium oxide and activated carbon, or a carbon-coated lithium oxide. Examples of the lithium oxide include $Li_aMO_4$ ($5 \leq a \leq 6$, "M" is at least one transition metal), and specific examples thereof include lithium oxides having an antifluorite structure such as $Li_5FeO_4$, $Li_6MnO_4$, and $Li_6CoO_4$. These lithium oxides correspond to the "transition metal oxide including excessive lithium" described above. The transition metal oxide including excessive lithium is preferably uniformly dispersed on the carbon-containing layer of the positive electrode.

In order to form the carbon-containing layer on the surface of the current collector, the carbon material may be applied on the surface of the current collector using a conventional method known in the art such as roll coating method, die coating method, dip coating method, doctor blade method, spray coating method, and curtain coating method. Specifically, a carbon-containing layer forming composition including the carbon material, and, if necessary, the binding agent, the conductive additive, a solid solution of a lithium oxide and activated carbon, and a carbon-coated lithium oxide is prepared, and, after adding a suitable solvent to this composition to obtain a paste, the paste is applied on the surface of the current collector and then dried. Examples of the solvent include N-methyl-2-pyrrolidone, methanol, methyl isobutyl ketone, and water. Examples of a suitable method for producing the positive electrode including the carbon-containing layer that contains the transition metal oxide including excessive lithium include a method of adding a suitable solvent to a mixture obtained by mixing the transition metal oxide including excessive lithium and the carbon material such as activated carbon to obtain a paste, applying the paste on the surface of the positive electrode current collector, and then drying the paste.

A separator separates a pair of electrodes from each other for preventing short circuiting of current due to a contact of both electrodes. As the separator, one that is used in an ordinary electrical double layer capacitor or lithium ion capacitor may be used, and examples thereof include porous materials, nonwoven fabrics, woven fabrics using one or more types of electrically insulating materials such as: synthetic resins such as polytetrafluoroethylene, polypropylene, polyethylene, polyimide, polyamide, polyaramide (aromatic polyamide), polyester, and polyacrylonitrile; polysaccharides such as cellulose and amylose; natural polymers such as fibroin, keratin, lignin, and suberin; glass fiber; and ceramics. In addition, the separator may have a multilayer structure. Since the electrolytic solution of the present invention has a high polarity and a slightly high viscosity, a film easily impregnated with a polar solvent such as water is preferable. Specifically, a film in which 90% or more of gaps existing therein are impregnated with a polar solvent such as water is preferable. The thickness of the separator is preferably 5 to 100 $\mu$m, more preferably 10 to 80 $\mu$m, and particularly preferably 20 to 60 $\mu$m.

The electrical double layer capacitor or the lithium ion capacitor of the present invention may be produced in accordance with a method for producing an ordinary electrical double layer capacitor or lithium ion capacitor. Pre-doping the negative electrode of the lithium ion capacitor of the present invention with lithium ions may be performed using metal lithium in a manner similar to pre-doping a general lithium ion capacitor. When a lithium oxide or a carbon-coated lithium oxide is included in the carbon-containing layer of the positive electrode in the lithium ion capacitor of the present invention, pre-doping with lithium ions may be performed using these lithium oxides. A material obtained through desorption of lithium ions from the lithium oxide or the carbon-coated lithium oxide functions as the active material of the positive electrode.

The form of the capacitor of the present invention is not particularly limited, and various forms such as a cylindrical type, square type, a coin type, and a laminated type, etc., are used.

The capacitor of the present invention may be mounted on a vehicle. The vehicle may be a vehicle that uses, as all or one portion of the source of power, electrical energy obtained from the capacitor, and examples thereof include electric vehicles and hybrid vehicles. Other than the vehicles, examples of instruments on which the capacitor may be mounted include various home appliances, office instruments, and industrial instruments driven by a power storage device such as personal computers and portable communication devices. In addition, the capacitor of the present invention may be used as power storage devices and power smoothing devices for wind power generation, photovoltaic power generation, hydroelectric power generation, and other power systems, power supply sources for auxiliary machineries and/or power of ships, etc., power supply sources for auxiliary machineries and/or power of aircraft and spacecraft, etc., auxiliary power supply for vehicles that do not use electricity as a source of power, power supply for movable household robots, power supply for system backup, power supply for uninterruptible power supply devices, and power storage devices for temporarily storing power required for charging at charge stations for electric vehicles.

Although the embodiments of the present invention have been described above, the present invention is not limited to the embodiments. Without departing from the gist of the present invention, the present invention can be implemented in various modes with modifications and improvements, etc., that can be made by a person skilled in the art.

Examples

In the following, the present invention is described specifically by presenting Examples and Comparative Examples. The present invention is not limited to these Examples. Hereinafter, unless mentioned otherwise in particular, "part (s) " refers to part (s) by mass, and "%" refers to mass%.

(Example 1)

The electrolytic solution of the present invention was produced in the following manner.

Approximately 5 mL of 1, 2-dimethoxyethane, which is an organic solvent, was placed in a flask including a stirring bar and a thermometer. Under a stirring condition, with respect to 1,2-dimethoxyethane in the flask, $(CF_3SO_2)_2NLi$, which is a lithium salt, was gradually added so as to maintain a solution temperature equal to or lower than 40°C to be dissolved. Since dissolving of $(CF_3SO_2)_2NLi$ momentarily stagnated at a time point when approximately 13 g of $(CF_3SO_2)_2NLi$ was added, the flask was heated by placing the flask in a temperature controlled bath such that the solution temperature in the flask reaches 50 °C to dissolve $(CF_3SO_2)_2NLi$. Since dissolving of $(CF_3SO_2)_2NLi$ stagnated again at a time point when approximately 15 g of $(CF_3SO_2)_2NLi$ was added, a single drop of 1,2-dimethoxyethane was added thereto using a pipette to dissolve $(CF_3SO_2)_2NLi$. Furthermore, $(CF_3SO_2)_2NLi$ was gradually added to accomplish adding an entire predetermined amount of $(CF_3SO_2)_2NLi$. The obtained electrolytic solution was transferred to a 20-mL measuring flask, and 1,2-dimethoxyethane was added thereto until a volume of 20 mL was obtained. This was used as the electrolytic solution (third electrolytic solution) of Example 1.

An electrolytic solution whose concentration of $(CF_3SO_2)_2NLi$ is larger than that at a time point when dissolving of $(CF_3SO_2)_2NLi$ stagnated corresponds to the second electrolytic solution in a supersaturation state.

The volume of the obtained electrolytic solution was 20 mL, and 18.38 g of $(CF_3SO_2)_2NLi$ was contained in the electrolytic solution. The electrolytic solution of Example 1 contained $(CF_3SO_2)_2NLi$ at a concentration of 3.2 mol/L and had a density of 1.39g/cm$^3$. The density was measured at 20°C. In the electrolytic solution of Example 1, 1.6 molecules of 1,2-dimethoxyethane were contained with respect to 1 molecule of $(CF_3SO_2)_2NLi$.

The production was performed within a glovebox under an inert gas atmosphere.

(Example 2)

With a method similar to that in Example 1 using 16.08 g of $(CF_3SO_2)_2NLi$, an electrolytic solution of Example 2, whose concentration of $(CF_3SO_2)_2NLi$ was 2.8 mol/L and whose density was 1.36 g/cm$^3$, was produced. In the electrolytic solution of Example 2, 2.1 molecules of 1,2-dimethoxyethane were contained with respect to 1 molecule of $(CF_3SO_2)_2NLi$.

(Example 3)

Approximately 5 mL of acetonitrile, which is an organic solvent, was placed in a flask including a stirring bar. Under a stirring condition, with respect to acetonitrile in the flask, $(CF_3SO_2)_2NLi$, which is a lithium salt, was gradually added to be dissolved. A total amount of 24.11 g of $(CF_3SO_2)_2NLi$ was added to the flask, and stirring was performed overnight in the flask. The obtained electrolytic solution was transferred to a 20-mL measuring flask, and acetonitrile was added thereto until a volume of 20 mL was obtained. This was used as an electrolytic solution of Example 3. The production was performed within a glovebox under an inert gas atmosphere.

In the electrolytic solution of Example 3, the concentration of $(CF_3SO_2)_2NLi$ was 4.2 mol/L and the density was 1.52 g/cm$^3$. In the electrolytic solution of Example 3, 1.9 molecules of acetonitrile were contained with respect to 1 molecule of $(CF_3SO_2)_2NLi$.

(Example 4)

With a method similar to that in Example 3 using 19.52 g of $(CF_3SO_2)_2NLi$, an electrolytic solution of Example 4, whose concentration of $(CF_3SO_2)_2NLi$ was 3.4 mol/L, was produced. In the electrolytic solution of Example 4, 3 molecules of acetonitrile were contained with respect to 1 molecule of $(CF_3SO_2)_2NLi$.

(Example 5)

With a method similar to that in Example 3, an electrolytic solution of Example 5, whose concentration of $(CF_3SO_2)_2NLi$ was 3.0 mol/L and whose density was 1.31 g/cm$^3$, was produced.

(Example 6)

With a method similar to that in Example 3 except for using sulfolane as the organic solvent, an electrolytic solution of Example 6, whose concentration of $(CF_3SO_2)_2NLi$ was 3. 0 mol/L and whose density was 1.57 g/cm$^3$, was produced.

(Example 7)

With a method similar to that in Example 3 except for using dimethyl sulfoxide as the organic solvent, an electrolytic solution of Example 7, whose concentration of $(CF_3SO_2)_2NLi$ was 3.2 mol/L and whose density was 1.49 g/cm$^3$, was produced.

(Example 8)

With a method similar to that in Example 3 except for using 14.97 g of $(FSO_2)_2NLi$ as the lithium salt and using 1, 2-dimethoxyethane as the organic solvent, an electrolytic solution of Example 8, whose concentration of $(FSO_2)_2NLi$ was 4.0 mol/L and whose density was 1. 33 g/cm$^3$, was produced. In the electrolytic solution of Example 8, 1.5 molecules of 1,2-dimethoxyethane were contained with respect to 1 molecule of $(FSO_2)_2NLi$.

(Example 9)

With a method similar to that in Example 8, an electrolytic solution of Example 9, whose concentration of $(FSO_2)_2NLi$ was 3. 6 mol/L and whose density was 1.29 g/cm$^3$, was produced using 13.47 g of $(FSO_2)_2NLi$. In the electrolytic solution of Example 9, 1.9 molecules of 1,2-dimethoxyethane were contained with respect to 1 molecule of $(FSO_2)_2NLi$.

(Example 10)

With a method similar to that in Example 8, an electrolytic solution of Example 10, whose concentration of $(FSO_2)_2NLi$ was 2.4 mol/L and whose density was 1.18 g/cm$^3$, was produced.

(Example 11)

With a method similar to that in Example 3 except for using 20.21 g of $(FSO_2)_2NLi$ as the lithium salt, an electrolytic solution of Example 11, whose concentration of $(FSO_2)_2NLi$ was 5.4 mol/L, was produced. In the electrolytic solution of Example 11, 2 molecules of acetonitrile were contained with respect to 1 molecule of $(FSO_2)_2NLi$.

(Example 12)

With a method similar to that in Example 11, an electrolytic solution of Example 12, whose concentration of $(FSO_2)_2NLi$ was 5.0 mol/L and whose density was 1.40 g/cm$^3$, was produced using 18.71 g of $(FSO_2)_2NLi$. In the electrolytic solution of Example 12, 2.1 molecules of acetonitrile were contained with respect to 1 molecule of $(FSO_2)_2NLi$.

(Example 13)

With a method similar to that in Example 11, an electrolytic solution of Example 13, whose concentration of $(FSO_2)_2NLi$ was 4.5 mol/L and whose density was 1.34 $g/cm^3$, was produced using 16.83 g of $(FSO_2)_2NLi$. In the electrolytic solution of Example 13, 2.4 molecules of acetonitrile were contained with respect to 1 molecule of $(FSO_2)_2NLi$.

(Example 14)

With a method similar to that in Example 11, an electrolytic solution of Example 14, whose concentration of $(FSO_2)_2NLi$ was 4.2 mol/L, was produced using 15. 72 g of $(FSO_2)_2NLi$. In the electrolytic solution of Example 14, 3 molecules of acetonitrile were contained with respect to 1 molecule of $(FSO_2)_2NLi$.

(Example 15)

Approximately 5 mL of dimethyl carbonate, which is an organic solvent, was placed in a flask including a stirring bar. Under a stirring condition, with respect to dimethyl carbonate in the flask, $(FSO_2)_2NLi$, which is a lithium salt, was gradually added to be dissolved. A total amount of 14.64 g of $(FSO_2)_2NLi$ was added to the flask, and stirring was performed overnight in the flask. The obtained electrolytic solution was transferred to a 20-mL measuring flask, and dimethyl carbonate was added thereto until a volume of 20 mL was obtained. This was used as an electrolytic solution of Example 15. The production was performed within a glovebox under an inert gas atmosphere.
In the electrolytic solution of Example 15, the concentration of $(FSO_2)_2NLi$ was 3.9 mol/L and the density was 1.44 $g/cm^3$. In the electrolytic solution of Example 15, 2 molecules of dimethyl carbonate were contained with respect to 1 molecule of $(FSO_2)_2NLi$.

(Example 16)

An electrolytic solution of Example 16, whose concentration of $(FSO_2)_2NLi$ was 3. mol/L, was produced by adding dimethyl carbonate to, and thereby diluting, the electrolytic solution of Example 15. In the electrolytic solution of Example 16, 2.5 molecules of dimethyl carbonate were contained with respect to 1 molecule of $(FSO_2)_2NLi$.

(Example 17)

An electrolytic solution of Example 17, whose concentration of $(FSO_2)_2NLi$ was 2.9 mol/L, was produced by adding dimethyl carbonate to, and thereby diluting, the electrolytic solution of Example 15. In the electrolytic solution of Example 17, 3 molecules of dimethyl carbonate were contained with respect to 1 molecule of $(FSO_2)_2NLi$. The density of the electrolytic solution of Example 17 was 1.36 $g/cm^3$.

(Example 18)

An electrolytic solution of Example 18, whose concentration of $(FSO_2)_2NLi$ was 2.6 mol/L, was produced by adding dimethyl carbonate to, and thereby diluting, the electrolytic solution of Example 15. In the electrolytic solution of Example 18, 3.5 molecules of dimethyl carbonate were contained with respect to 1 molecule of $(FSO_2)_2NLi$.

(Example 19)

An electrolytic solution of Example 19, whose concentration of $(FSO_2)_2NLi$ was 2.0 mol/L, was produced by adding dimethyl carbonate to, and thereby diluting, the electrolytic solution of Example 15. In the electrolytic solution of Example 19, 5 molecules of dimethyl carbonate were contained with respect to 1 molecule of $(FSO_2)_2NLi$.

(Example 20)

Approximately 5 mL of ethyl methyl carbonate, which is an organic solvent, was placed in a flask including a stirring bar. Under a stirring condition, with respect to ethyl methyl carbonate in the flask, $(FSO_2)_2NLi$, which is a lithium salt, was gradually added to be dissolved. A total amount of 12.81 g of $(FSO_2)_2NLi$ was added to the flask, and stirring was performed overnight in the flask. The obtained electrolytic solution was transferred to a 20-mL measuring flask, and ethyl methyl carbonate was added thereto until a volume of 20 mL was obtained. This was used as an electrolytic solution of Example 20. The production was performed within a glovebox under an inert gas atmosphere.
In the electrolytic solution of Example 2 0, the concentration of $(FSO_2)_2NLi$ was 3.4 mol/L and the density was

1.35 g/cm$^3$. In the electrolytic solution of Example 20, 2 molecules of ethyl methyl carbonate were contained with respect to 1 molecule of (FSO$_2$)$_2$NLi.

(Example 21)

An electrolytic solution of Example 21, whose concentration of (FSO$_2$)$_2$NLi was 2.9 mol/L, was produced by adding ethyl methyl carbonate to, and thereby diluting, the electrolytic solution of Example20. In the electrolytic solution of Example 21, 2.5 molecules of ethyl methyl carbonate were contained with respect to 1 molecule of (FSO$_2$)$_2$NLi.

(Example 22)

An electrolytic solution of Example 22, whose concentration of (FSO$_2$)$_2$NLi was 2.2 mol/L, was produced by adding ethyl methyl carbonate to, and thereby diluting, the electrolytic solution of Example20. In the electrolytic solution of Example 22, 3.5 molecules of ethyl methyl carbonate were contained with respect to 1 molecule of (FSO$_2$)$_2$NLi.

(Example 23)

Approximately 5 mL of diethyl carbonate, which is an organic solvent, was placed in a flask including a stirring bar. Under a stirring condition, with respect to diethyl carbonate in the flask, (FSO$_2$)$_2$NLi, which is a lithium salt, was gradually added to be dissolved. A total amount of 11.37 g of (FSO$_2$)$_2$NLi was added to the flask, and stirring was performed overnight in the flask. The obtained electrolytic solution was transferred to a 20-mL measuring flask, and diethyl carbonate was added thereto until a volume of 20 mL was obtained. This was used as the electrolytic solution of Example 23. The production was performed within a glovebox under an inert gas atmosphere.
In the electrolytic solution of Example 23, the concentration of (FSO$_2$)$_2$NLi was 3.0 mol/L and the density was 1.29 g/cm$^3$. In the electrolytic solution of Example 23, 2 molecules of diethyl carbonate were contained with respect to 1 molecule of (FSO$_2$)$_2$NLi.

(Example 24)

An electrolytic solution of Example 24, whose concentration of (FSO$_2$)$_2$NLi was 2.6 mol/L, was produced by adding diethyl carbonate to, and thereby diluting, the electrolytic solution of Example 23. In the electrolytic solution of Example 24, 2.5 molecules of diethyl carbonate were contained with respect to 1 molecule of (FSO$_2$)$_2$NLi.

(Example 25)

An electrolytic solution of Example 25, whose concentration of (FSO$_2$)$_2$NLi was 2.0 mol/L, was produced by adding diethyl carbonate to, and thereby diluting, the electrolytic solution of Example 23. In the electrolytic solution of Example 25, 3.5 molecules of diethyl carbonate were contained with respect to 1 molecule of (FSO$_2$)$_2$NLi.

(Example 26)

With a method similar to that in Example 15 except for using 9.23 g of LiBF$_4$ as the lithium salt, an electrolytic solution of Example 26, whose concentration of LiBF$_4$ was 4. 9 mol/L, was produced. In the electrolytic solution of Example 26, 2 molecules of dimethyl carbonate were contained with respect to 1 molecule of LiBF$_4$. The density of the electrolytic solution of Example 26 was 1.30 g/cm$^3$.

(Example 27)

With a method similar to that in Example 15 except for using 13.37 g of LiPF$_6$ as the lithium salt, an electrolytic solution of Example 27, whose concentration of LiPF$_6$ was 4.4 mol/L, was produced. In the electrolytic solution of Example 27, 2 molecules of dimethyl carbonate were contained with respect to 1 molecule of LiPF$_6$. The density of the electrolytic solution of Example 27 was 1.46 g/cm$^3$.

(Comparative Example 1)

With a method similar to that in Example 3, an electrolytic solution of Comparative Example 1, whose concentration of (CF$_3$SO$_2$)$_2$NLi was 1. 6 mol/L and whose density was 1.18 g/cm$^3$, was produced by using 1,2-dimethoxyethane as the organic solvent.

(Comparative Example 2)

With a method similar to that in Comparative Example 1, an electrolytic solution of Comparative Example 2, whose concentration of $(CF_3SO_2)_2NLi$ was 1.2 mol/L and whose density was 1.09 $g/cm^3$, was produced.

(Comparative Example 3)

With a method similar to that in Comparative Example 1, an electrolytic solution of Comparative Example 3, whose concentration of $(CF_3SO_2)_2NLi$ was 1.0 mol/L and whose density was 1.06 $g/cm^3$, was produced. In the electrolytic solution of Comparative Example 3, 8.3 molecules of 1,2-dimethoxyethane were contained with respect to 1 molecule of $(CF_3SO_2)_2NLi$.

(Comparative Example 4)

With a method similar to that in Comparative Example 1, an electrolytic solution of Comparative Example 4, whose concentration of $(CF_3SO_2)_2NLi$ was 0.5 mol/L and whose density was 0.96 $g/cm^3$, was produced.

(Comparative Example 5)

With a method similar to that in Comparative Example 1, an electrolytic solution of Comparative Example 5, whose concentration of $(CF_3SO_2)_2NLi$ was 0.2 mol/L and whose density was 0.91 $g/cm^3$, was produced.

(Comparative Example 6)

With a method similar to that in Comparative Example 1, an electrolytic solution of Comparative Example 6, whose concentration of $(CF_3SO_2)_2NLi$ was 0.1 mol/L and whose density was 0.89 $g/cm^3$, was produced.

(Comparative Example 7)

With a method similar to that in Example 3, an electrolytic solution of Comparative Example 7, whose concentration of $(CF_3SO_2)_2NLi$ was 1.0 mol/L and whose density was 0.96 $g/cm^3$, was produced. In the electrolytic solution of Comparative Example 7, 16 molecules of acetonitrile were contained with respect to 1 molecule of $(CF_3SO_2)_2NLi$.

(Comparative Example 8)

With a method similar to that in Example 6, an electrolytic solution of Comparative Example 8, whose concentration of $(CF_3SO_2)_2NLi$ was 1.0 mol/L and whose density was 1.38 $g/cm^3$, was produced.

(Comparative Example 9)

With a method similar to that in Example 7, an electrolytic solution of Comparative Example 9, whose concentration of $(CF_3SO_2)_2NLi$ was 1.0 mol/L and whose density was 1.22 $g/cm^3$, was produced.

(Comparative Example 10)

With a method similar to that in Example 8, an electrolytic solution of Comparative Example 10, whose concentration of $(FSO_2)_2NLi$ was 2.0 mol/L and whose density was 1.13 $g/cm^3$, was produced.

(Comparative Example 11)

With a method similar to that in Example 8, an electrolytic solution of Comparative Example 11, whose concentration of $(FSO_2)_2NLi$ was 1.0 mol/L and whose density was 1.01 $g/cm^3$, was produced. In the electrolytic solution of Comparative Example 11, 8.8 molecules of 1,2-dimethoxyethane were contained with respect to 1 molecule of $(FSO_2)_2NLi$.

(Comparative Example 12)

With a method similar to that in Example 8, an electrolytic solution of Comparative Example 12, whose con-

centration of $(FSO_2)_2NLi$ was 0.5 mol/L and whose density was 0.94 g/cm$^3$, was produced.

(Comparative Example 13)

With a method similar to that in Example 8, an electrolytic solution of Comparative Example 13, whose concentration of $(FSO_2)_2NLi$ was 0.1 mol/L and whose density was 0.88 g/cm$^3$, was produced.

(Comparative Example 14)

With a method similar to that in Example 12, an electrolytic solution of Comparative Example 14, whose concentration of $(FSO_2)_2NLi$ was 1.0 mol/L and whose density was 0.91 g/cm$^3$, was produced. In the electrolytic solution of Comparative Example 14, 17 molecules of acetonitrile were contained with respect to 1 molecule of $(FSO_2)_2NLi$.

(Comparative Example 15)

An electrolytic solution of Comparative Example 15, whose concentration of $(FSO_2)_2NLi$ was 1.1 mol/L and whose density was 1.16 g/cm$^3$, was produced by adding dimethyl carbonate to, and thereby diluting, the electrolytic solution of Example 15. In the electrolytic solution of Comparative Example 15, 10 molecules of dimethyl carbonate were contained with respect to 1 molecule of $(FSO_2)_2NLi$.

(Comparative Example 16)

An electrolytic solution of Comparative Example 16, whose concentration of $(FSO_2)_2NLi$ was 1.1 mol/L and whose density was 1.12 g/cm$^3$, was produced by adding ethyl methyl carbonate to, and thereby diluting, the electrolytic solution of Example 20. In the electrolytic solution of Comparative Example 16,8 molecules of ethyl methyl carbonate were contained with respect to 1 molecule of $(FSO_2)_2NLi$.

(Comparative Example 17)

An electrolytic solution of Comparative Example 17, whose concentration of $(FSO_2)_2NLi$ was 1.1 mol/L and whose density was 1.08 g/cm$^3$, was produced by adding diethyl carbonate to, and thereby diluting, the electrolytic solution of Example 23. In the electrolytic solution of Comparative Example 17, 7 molecules of diethyl carbonate were contained with respect to 1 molecule of $(FSO_2)_2NLi$.

(Comparative Example 18)

An electrolytic solution of Comparative Example 18, whose concentration of $LiPF_6$ was 1.0 mol/L, was produced with a method similar to that in Example 3 except for using a mixed solvent of ethylene carbonate and diethyl carbonate (volume ratio 3:7) (hereinafter, sometimes referred to as "EC/DEC") as the organic solvent and using 3.04 g of $LiPF_6$ as the lithium salt.
Tables 4 and 5 show lists of electrolytic solutions of Examples and Comparative Examples. A cell in the tables is empty when the value is uncalculated.

[Table 4]

| | Lithium salt | Organic solvent | Lithium salt concentration (mol/L) | organic solvent /lithium salt (mol ratio) |
|---|---|---|---|---|
| Example 1 | LiTFSA | DME | 3.2 | 1.6 |
| Example 2 | LiTFSA | DME | 2.8 | 2.1 |
| Example 3 | LiTFSA | AN | 4.2 | 1.9 |
| Example 4 | LiTFSA | AN | 3.4 | 3 |
| Example 5 | LiTFSA | AN | 3.0 | |
| Example 6 | LiTFSA | SL | 3.0 | |
| Example 7 | LiTFSA | DMSO | 3.2 | |
| Example 8 | LiFSA | DME | 4.0 | 1.5 |

30

(continued)

|  | Lithium salt | Organic solvent | Lithium salt concentration (mol/L) | organic solvent /lithium salt (mol ratio) |
|---|---|---|---|---|
| Example 9 | LiFSA | DME | 3.6 | 1.9 |
| Example 10 | LiFSA | DME | 2.4 | |
| Example 11 | LiFSA | AN | 5.4 | 2 |
| Example 12 | LiFSA | AN | 5.0 | 2.1 |
| Example 13 | LiFSA | AN | 4.5 | 2.4 |
| Example 14 | LiFSA | AN | 4.2 | 3 |
| Example 15 | LiFSA | DMC | 3.9 | 2 |
| Example 16 | LiFSA | DMC | 3.4 | 2.5 |
| Example 17 | LiFSA | DMC | 2.9 | 3 |
| Example 18 | LiFSA | DMC | 2.6 | 3.5 |
| Example 19 | LiFSA | DMC | 2.0 | 5 |
| Example 20 | LiFSA | EMC | 3.4 | 2 |
| Example 21 | LiFSA | EMC | 2.9 | 2.5 |
| Example 22 | LiFSA | EMC | 2.2 | 3.5 |
| Example 23 | LiFSA | DEC | 3.0 | 2 |
| Example 24 | LiFSA | DEC | 2.6 | 2.5 |
| Example 25 | LiFSA | DEC | 2.0 | 3.5 |
| Example 26 | LiBF$_4$ | DMC | 4.9 | 2 |
| Example 27 | LiPF$_6$ | DMC | 4.4 | 2 |

LiTFSA: $(CF_3SO_2)_2NLi$, LiFSA: $(FSO_2)_2NLi$,
DME: 1,2-dimethoxyethane, AN: acetonitrile,
SL: sulfolane, DMSO: dimethyl sulfoxide,
DMC: dimethyl carbonate, EMC: ethyl methyl carbonate,
DEC: diethyl carbonate

[Table 5]

|  | Lithium salt | Organic solvent | Lithium salt concentration (mol/L) | Organic solvent / lithium salt (mol ratio) |
|---|---|---|---|---|
| Comparative Example 1 | LiTFSA | DME | 1.6 | |
| Comparative Example 2 | LiTFSA | DME | 1.2 | |
| Comparative Example 3 | LiTFSA | DME | 1.0 | 8.3 |
| Comparative Example 4 | LiTFSA | DME | 0.5 | |
| Comparative Example 5 | LiTFSA | DME | 0.2 | |
| Comparative Example 6 | LiTFSA | DME | 0.1 | |

(continued)

|  | Lithium salt | Organic solvent | Lithium salt concentration (mol/L) | Organic solvent / lithium salt (mol ratio) |
|---|---|---|---|---|
| Comparative Example 7 | LiTFSA | AN | 1.0 | 16 |
| Comparative Example 8 | LiTFSA | SL | 1.0 | |
| Comparative Example 9 | LiTFSA | DMSO | 1.0 | |
| Comparative Example 10 | LiFSA | DME | 2.0 | |
| Comparative Example 11 | LiFSA | DME | 1.0 | 8.8 |
| Comparative Example 12 | LiFSA | DME | 0.5 | |
| Comparative Example 13 | LiFSA | DME | 0.1 | |
| Comparative Example 14 | LiFSA | AN | 1.0 | 17 |
| Comparative Example 15 | LiFSA | DMC | 1.1 | 10 |
| Comparative Example 16 | LiFSA | EMC | 1.1 | 8 |
| Comparative Example 17 | LiFSA | DEC | 1.1 | 7 |
| Comparative Example 18 | $LiPF_6$ | EC/DEC | 1.0 | |
| EC/DEC: Mixed solvent of ethylene carbonate and diethyl carbonate (volume ratio 3:7) | | | | |

Tables 6 and 7 show lists of densities and d/c of the electrolytic solutions of Examples and Comparative Examples. A cell in the tables is empty when the value is unmeasured or uncalculated.

[Table 6]

|  | Lithium salt | Organic solvent | Lithium salt concentration (mol/L) | Density d(g/cm$^3$) | d/c |
|---|---|---|---|---|---|
| Example 1 | LiTFSA | DME | 3.2 | 1.39 | 0.43 |
| Example 2 | LiTFSA | DME | 2.8 | 1.36 | 0.48 |
| Example 3 | LiTFSA | AN | 4.2 | 1.52 | 0.36 |
| Example 4 | LiTFSA | AN | 3.4 | | |
| Example 5 | LiTFSA | AN | 3.0 | 1.31 | 0.44 |
| Example 6 | LiTFSA | SL | 3.0 | 1.57 | 0.52 |
| Example 7 | LiTFSA | DMSO | 3.2 | 1.49 | 0.46 |
| Example 8 | LiFSA | DME | 4.0 | 1.33 | 0.33 |
| Example 9 | LiFSA | DME | 3.6 | 1.29 | 0.36 |
| Example 10 | LiFSA | DME | 2.4 | 1.18 | 0.49 |
| Example 11 | LiFSA | AN | 5.4 | | |

(continued)

| | Lithium salt | Organic solvent | Lithium salt concentration (mol/L) | Density d(g/cm$^3$) | d/c |
|---|---|---|---|---|---|
| Example 12 | LiFSA | AN | 5.0 | 1.40 | 0.28 |
| Example 13 | LiFSA | AN | 4.5 | 1.34 | 0.30 |
| Example 14 | LiFSA | AN | 4.2 | | |
| Example 15 | LiFSA | DMC | 3.9 | 1.44 | 0.37 |
| Example 16 | LiFSA | DMC | 3.4 | | |
| Example 17 | LiFSA | DMC | 2.9 | 1.36 | 0.47 |
| Example 18 | LiFSA | DMC | 2.6 | | |
| Example 19 | LiFSA | DMC | 2.0 | | |
| Example 20 | LiFSA | EMC | 3.4 | 1.35 | 0.39 |
| Example 21 | LiFSA | EMC | 2.9 | | |
| Example 22 | LiFSA | EMC | 2.2 | | |
| Example 23 | LiFSA | DEC | 3.0 | 1.29 | 0.42 |
| Example 24 | LiFSA | DEC | 2.6 | | |
| Example 25 | LiFSA | DEC | 2.0 | | |
| Example 26 | LiBF$_4$ | DMC | 4.9 | 1.30 | 0.27 |
| Example 27 | LiPF$_6$ | DMC | 4.4 | 1.46 | 0.33 |

[Table 7]

| | Lithium salt | Organic solvent | Lithium salt concentration (mol/L) | Density d (g/cm$^3$ ) | d/c |
|---|---|---|---|---|---|
| Comparative Example 1 | LiTFSA | DME | 1.6 | 1.18 | 0.73 |
| Comparative Example 2 | LiTFSA | DME | 1.2 | 1.09 | 0.91 |
| Comparative Example 3 | LiTFSA | DME | 1.0 | 1.06 | 1.06 |
| Comparative Example 4 | LiTFSA | DME | 0.5 | 0.96 | 1.93 |
| Comparative Example 5 | LiTFSA | DME | 0.2 | 0.91 | 4.53 |
| Comparative Example 6 | LiTFSA | DME | 0.1 | 0.89 | 8.93 |
| Comparative Example 7 | LiTFSA | AN | 1.0 | 0.96 | 0.96 |
| Comparative Example 8 | LiTFSA | SL | 1.0 | 1.38 | 1.38 |
| Comparative Example 9 | LiTFSA | DMSO | 1.0 | 1.22 | 1.22 |
| Comparative Example 10 | LiFSA | DME | 2.0 | 1.13 | 0.57 |
| Comparative Example 11 | LiFSA | DME | 1.0 | 1.01 | 1.01 |
| Comparative Example 12 | LiFSA | DME | 0.5 | 0.94 | 1.88 |
| Comparative Example 13 | LiFSA | DME | 0.1 | 0.88 | 8.81 |
| Comparative Example 14 | LiFSA | AN | 1.0 | 0.91 | 0.91 |

(continued)

|  | Lithium salt | Organic solvent | Lithium salt concentration (mol/L) | Density d (g/cm$^3$ ) | d/c |
|---|---|---|---|---|---|
| Comparative Example 15 | LiFSA | DMC | 1.1 | 1.16 | 1.09 |
| Comparative Example 16 | LiFSA | EMC | 1.1 | 1.12 | 1.02 |
| Comparative Example 17 | LiFSA | DEC | 1.1 | 1.08 | 1.01 |
| Comparative Example 18 | LiPF$_6$ | EC/DEC | 1.0 |  |  |

(Evaluation Example 1: IR Measurement)

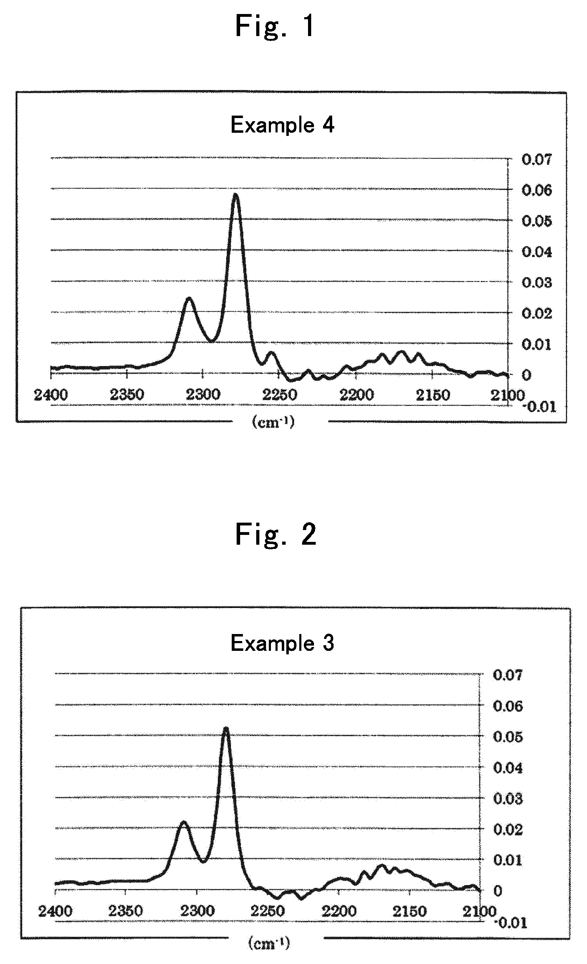

IR measurement was performed using the following conditions on the electrolytic solutions of Examples 3, 4, 11, 13, and 14, Comparative Examples 7 and 14, acetonitrile, $(CF_3SO_2)_2NLi$, and $(FSO_2)_2NLi$. An IR spectrum in a range of 2100 to 2400 cm$^{-1}$ is shown in each of the Figs. 1 to 10. In each figure, the horizontal axis represents wave number (cm$^{-1}$) and the vertical axis represents absorbance (reflective absorbance).

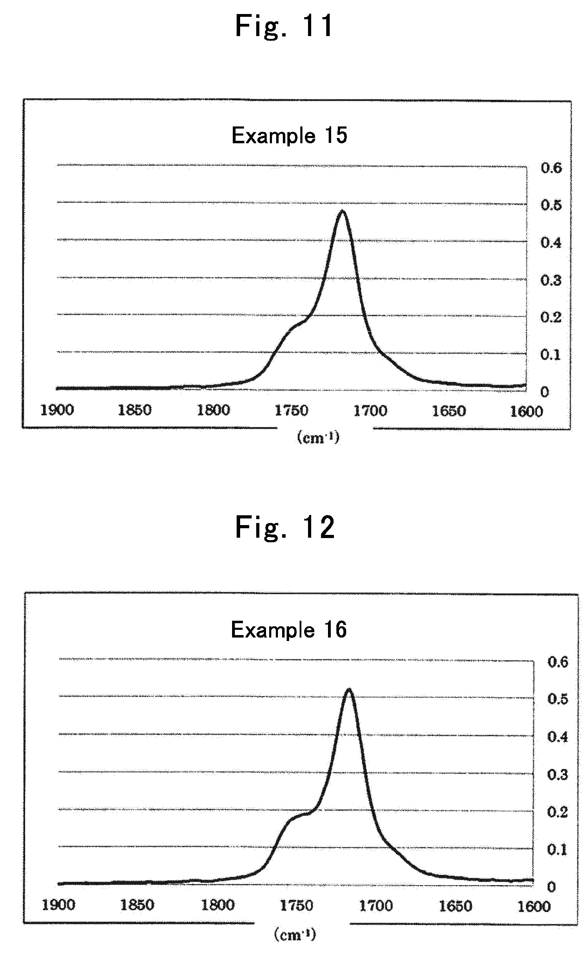

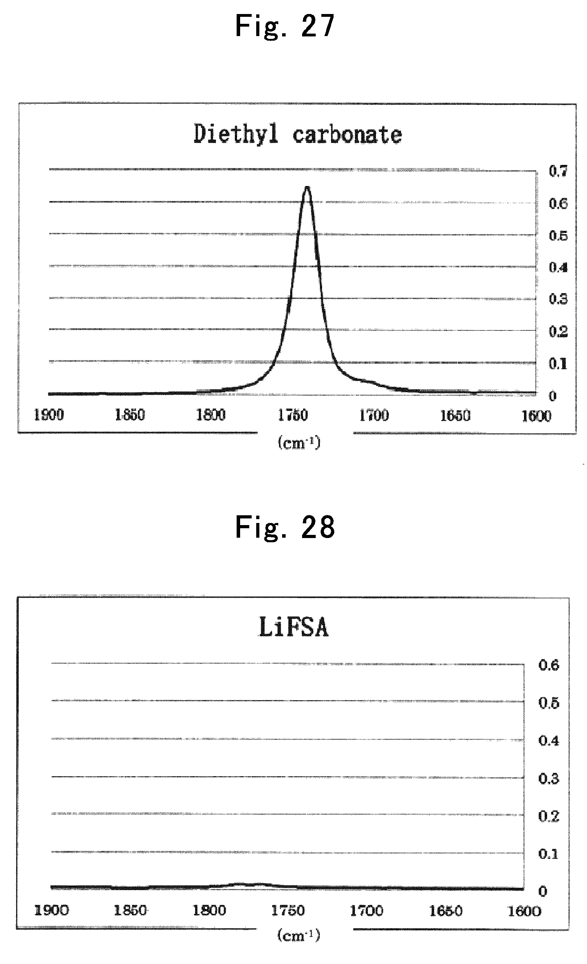

IR measurement was performed using the following conditions on the electrolytic solutions of Examples 15 to 25, Comparative Examples 15 to 17, dimethyl carbonate, ethyl methyl carbonate, and diethyl carbonate. An IR spectrum in a range of 1900 to 1600 cm$^{-1}$ is shown in each of Figs. 11 to 27. In addition, an IR spectrum of $(FSO_2)_2NLi$ in a range of 1900 to 1600 cm$^{-1}$ is shown in Fig. 28. In each figure, the horizontal axis represents wave number (cm$^{-1}$) and the vertical axis represents absorbance (reflective absorbance) .

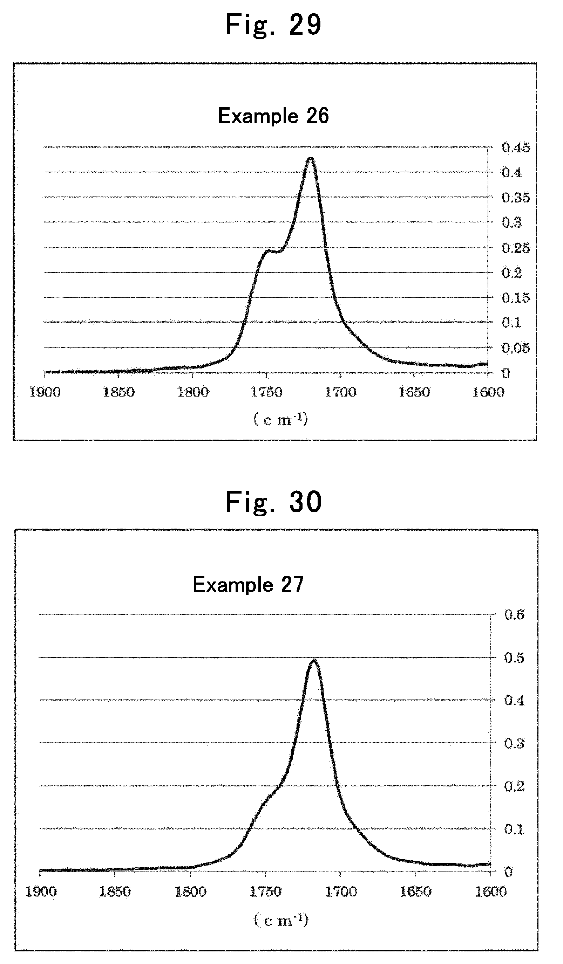

IR measurement was performed using the following conditions on electrolytic solutions of Examples 26 and 27. IR spectra thereof in a range of 1900 to 1600 cm$^{-1}$ are shown in Figs. 29 and 30. In each figure, the horizontal axis represents wave number (cm$^{-1}$) and the vertical axis represents absorbance (reflective absorbance).

IR Measuring Conditions

Device: FT-IR (manufactured by Bruker Optics K.K.)
Measuring condition: ATR method (diamond was used)
Measurement atmosphere: Inert gas atmosphere

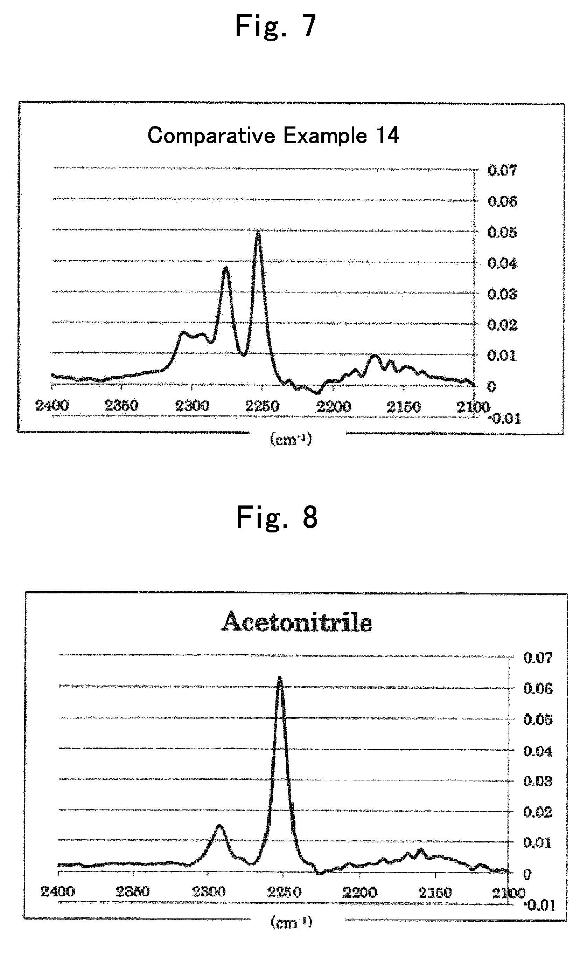

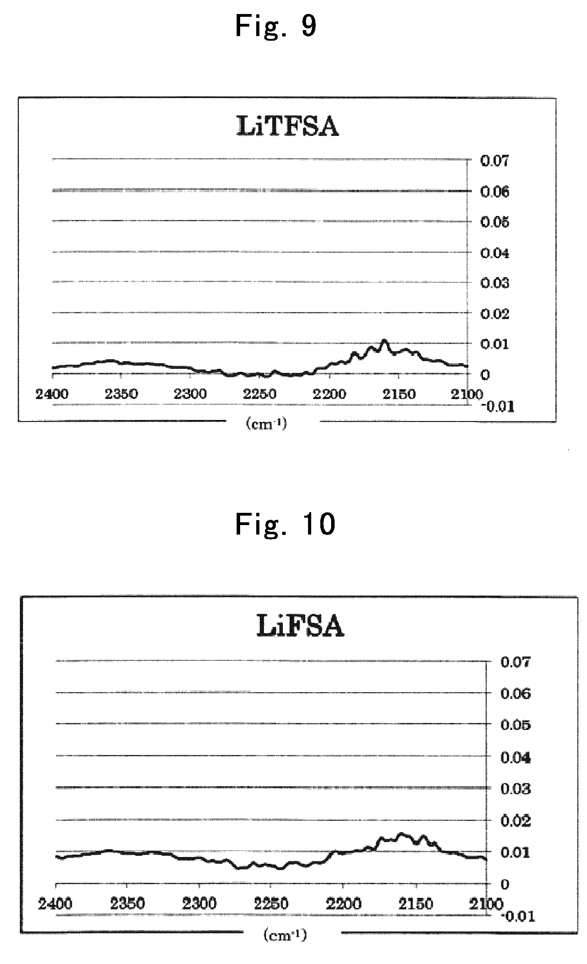

At around 2250 cm$^{-1}$ in the IR spectrum of acetonitrile shown in Fig. 8, a characteristic peak derived from stretching vibration of a triple bond between C and N of acetonitrile was observed. No particular peaks were observed at around 2250 cm$^{-1}$ in the IR spectrum of $(CF_3SO_2)_2NLi$ shown in Fig. 9 and the IR spectrum of $(FSO_2)_2NLi$ shown in Fig. 10.

In the IR spectrum of the electrolytic solution of Example 4 shown in Fig. 1, a characteristic peak derived from stretching vibration of a triple bondbetween C and N of acetonitrile was slightly observed (Io=0.00699) at around 2250 cm$^{-1}$. Additionally in the IR spectrum in Fig. 1, a characteristic peak derived from stretching vibration of a triple bond between C and N of acetonitrile was observed at a peak intensity of Is=0.05828 at around 2280 cm$^{-1}$ shifted toward the high wave number side from around 2250 cm$^{-1}$. The relationship between peak intensities of Is and Io was Is>Io and Is=8×Io.

In the IR spectrum of the electrolytic solution of Example 3 shown in Fig. 2, a peak derived from acetonitrile was not observed at around 2250 cm$^{-1}$, whereas a characteristic peak derived from stretching vibration of a triple bond between C and N of acetonitrile was observed at a peak intensity of Is=0.05234 at around 2280 cm$^{-1}$ shifted toward the high wave number side from around 2250 cm$^{-1}$. The relationship between peak intensities of Is and Io was Is>Io.

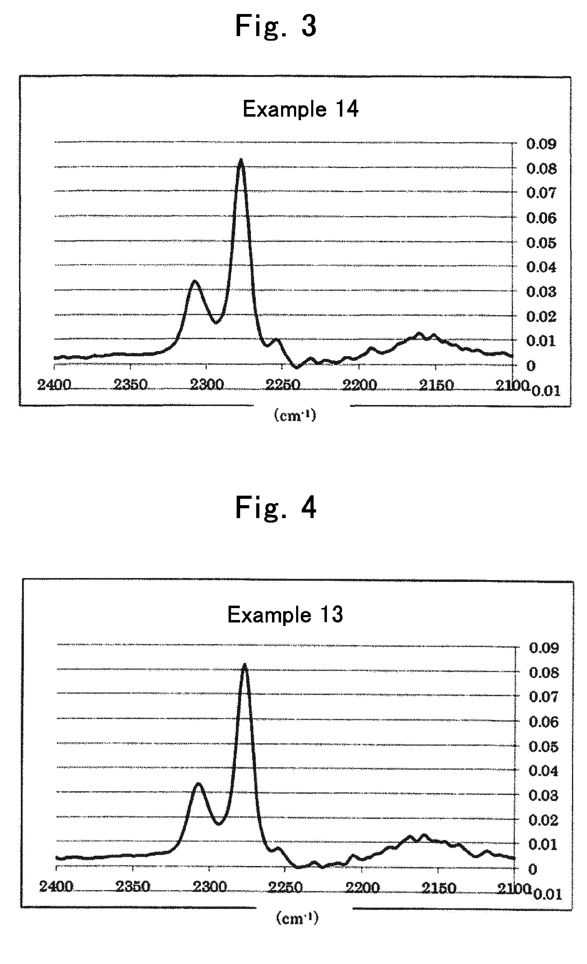

In the IR spectrum of the electrolytic solution of Example 14 shown in Fig. 3, a characteristic peak derived from stretching vibration of a triple bondbetween C and N of acetonitrile was slightly observed (Io=0.00997) at around 2250 cm$^{-1}$. Additionally in the IR spectrum in Fig. 3, a characteristic peak derived from stretching vibration of a triple bondbetween C and N of acetonitrile was observed at a peak intensity of Is=0.08288 at around 2280 cm$^{-1}$ shifted toward the high wave number side from around 2250 cm$^{-1}$. The relationship between peak intensities of Is and Io was Is>Io and Is=8×Io.

A peak having a similar intensity and similar wave number to those in the IR chart of Fig. 3 was also observed in the IR spectrum of the electrolytic solution of Example 13 shown in Fig. 4. The relationship between peak intensities of Is and Io was Is>Io and Is=11×Io.

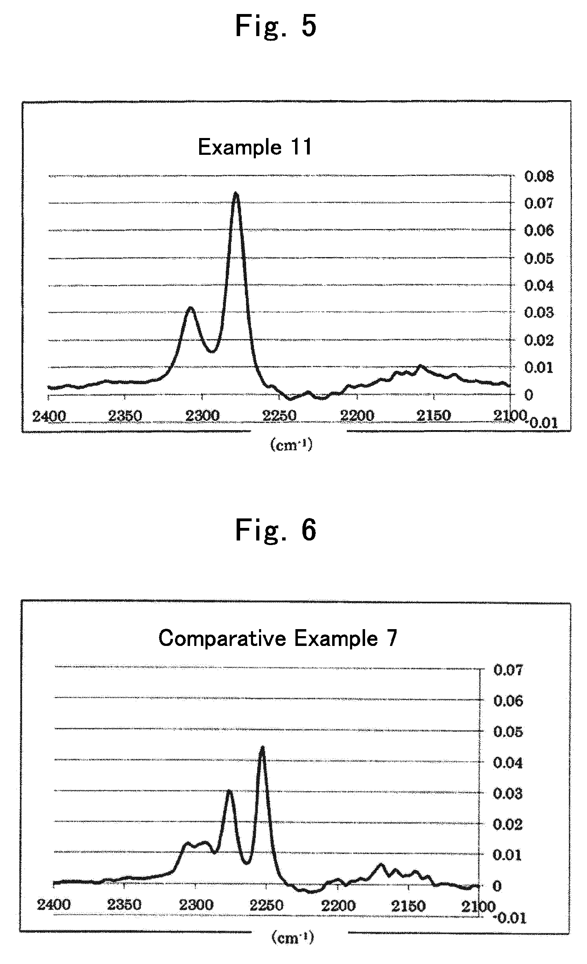

In the IR spectrum of the electrolytic solution of Example 11 shown in Fig. 5, a peak derived from acetonitrile was not observed at around 2250 cm$^{-1}$, whereas a characteristic peak derived from stretching vibration of a triple bond between C and N of acetonitrile was observed at a peak intensity of Is=0.07350 at around 2280 cm$^{-1}$ shifted toward the high wave number side from around 2250 cm$^{-1}$. The relationship between peak intensities of Is and Io was Is>Io.

In the IR spectrum of the electrolytic solution of Comparative Example 7 shown in Fig. 6, a characteristic peak derived from stretching vibration of a triple bond between C and N of acetonitrile was observed at a peak intensity of Io=0.04441 at around 2250 cm$^{-1}$ in a manner similar to Fig. 8. Additionally in the IR spectrum in Fig. 6, a characteristic peak derived from stretching vibration of a triple bond between C and N of acetonitrile was observed at a peak intensity of Is=0.03018 at around 2280 cm$^{-1}$ shifted toward the high wave number side from around 2250 cm$^{-1}$. The relationship between peak intensities of Is and Io was Is<Io.

In the IR spectrum of the electrolytic solution of Comparative Example 14 shown in Fig. 7, a characteristic peak derived from stretching vibration of a triple bond between C and N of acetonitrile was observed at a peak intensity of Io=0.04975 at around 2250 cm$^{-1}$ in a manner similar to Fig. 8. Additionally in the IR spectrum in Fig. 7, a characteristic peak derived from stretching vibration of a triple bond between C and N of acetonitrile was observed at a peak intensity of Is=0.03804 at around 2280 cm$^{-1}$ shifted toward the high wave number side from around 2250 cm$^{-1}$. The relationship between peak intensities of Is and Io was Is<Io.

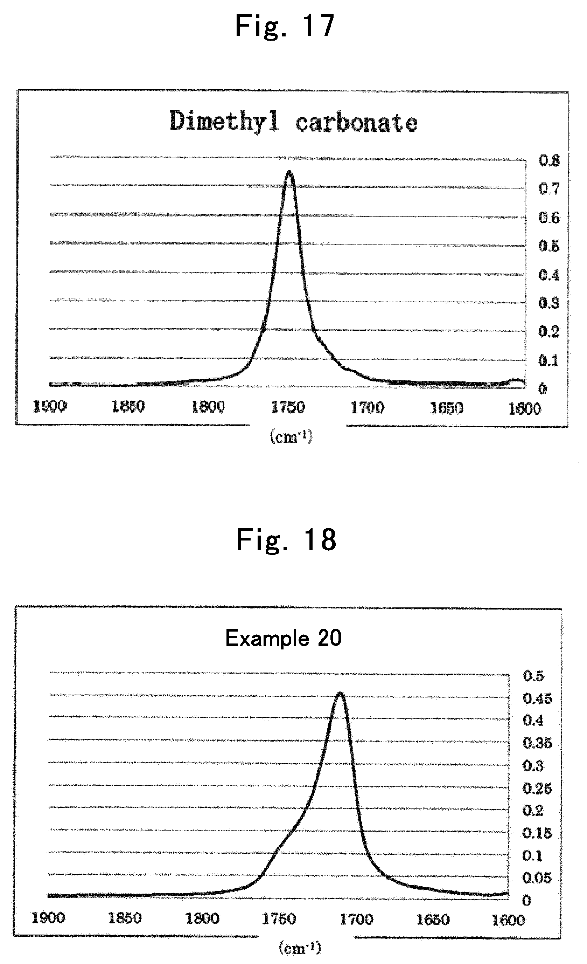

At around 1750 cm$^{-1}$ in the IR spectrum of dimethyl carbonate shown in Fig. 17, a characteristic peak derived from stretching vibration of a double bond between C and O of dimethyl carbonate was observed. No particular peaks were observed at around 1750 cm$^{-1}$ in the IR spectrum of $(FSO_2)_2NLi$ shown in Fig. 28.

In the IR spectrum of the electrolytic solution of Example 15 shown in Fig. 11, a characteristic peak derived from stretching vibration of a double bond between C and O of dimethyl carbonate was slightly (Io=0.16628) observed at around 1750 cm$^{-1}$. Additionally in the IR spectrum in Fig. 11, a characteristic peak derived from stretching vibration of a double bond between C and O of dimethyl carbonate was observed at a peak intensity of Is=0.48032 at around 1717 cm$^{-1}$ shifted toward the low wave number side from around 1750 cm$^{-1}$. The relationship between peak intensities of Is and Io was Is>Io and Is=2.89×Io.

In the IR spectrum of the electrolytic solution of Example 16 shown in Fig. 12, a characteristic peak derived from stretching vibration of a double bond between C and O of dimethyl carbonate was slightly (Io=0.18129) observed at around 1750 cm$^{-1}$. Additionally in the IR spectrum in Fig. 12, a characteristic peak derived from stretching vibration of a double bond between C and O of dimethyl carbonate was observed at a peak intensity of Is=0.52005 at around 1717 cm$^{-1}$ shifted toward the low wave number side from around 1750 cm$^{-1}$. The relationship between peak intensities of Is and Io was Is>Io and Is=2.87×Io.

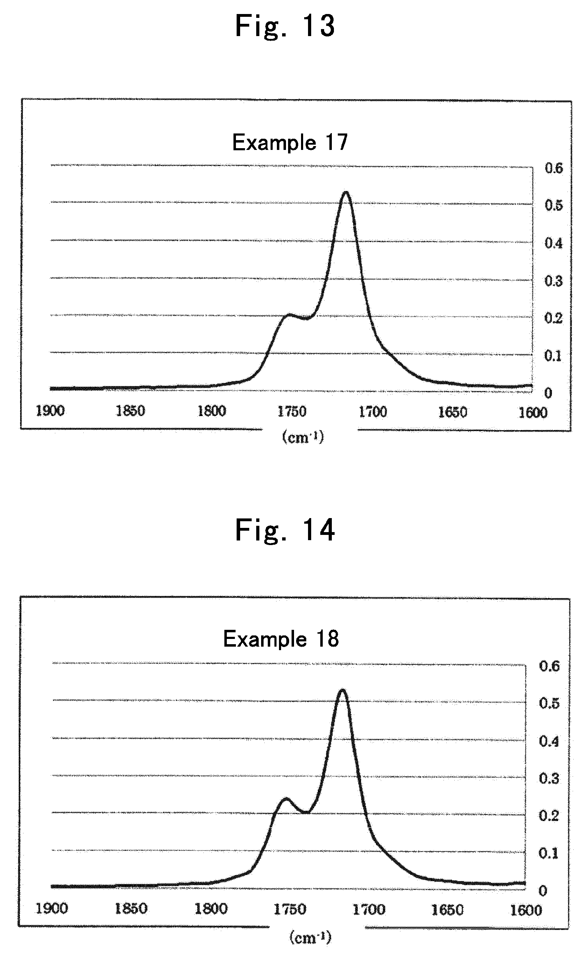

In the IR spectrum of the electrolytic solution of Example 17 shown in Fig. 13, a characteristic peak derived from stretching vibration of a double bond between C and O of dimethyl carbonate was slightly (Io=0.20293) observed at around 1750 cm$^{-1}$. Additionally in the IR spectrum in Fig. 13, a characteristic peak derived from stretching vibration of a double bond between C and O of dimethyl carbonate was observed at a peak intensity of Is=0.53091 at around 1717 cm$^{-1}$ shifted toward the low wave number side from around 1750 cm$^{-1}$. The relationship between peak intensities of Is and Io was Is>Io and Is=2.62×Io.

In the IR spectrum of the electrolytic solution of Example 18 shown in Fig. 14, a characteristic peak derived from stretching vibration of a double bond between C and O of dimethyl carbonate was slightly (Io=0.23891) observed at around 1750 cm$^{-1}$. Additionally in the IR spectrum in Fig. 14, a characteristic peak derived from stretching vibration of a double bond between C and O of dimethyl carbonate was observed at a peak intensity of Is=0.53098 at around 1717 cm$^{-1}$ shifted toward the low wave number side from around 1750 cm$^{-1}$. The relationship between peak intensities of Is and Io was Is>Io and Is=2.22×Io.

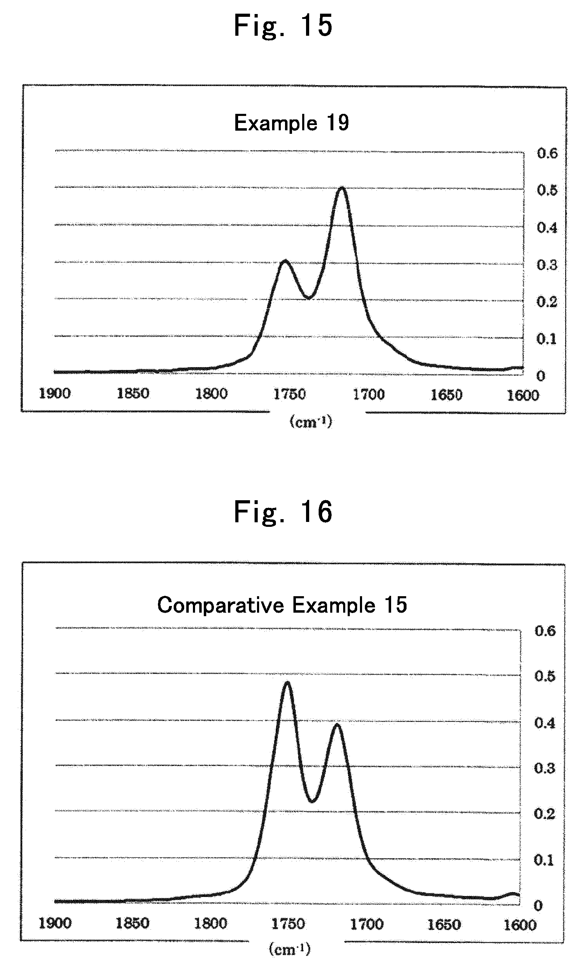

In the IR spectrum of the electrolytic solution of Example 19 shown in Fig. 15, a characteristic peak derived from stretching vibration of a double bond between C and O of dimethyl carbonate was slightly (Io=0.30514) observed at around 1750 cm$^{-1}$. Additionally in the IR spectrum in Fig. 15, a characteristic peak derived from stretching vibration of a double bond between C and O of dimethyl carbonate was observed at a peak intensity of Is=0.50223 at around 1717 cm$^{-1}$ shifted toward the low wave number side from around 1750 cm$^{-1}$. The relationship between peak intensities of Is and Io was Is>Io and Is=1.65×Io.

In the IR spectrum of the electrolytic solution of Comparative Example 15 shown in Fig. 16, a characteristic peak derived from stretching vibration of a double bond between C and O of dimethyl carbonate was observed (Io=0.48204) at around 1750 cm$^{-1}$. Additionally in the IR spectrum in Fig. 16, a characteristic peak derived from stretching vibration of a double bond between C and O of dimethyl carbonate was observed at a peak intensity of Is=0.39244 at around 1717 cm$^{-1}$ shifted toward the low wave number side from around 1750 cm$^{-1}$. The relationship between peak intensities of Is and Io was Is<Io.

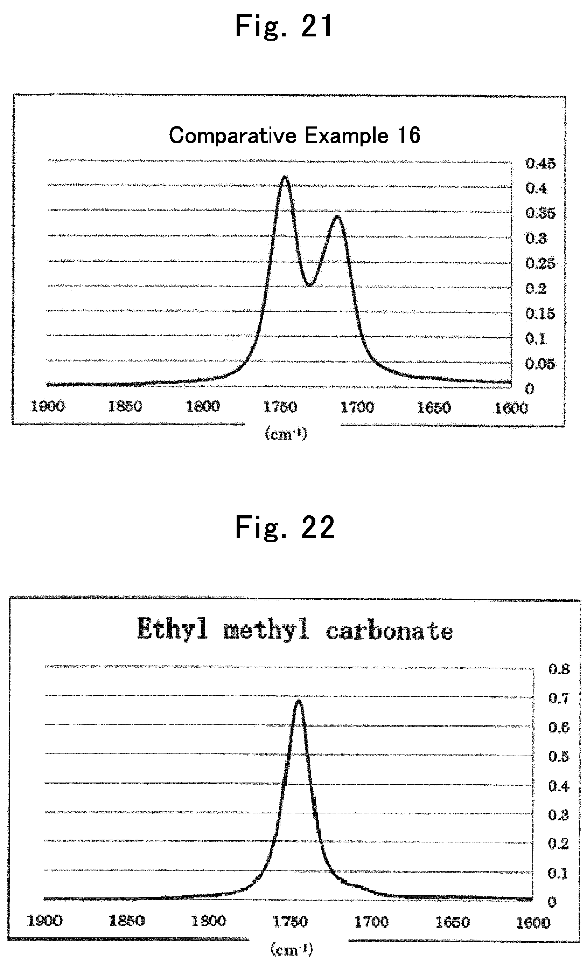

At around 1745 cm$^{-1}$ in the IR spectrum of ethyl methyl carbonate shown in Fig. 22, a characteristic peak derived from stretching vibration of a double bond between C and O of ethyl methyl carbonate was observed.

In the IR spectrum of the electrolytic solution of Example 20 shown in Fig. 18, a characteristic peak derived from stretching vibration of a double bond between C and O of ethyl methyl carbonate was slightly (Io=0.13582) observed at around 1745 cm$^{-1}$. Additionally in the IR spectrum in Fig. 18, a characteristic peak derived from stretching vibration of a double bond between C and O of ethyl methyl carbonate was observed at a peak intensity of Is=0.45888 at around 1711 cm$^{-1}$ shifted toward the low wave number side from around 1745 cm$^{-1}$. The relationship between peak intensities of Is and Io was Is>Io and Is=3.38×Io.

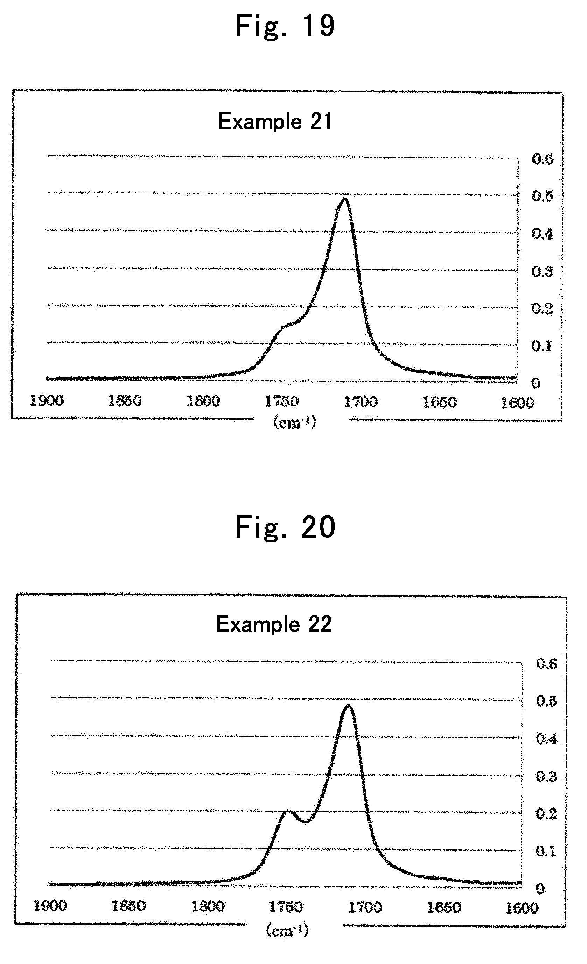

In the IR spectrum of the electrolytic solution of Example 21 shown in Fig. 19, a characteristic peak derived from stretching vibration of a double bond between C and O of ethyl methyl carbonate was slightly (Io=0.15151) observed at around 1745 cm$^{-1}$. Additionally in the IR spectrum in Fig. 19, a characteristic peak derived from stretching vibration of a double bond between C and O of ethyl methyl carbonate was observed at a peak intensity of Is=0.48779 at around 1711 cm$^{-1}$ shifted toward the low wave number side from around 1745 cm$^{-1}$. The relationship between peak intensities of Is and Io was Is>Io and Is=3.22×Io.

In the IR spectrum of the electrolytic solution of Example 22 shown in Fig. 20, a characteristic peak derived from stretching vibration of a double bond between C and O of ethyl methyl carbonate was slightly (Io=0.20191) observed at around 1745 cm$^{-1}$. Additionally in the IR spectrum in Fig. 20, a characteristic peak derived from stretching vibration of a double bond between C and O of ethyl methyl carbonate was observed at a peak intensity of Is=0.48407 at around 1711 cm$^{-1}$ shifted toward the low wave number side from around 1745 cm$^{-1}$. The relationship between peak intensities of Is and Io was Is>Io and Is=2.40×Io.

In the IR spectrum of the electrolytic solution of Comparative Example 16 shown in Fig. 21, a characteristic peak derived from stretching vibration of a double bond between C and O of ethyl methyl carbonate was observed (Io=0.41907) at around 1745 cm$^{-1}$. Additionally in the IR spectrum in Fig. 21, a characteristic peak derived from stretching vibration of a double bond between C and O of ethyl methyl carbonate was observed at a peak intensity of Is=0.33929 at around 1711 cm$^{-1}$ shifted toward the low wave number side from around 1745 cm$^{-1}$. The relationship between peak intensities of Is and Io was Is<Io.

At around 1742 cm$^{-1}$ in the IR spectrum of diethyl carbonate shown in Fig. 27, a characteristic peak derived from stretching vibration of a double bond between C and O of diethyl carbonate was observed.

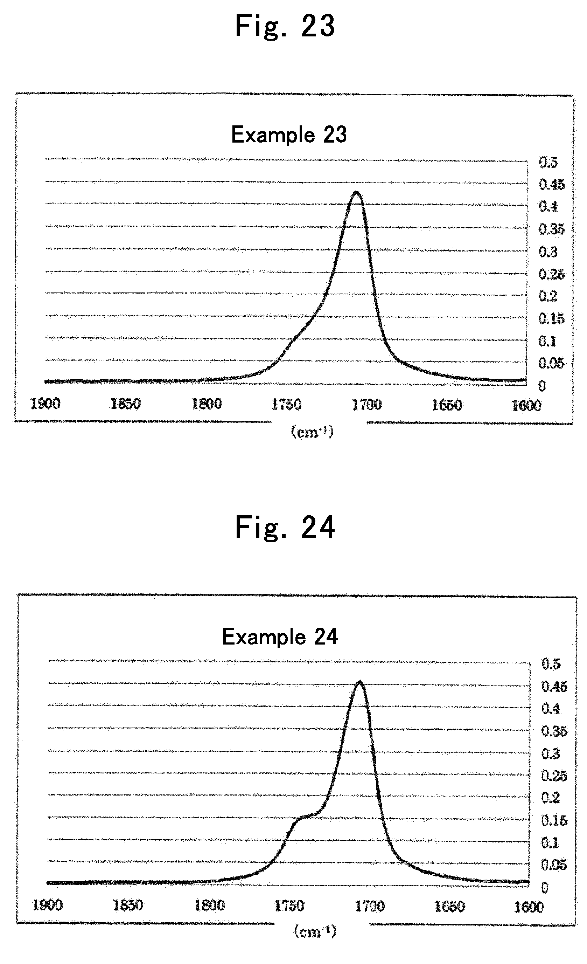

In the IR spectrum of the electrolytic solution of Example 23 shown in Fig. 23, a characteristic peak derived from stretching vibration of a double bond between C and O of diethyl carbonate was slightly (Io=0.11202) observed at around 1742 cm$^{-1}$. Additionally in the IR spectrum in Fig. 23, a characteristic peak derived from stretching vibration of a double bond between C and O of diethyl carbonate was observed at a peak intensity of Is=0.42925 at around 1706 cm$^{-1}$ shifted toward the low wave number side from around 1742 cm$^{-1}$. The relationship between peak intensities of Is and Io was Is>Io and Is=3.83×Io.

In the IR spectrum of the electrolytic solution of Example 24 shown in Fig. 24, a characteristic peak derived from stretching vibration of a double bond between C and O of diethyl carbonate was slightly (Io=0.15231) observed at around 1742 cm$^{-1}$. Additionally in the IR spectrum in Fig. 24, a characteristic peak derived from stretching vibration of a double bond between C and O of diethyl carbonate was observed at a peak intensity of Is=0.45679 at around 1706 cm$^{-1}$ shifted toward the low wave number side from around 1742 cm$^{-1}$. The relationship between peak intensities of Is and Io was Is>Io and Is=3.00×Io.

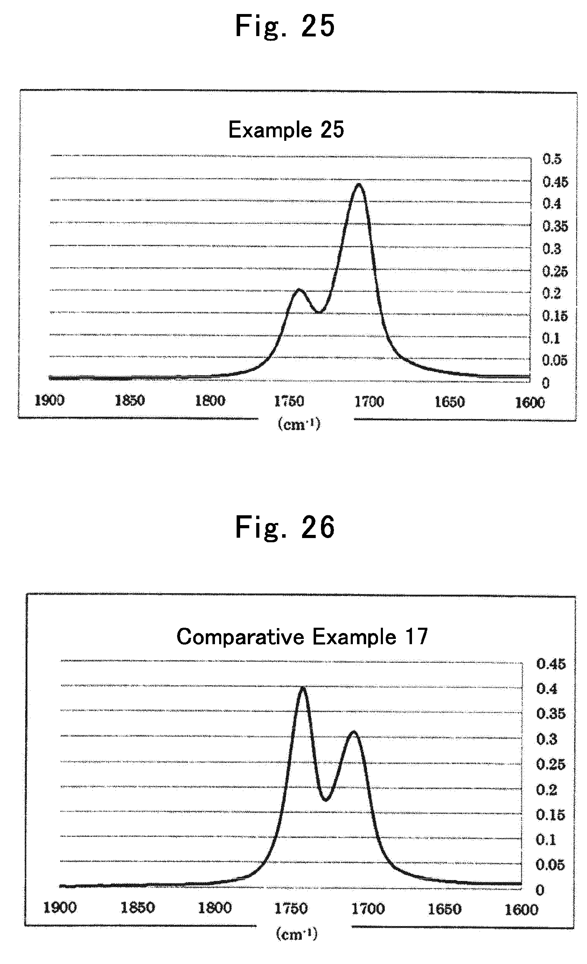

In the IR spectrum of the electrolytic solution of Example 25 shown in Fig. 25, a characteristic peak derived from stretching vibration of a double bond between C and O of diethyl carbonate was slightly (Io=0.20337) observed at around 1742 cm$^{-1}$. Additionally in the IR spectrum in Fig. 25, a characteristic peak derived from stretching vibration of a double bond between C and O of diethyl carbonate was observed at a peak intensity of Is=0.43841 at around 1706 cm$^{-1}$ shifted toward the low wave number side from around 1742 cm$^{-1}$. The relationship between peak intensities of Is and Io was Is>Io and Is=2.16×Io.

In the IR spectrum of the electrolytic solution of Comparative Example 17 shown in Fig. 26, a characteristic peak derived from stretching vibration of a double bond between C and O of diethyl carbonate was observed (Io=0.39636) at around 1742 cm$^{-1}$. Additionally in the IR spectrum in Fig. 26, a characteristic peak derived from stretching vibration of a double bond between C and O of diethyl carbonate was observed at a peak intensity of Is=0.31129 at around 1709 cm$^{-1}$ shifted toward the low wave number side from around 1742 cm$^{-1}$. The relationship between peak intensities of Is and Io was Is<Io.

In the IR spectrum of the electrolytic solution of Example 26 shown in Fig. 29, a characteristic peak derived from stretching vibration of a double bond between C and O of dimethyl carbonate was observed slightly (Io=0.24305) at around 1747 cm$^{-1}$. Additionally in the IR spectrum in Fig. 29, a characteristic peak derived from stretching vibration of a double bond between C and O of dimethyl carbonate was observed at a peak intensity of Is=0.42654 at around 1719 cm$^{-1}$ shifted toward the low wave number side from around 1747 cm$^{-1}$. The relationship between peak intensities of Is and Io was Is>Io and Is=1.75×Io.

In the IR spectrum of the electrolytic solution of Example 27 shown in Fig. 30, a characteristic peak derived from stretching vibration of a double bond between C and O of dimethyl carbonate was observed slightly (Io=0.18779) at around 1743 cm$^{-1}$. Additionally in the IR spectrum in Fig. 30, a characteristic peak derived from stretching vibration of a double bond between C and O of dimethyl carbonate was observed at a peak intensity of Is=0.49461 at around 1717 cm$^{-1}$ shifted toward the low wave number side from around 1743 cm$^{-1}$. The relationship between peak intensities of Is and Io was Is>Io and Is=2.63×Io.

(Evaluation Example 2: Ionic Conductivity)

Ionic conductivities of the electrolytic solutions of Examples 1 to 3, 8, 9, 12, 13, 15, 17, 20, 23, 26, and 27 were measured using the following conditions. The results are shown in Table 8.

Ionic Conductivity Measuring Conditions

Under an Ar atmosphere, an electrolytic solution was sealed in a glass cell that has a platinum electrode and whose cell constant is known, and impedance thereof was measured at 30 °C, 1 kHz. Ionic conductivity was calculated based on the result of measuring impedance. As a measurement instrument, Solartron 147055BEC (Solartron Analytical) was used.

[Table 8]

| | Lithium salt | Organic solvent | Lithium salt concentration (mol/L) | Ionic conductivity (mS/cm) |
|---|---|---|---|---|
| Example 1 | LiTFSA | DME | 3.2 | 2.4 |
| Example 2 | LiTFSA | DME | 2.8 | 4.4 |
| Example 3 | LiTFSA | AN | 4.2 | 1.0 |
| Example 8 | LiFSA | DME | 4.0 | 7.1 |
| Example 9 | LiFSA | DME | 3.6 | 7.2 |
| Example 12 | LiFSA | AN | 5.0 | 7.5 |
| Example 13 | LiFSA | AN | 4.5 | 9.7 |
| Example 15 | LiFSA | DMC | 3.9 | 2.3 |
| Example 17 | LiFSA | DMC | 2.9 | 4.6 |
| Example 20 | LiFSA | EMC | 3.4 | 1.8 |
| Example 23 | LiFSA | DEC | 3.0 | 1.4 |
| Example 26 | LiBF$_4$ | DMC | 4.9 | 1.4 |
| Example 27 | LiPF$_6$ | DMC | 4.4 | 1.9 |

The electrolytic solutions of Examples 1 to 3, 8, 9, 12, 13, 15, 17, 20, 23, 26, and 27 all displayed ionic conductivity. Thus, the electrolytic solutions of the present invention are understood to be all capable of functioning as various electrolytic solutions.

(Evaluation Example 3: Viscosity)

The viscosities of the electrolytic solutions of Examples 1 to 3, 8, 9, 12, 13, 15, 17, 20, and 23, and Comparative Examples 3, 7, 11, and 14 to 17 were measured using the following conditions. The results are shown in Table 9.

Viscosity Measuring Conditions

Under an Ar atmosphere, an electrolytic solution was sealed in a test cell, and viscosity thereof was measured under a condition of 30°C by using a falling ball viscometer (Lovis 2000 Mmanufactured by Anton Paar GmbH).

[Table 9]

|  | Lithium salt | Organic solvent | Lithium salt concentration (mol/L) | Viscosity (mPa ·s) |
|---|---|---|---|---|
| Example 1 | LiTFSA | DME | 3.2 | 36.6 |
| Example 2 | LiTFSA | DME | 2.8 | 31.6 |
| Example 3 | LiTFSA | AN | 4.2 | 138 |
| Example 8 | LiFSA | DME | 4.0 | 30.3 |
| Example 9 | LiFSA | DME | 3.6 | 25.1 |
| Example 12 | LiFSA | AN | 5.0 | 31.5 |
| Example 13 | LiFSA | AN | 4.5 | 23.8 |
| Example 15 | LiFSA | DMC | 3.9 | 34.2 |
| Example 17 | LiFSA | DMC | 2.9 | 17.6 |
| Example 20 | LiFSA | EMC | 3.4 | 29.7 |
| Example 23 | LiFSA | DEC | 3.0 | 23.2 |
| Comparative Example 3 | LiTFSA | DME | 1.0 | 1.3 |
| Comparative Example 7 | LiTFSA | AN | 1.0 | 0.75 |
| Comparative Example 11 | LiFSA | DME | 1.0 | 1.2 |
| Comparative Example 14 | LiFSA | AN | 1.0 | 0.74 |
| Comparative Example 15 | LiFSA | DMC | 1.1 | 1.38 |
| Comparative Example 16 | LiFSA | EMC | 1.1 | 1. 67 |
| Comparative Example 17 | LiFSA | DEC | 1.1 | 2.05 |

When compared to the viscosities of the electrolytic solutions of the Comparative Examples, the viscosities of the electrolytic solutions of the Examples were significantly higher. Thus, with a battery using the electrolytic solution of the present invention, even if the battery is damaged, leakage of the electrolytic solution is suppressed. Thus, with a capacitor using the electrolytic solution of the present invention, even if the capacitor is damaged, leakage of the electrolytic solution is suppressed.

(Evaluation Example 4: Volatility)

Volatilities of the electrolytic solutions of Examples 2, 3, 13, 15, and 17 and Comparative Examples 3, 7, 14, and 15 were measured using the following method.
Approximately 10 mg of an electrolytic solution was placed in a pan made from aluminum, and the pan was disposed in a thermogravimetry measuring device (SDT600 manufactured by TA Instruments) to measure weight change of the electrolytic solution at room temperature. Volatilization rate was calculated through differentiation of weight change (mass%) by time. Among the obtained volatilization rates, largest values were selected and are shown in Table 10.

[Table 10]

|  | Lithium salt | Organic solvent | Lithium salt concentration (mol/L) | Maximum volatilization rate (mass%/min.) |
|---|---|---|---|---|
| Example 2 | LiTFSA | DME | 2.8 | 0.4 |
| Example 3 | LiTFSA | AN | 4.2 | 2.1 |
| Example 13 | LiFSA | AN | 4.5 | 0.6 |
| Example 15 | LiFSA | DMC | 3.9 | 0.1 |
| Example 17 | LiFSA | DMC | 2.9 | 1.3 |
| Comparative Example 3 | LiTFSA | DME | 1.0 | 9.6 |

(continued)

|  | Lithium salt | Organic solvent | Lithium salt concentration (mol/L) | Maximum volatilization rate (mass%/min.) |
|---|---|---|---|---|
| Comparative Example 7 | LiTFSA | AN | 1.0 | 13.8 |
| Comparative Example 14 | LiFSA | AN | 1.0 | 16.3 |
| Comparative Example 15 | LiFSA | DMC | 1.1 | 6.1 |

When compared to the maximum volatilization rates of Comparative Examples 3, 7, 14, and 15, the maximum volatilization rate of the electrolytic solutions of Examples 2, 3, 13, 15, and 17 were significantly smaller. Thus, even if a battery using the electrolytic solution of the present invention is damaged, rapid volatilization of the organic solvent outside the battery is suppressed since the volatilization rate of the electrolytic solution is small. In addition, even if a capacitor using the electrolytic solution of the present invention is damaged, rapid volatilization of the organic solvent outside the capacitor is suppressed since the volatilization rate of the electrolytic solution is small.

(Evaluation Example 5: Combustibility)

Combustibility of the electrolytic solutions of Example 3 and Comparative Example 7 were tested using the following method.

Three drops of an electrolytic solution were dropped on a glass filter by using a pipette to have the electrolytic solution retained by the glass filter. The glass filter was held by a pair of tweezers, and the glass filter was brought in contact with a flame.

The electrolytic solution of Example 3 did not ignite even when being brought in contact with a flame for 15 seconds. On the other hand, the electrolytic solution of Comparative Example 7 burned out in a little over 5 seconds.

Thus, the electrolytic solution of the present invention was confirmed to be unlikely to combust.

(Evaluation Example 6: Li transference number)

Li transference numbers of the electrolytic solutions of Examples 2 and 13 and Comparative Examples 14 and 18 were measured using the following conditions. The results are shown in Table 11.

Li Transference Number Measuring Conditions

An NMR tube including an electrolytic solution was placed in a PFG-NMR device (ECA-500, JEOL Ltd.), and diffusion coefficient of Li ions and anions in each of the electrolytic solutions were measured on $^7$Li and $^{19}$F as targets while altering a magnetic field pulse width and using spin echo method. The Li transference number was calculated from the following formula.

```
Li transference number = (Li ionic diffusion coefficient) /

(Li ionic diffusion coefficient + anion diffusion coefficient)
```

[Table 11]

|  | Lithium salt | Organic solvent | Lithium salt concentration (mol/L) | Li transference number |
|---|---|---|---|---|
| Example 2 | LiTFSA | DME | 2.8 | 0.52 |
| Example 13 | LiFSA | AN | 4.5 | 0.50 |
| Comparative Example 14 | LiFSA | AN | 1.0 | 0.42 |

(continued)

| | Lithium salt | Organic solvent | Lithium salt concentration (mol/L) | Li transference number |
|---|---|---|---|---|
| Comparative Example 18 | LiPF$_6$ | EC/DEC | 1.0 | 0.40 |

When compared to the Li transference numbers of the electrolytic solutions of Comparative Examples 14 and 18, the Li transference numbers of the electrolytic solutions of Examples 2 and 13 were significantly higher. Here, Li ionic conductivity of an electrolytic solution is calculated by multiplying ionic conductivity (total ion conductivity) of the electrolytic solution by the Li transference number. As a result, when compared to a conventional electrolytic solution having the same level of ionic conductivity, the electrolytic solution of the present invention shows a high transportation rate of lithium ion (cation).

In addition, the Li transference number when the temperature was altered was measured in the electrolytic solution of Example 13 in accordance with the measuring conditions for the above described Li transference numbers. The results are shown in Table 12.

[Table 12]

| Temperature (°C) | Li transference number |
|---|---|
| 30 | 0.50 |
| 10 | 0.50 |
| -10 | 0.50 |
| -30 | 0.52 |

Based on the results in Table 12, the electrolytic solution of the present invention is understood as to maintain a suitable Li transference number regardless of the temperature. The electrolytic solution of the present invention is regarded as to maintain a liquid state even at a low temperature.

(Evaluation Example 7: Low Temperature Test)

Electrolytic solutions of Examples 15, 17, 20, and 23 were each placed in a container, and the container was filled with inert gas and sealed. These solutions were stored in a -30°C freezer for two days. Each of the electrolytic solutions after storage was observed. All of the electrolytic solutions maintained a liquid state without solidifying, and depositing of salts was also not observed.

(Evaluation Example 8: Raman Spectrum Measurement)

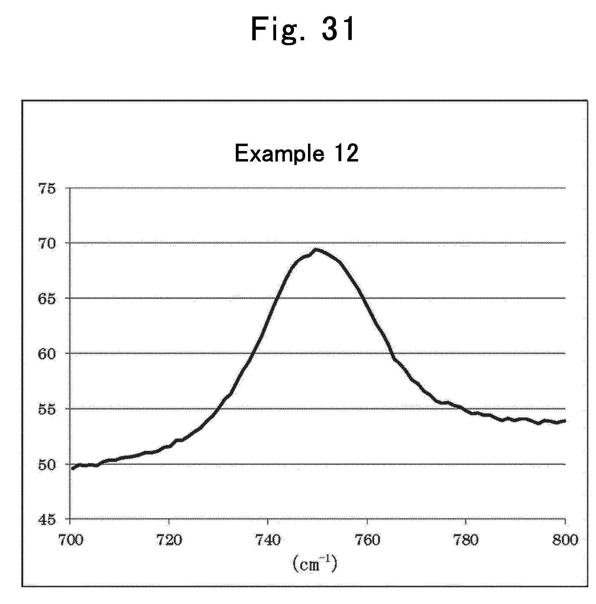

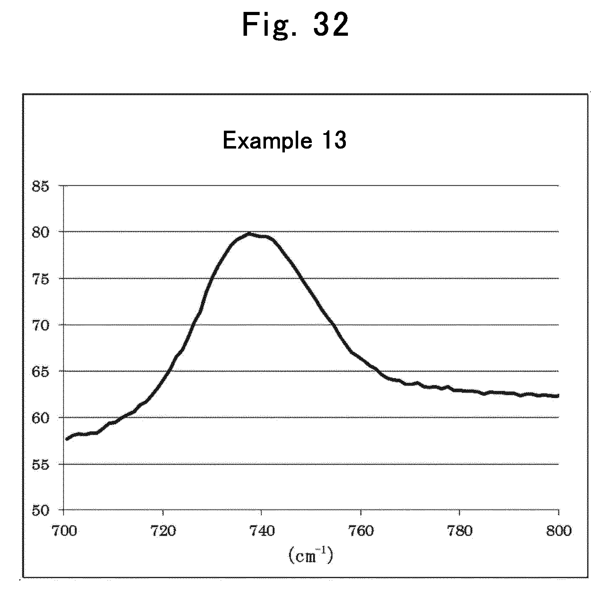

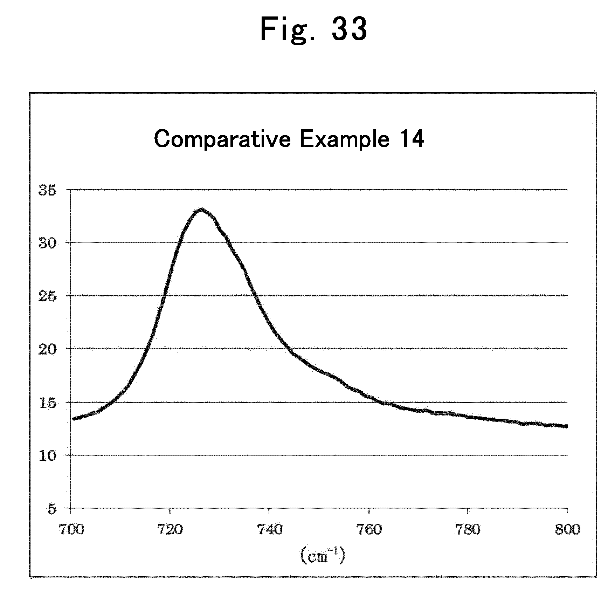

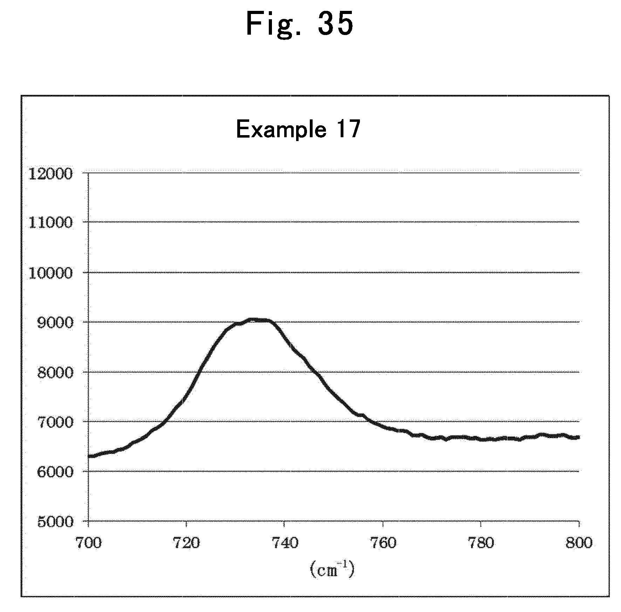

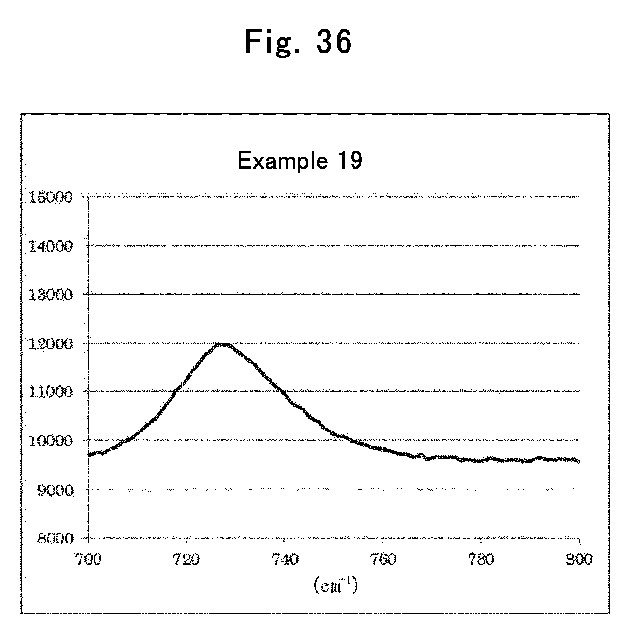

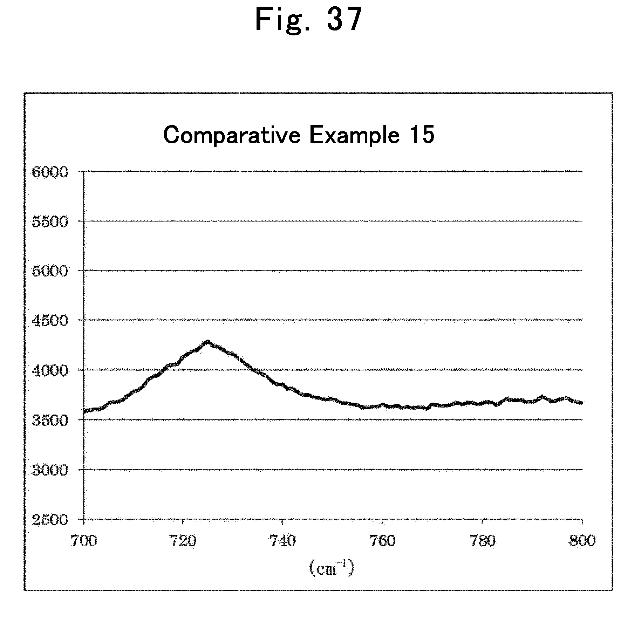

Raman spectrum measurement was performed on the electrolytic solutions of Examples 12 and 13, Comparative Example 14, Examples 15, 17, and 19, and Comparative Example 15 using the following conditions. Fig. 31 to Fig. 37 each show a Raman spectrum in which a peak derived from an anion portion of a metal salt of an electrolytic solution was observed. In each of the figures, the horizontal axis represents wave number (cm$^{-1}$) and the vertical axis represents scattering intensity.

Raman Spectrum Measurement Conditions

Device: Laser Raman spectrometer (NRS series, JASCO Corp.)
Laser wavelength: 532 nm

The electrolytic solutions were each sealed in a quartz cell under an inert gas atmosphere and subjected to the measurement.

At 700 to 800 cm$^{-1}$ in the Raman spectra of the electrolytic solutions of Examples 12 and 13 and Comparative Example 14 shown in Figs. 31 to 33, characteristic peaks derived from $(FSO_2)_2N$ of LiFSA dissolved in acetonitrile were observed. Here, based on Figs. 31 to 33, the peak is understood as to shift toward the high wave number side associated with an increase in the concentration of LiFSA. As the concentration of the electrolytic solution becomes higher, $(FSO_2)$

$_2$N corresponding to the anion of a salt is speculated to enter a state of interacting with Li. In other words, Li and an anion are speculated to mainly form an SSIP (Solvent-separated ion pairs) state at a low concentration, and mainly form a CIP (Contact ion pairs) state or an AGG (aggregate) state as the concentration becomes higher. A change in the state is thought to be observed as a peak shift in the Raman spectrum.

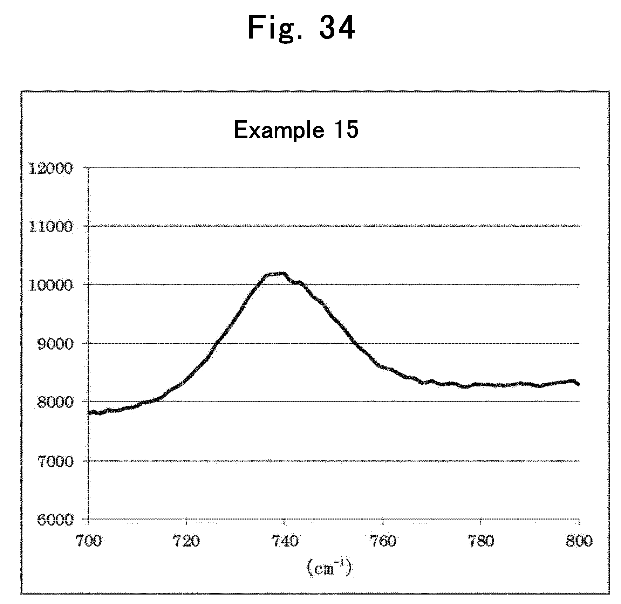

At 700 to 800 cm$^{-1}$ in the Raman spectra of the electrolytic solutions of Examples 15, 17, and 19 and Comparative Example 15 shown in Figs. 34 to 37, characteristic peaks derived from $(FSO_2)_2N$ of LiFSA dissolved in dimethyl carbonate were observed. Here, based on Figs. 34 to 37, the peak is understood as to shift toward the high wave number side associated with an increase in the concentration of LiFSA. As considered in the previous paragraph, this phenomenon is considered as a result of $(FSO_2)_2N$ corresponding to the anion of a salt entering a state of interacting with Li as the concentration of the electrolytic solution became higher, and such a change in the state being observed as a peak shift in the Raman spectrum.

(Example A)

A half-cell using the electrolytic solution of Example 13 was produced in the following manner.

90 parts by mass of a graphite which is an active material and whose mean particle diameter is 10 $\mu$m was mixed with 10 parts by mass of polyvinylidene fluoride which is a binding agent. The mixture was dispersed in a proper amount of N-methyl-2-pyrrolidone to create a slurry. As the current collector, a copper foil having a thickness of 20 $\mu$m was prepared. The slurry was applied in a film form on the surface of the copper foil by using a doctor blade. The copper foil on which the slurry was applied was dried to remove N-methyl-2-pyrrolidone, and then the copper foil was pressed to obtain a joined object. The obtained joined object was heated and dried in a vacuum dryer for 6 hours at 120°C to obtain a copper foil having the active material layer formed thereon. This was used as the working electrode.

Metal Li was used as the counter electrode.

The working electrode, the counter electrode, as a separator interposed therebetween, Whatman glass fiber filter paper having a thickness of 400 $\mu$m, and the electrolytic solution of Example 13 were housed in a battery case (CR2032 type coin cell case manufactured by Hohsen Corp.) to form a half-cell. This was used as a half-cell of Example A.

(Comparative Example A)

A half-cell of Comparative Example A was produced with a method similar to that in Example A, except for using the electrolytic solution of Comparative Example 18 as the electrolytic solution.

(Evaluation Example 9: Rate Characteristics)

Rate characteristics of the half-cells of Example A and Comparative Example A were tested using the following method.

With respect to the half-cells, at 0.1C, 0.2C, 0.5C, 1C, and 2C rates (1C refers to a current required for full charging or discharging a battery in 1 hour under a constant current), charging and then discharging were performed, and the capacity (discharge capacity) of the working electrode was measured at each rate. In the description here, the counter electrode was regarded as the negative electrode and the working electrode was regarded as the positive electrode. With respect to the capacity of the working electrode at 0.1C rate, proportions of capacities (rate characteristics) at other rates were calculated. The results are shown in Table 13.

[Table 13]

|  | Example A | Comparative Example A |
|---|---|---|
| 0.1C capacity (mAh/g) | 334 | 330 |
| 0.2C capacity / 0.1C capacity | 0.983 | 0.966 |
| 0.5C capacity / 0.1C capacity | 0.946 | 0.767 |
| 1C capacity / 0.1C capacity | 0.868 | 0.498 |
| 2C capacity / 0.1C capacity | 0.471 | 0.177 |

When compared to the half-cell of Comparative Example A, the half-cell of Example A showed suppression of the reduction in capacity and excellent rate characteristics at all rates of 0.2C, 0.5C, 1C, and 2C. Thus, the secondary battery using the electrolytic solution of the present invention was confirmed to show excellent rate characteristics.

(Evaluation Example 10: Responsivity with respect to Repeated Rapid Charging/Discharging)

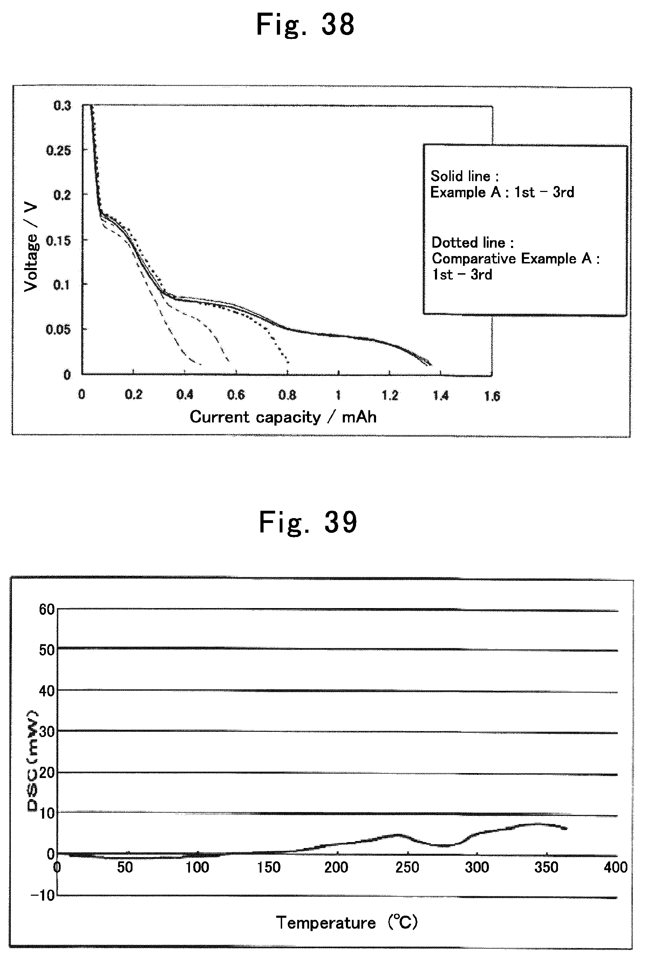

The changes in capacity and voltage were observed when charging and discharging were repeated three times at 1C rate using the half-cells of Example A and Comparative Example A. The results are shown in Fig. 38.

Associated with repeated charging and discharging, the half-cell of Comparative Example A tended to show greater polarization when current was passed therethrough at 1C rate, and capacity obtained from 2 V to 0.01 V rapidly decreased. On the other hand, the half-cell of Example A hardly displayed increase or decrease of polarization, as confirmed also from the manner three curves overlap in Fig. 38 even when charging and discharging were repeated, and had maintained its capacity suitably. A conceivable reason why polarization had increased in Comparative Example A is the inability of the electrolytic solution to supply sufficient amount of Li to a reaction interface with an electrode because of Li concentration unevenness generated in the electrolytic solution when charging and discharging are repeated rapidly, i.e., uneven distribution of Li concentration in the electrolytic solution. In Example A, using the electrolytic solution of the present invention having a high Li concentration is thought to have enabled suppression of uneven distribution of Li concentration of the electrolytic solution. Thus, the secondary battery using the electrolytic solution of the present invention was confirmed to show excellent responsivity with respect to rapid charging and discharging. In addition, a graphite-containing electrode was confirmed to show excellent responsivity with respect to rapid charging/discharging under presence of the electrolytic solution of the present invention.

As previously stated, since a lithium ion capacitor is accompanied with an electrochemical reaction (cell reaction) identical to that occurring in a lithium ion secondary battery between the electrolytic solution and the negative electrode during charging and discharging, the electrochemical reaction (cell reaction) that occurs between the negative electrode and the electrolytic solution requires reversibility and a fast rate. Here, the reversibility and the rate, of the electrochemical reaction (cell reaction) that occurs between the negative electrode and the electrolytic solution, required for a lithium ion capacitor are evaluated with the above described or following Evaluation Examples with respect to the half-cells. Based on the results in Table 13, a graphite-containing electrode of a lithium ion capacitor was confirmed to show excellent rate characteristics and reversibility under presence of the electrolytic solution of the present invention.

(Example B)

A lithium ion secondary battery using the electrolytic solution of Example 13 was produced in the following manner.

94 parts by mass of a lithium-containing metal oxide that has a layered rock salt structure and is represented by $LiNi_{5/10}CO_{2/10}Mn_{3/10}O_2$, which is a positive electrode active material, 3 parts by mass of acetylene black, which is a conductive additive, and 3 parts by mass of polyvinylidene fluoride, which is a binding agent, were mixed. The mixture was dispersed in a proper amount of N-methyl-2-pyrrolidone to create a slurry. As the positive electrode current collector, an aluminum foil having a thickness of 20 $\mu$m was prepared. The slurry was applied in a film form on the surface of the aluminum foil by using a doctor blade. The aluminum foil on which the slurry was applied was dried for 20 minutes at 80°C to remove N-methyl-2-pyrrolidone through volatilization. Then, the aluminum foil was pressed to obtain a joined object. The obtained joined object was heated and dried in a vacuum dryer for 6 hours at 120°C to obtain an aluminum foil having the positive electrode active material layer formed thereon. This was used as the positive electrode.

98 parts by mass of a natural graphite, which is a negative electrode active material, and 1 part by mass of a styrene butadiene rubber and 1 part by mass of carboxymethyl cellulose, which are binding agents, were mixed. The mixture was dispersed in a proper amount of ion exchanged water to create a slurry. As the negative electrode current collector, a copper foil having a thickness of 20 $\mu$m was prepared. The slurry was applied in a film form on the surface of the copper foil by using a doctor blade. The copper foil on which the slurry was applied was dried to remove water, and then the copper foil was pressed to obtain a joined object. The obtained joined object was heated and dried in a vacuum dryer for 6 hours at 100°C to obtain a copper foil having the negative electrode active material layer formed thereon. This was used as the negative electrode.

As a separator, a filter paper for experiments (Toyo Roshi Kaisha, Ltd., made from cellulose, thickness of 260 $\mu$m) was prepared.

An electrode assembly was f ormedby sandwiching the separator between the positive electrode and the negative electrode. The electrode assembly was covered with a set of two sheets of a laminate film. The laminate film was formed into a bag-like shape by having three sides thereof sealed, and the electrolytic solution of Example 13 was poured in the laminate film. Four sides were sealed airtight by sealing the remaining one side to obtain a lithium ion secondary battery in which the electrode assembly and the electrolytic solution were sealed. This battery was used as the lithium ion secondary battery of Example B.

(Comparative Example B)

A lithium ion secondary battery of Comparative Example B was produced with a method similar to that in Example B, except for using the electrolytic solution of Comparative Example 18 as the electrolytic solution.

(Evaluation Example 11: Thermal Stability)

Thermal stability of an electrolytic solution against a charged-state positive electrode of the lithium ion secondary batteries of Example B and Comparative Example B was evaluated using the following method.

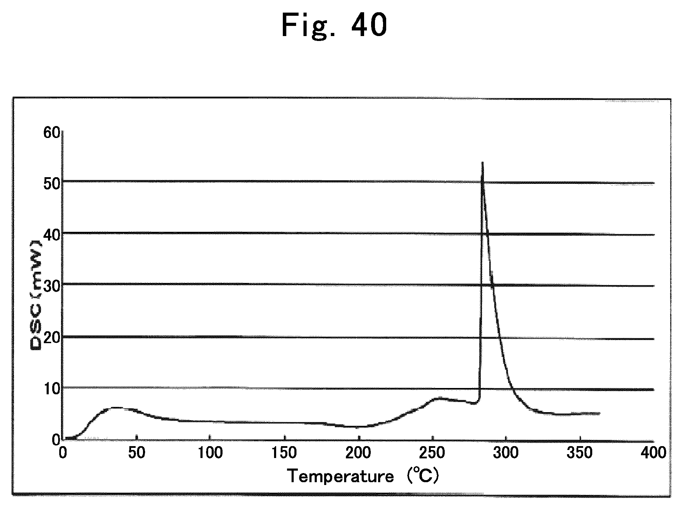

A lithium ion secondary battery was fully charged under constant current and constant voltage conditions with a charge cutoff voltage of 4.2 V. The lithium ion secondary battery was disassembled after being fully charged, and the positive electrode thereof was removed. 3 mg of the positive electrode and 1. 8 μL of an electrolytic solution were placed in a stainless steel pan, and the pan was sealed. Differential scanning calorimetry analysis was performed using the sealed pan under a nitrogen atmosphere at a temperature increase rate of 20°C/min., and a DSC curve was observed. As a differential scanning calorimeter, Rigaku DSC8230 was used. Fig. 39 shows a DSC chart obtained when the electrolytic solution and the charged-state positive electrode of the lithium ion secondary battery of Example B were placed together. In addition, Fig. 40 shows a DSC chart obtained when the electrolytic solution and the charged-state positive electrode of the lithium ion secondary battery of Comparative Example B were placed together.

As obvious from the results of Figs. 39 and 40, although endothermic/exothermic peaks were hardly observed in the DSC curve obtained when the electrolytic solution and the charged-state positive electrode of the lithium ion secondary battery of Example B were placed together, an exothermic peak was observed at around 300°C in the DSC curve obtained when the electrolytic solution and the charged-state positive electrode of the lithium ion secondary battery of Comparative Example B were placed together. The exothermic peak is estimated to be generated as a result of a reaction between the positive electrode active material and the electrolytic solution.

Based on these results, when compared to a lithium ion secondary battery using a conventional electrolytic solution, the lithium ion secondary battery using the electrolytic solution of the present invention is understood as having excellent thermal stability since reactivity between the positive electrode active material and the electrolytic solution is low.

(Example C)

A lithium ion secondary battery of Example C using the electrolytic solution of Example 13 was produced in the following manner.

A positive electrode was produced similarly to the positive electrode of the lithium ion secondary battery of Example B.

98 parts by mass of a natural graphite, which is a negative electrode active material, and 1 part by mass of a styrene butadiene rubber and 1 part by mass of carboxymethyl cellulose, which are binding agents, were mixed. The mixture was dispersed in a proper amount of ion exchanged water to create a slurry. As the negative electrode current collector, a copper foil having a thickness of 20 μm was prepared. The slurry was applied in a film form on the surface of the copper foil by using a doctor blade. The copper foil on which the slurry was applied was dried to remove water, and then the copper foil was pressed to obtain a joined object. The obtained joined object was heated and dried in a vacuum dryer for 6 hours at 100°C to obtain a copper foil having the negative electrode active material layer formed thereon. This was used as the negative electrode.

As the separator, a nonwoven fabric made from cellulose and having a thickness of 20 μm was prepared.

An electrode assembly was formed by sandwiching the separator between the positive electrode and the negative electrode. The electrode assembly was covered with a set of two sheets of a laminate film. The laminate film was formed into a bag-like shape by having three sides thereof sealed, and the electrolytic solution of Example 13 was poured in the laminate film. Four sides were sealed airtight by sealing the remaining one side to obtain a lithium ion secondary battery in which the electrode assembly and the electrolytic solution were sealed. This battery was used as the lithium ion secondary battery of Example C.

(Example D)

A lithium ion secondary battery of Example D using the electrolytic solution of Example 13 was produced in the following manner.

A positive electrode was produced similarly to the positive electrode of the lithium ion secondary battery of Example B.

90 parts by mass of a natural graphite, which is a negative electrode active material, and 10 parts by mass of polyvinylidene fluoride, which is a binding agent, were mixed. The mixture was dispersed in a proper amount of ion exchanged water to create a slurry. As the negative electrode current collector, a copper foil having a thickness of 20 $\mu$m was prepared. The slurry was applied in a film form on the surface of the copper foil by using a doctor blade. The copper foil on which the slurry was applied was dried to remove water, and then the copper foil was pressed to obtain a joined object. The obtained joined object was heated and dried in a vacuum dryer for 6 hours at 120°C to obtain a copper foil having the negative electrode active material layer formed thereon. This was used as the negative electrode.

As the separator, a nonwoven fabric made from cellulose and having a thickness of 20 $\mu$m was prepared.

An electrode assembly was formed by sandwiching the separator between the positive electrode and the negative electrode. The electrode assembly was covered with a set of two sheets of a laminate film. The laminate film was formed into a bag-like shape by having three sides thereof sealed, and the electrolytic solution of Example 13 was poured in the laminate film. Four sides were sealed airtight by sealing the remaining one side to obtain a lithium ion secondary battery in which the electrode assembly and the electrolytic solution were sealed. This battery was used as the lithium ion secondary battery of Example D.

(Comparative Example C)

A lithium ion secondary battery of Comparative Example C was produced similarly to Example C, except for using the electrolytic solution of Comparative Example 18.

(Comparative Example D)

A lithium ion secondary battery of Comparative Example D was produced similarly to Example D, except for using the electrolytic solution of Comparative Example 18.

(Evaluation Example 12: Input-Output Characteristics of Lithium Ion Secondary Battery)

Output characteristics of the lithium ion secondary batteries of Example C and D and Comparative Example C and D were evaluated using the following conditions.

(1) Input Characteristics Evaluation at 0°C or 25°C, SOC 80%

The used evaluation conditions were: state of charge (SOC) of 80%, 0°C or 25°C, usage voltage range of 3 V to 4.2 V, and capacity of 13.5 mAh. Evaluation of input characteristics of each of the batteries was performed three times each for 2-second input and 5-second input.

In addition, based on the volume of each of the batteries, battery output density (W/L) at 25°C in 2-second input was calculated.

Evaluation results of input characteristics are shown in Table 14. In Table 14, "2-second input" refers to an input inputted at 2 seconds after the start of charging, and "5-second input" refers to an input inputted at 5 seconds after the start of charging.

As shown in Table 14, regardless of the difference in temperature, the input of the battery of Example C was significantly higher than the input of the battery of Comparative Example C. Similarly, the input of the battery of Example D was significantly higher than the input of the battery of Comparative Example D.

In addition, the battery input density of the battery of Example C was significantly higher than the battery input density of the battery of Comparative Example C. Similarly, the battery input density of the battery of Example D was significantly higher than the battery input density of the battery of Comparative Example D.

(2) Output Characteristics Evaluation at 0°C or 25°C, SOC 20%

The used evaluation conditions were: state of charge (SOC) of 20%, 0°C or 25°C, usage voltage range of 3 V to 4.2 V, and capacity of 13.5 mAh. SOC 20% at 0°C is in a range in which output characteristics are unlikely to be exerted such as, for example, when used in a cold room. Evaluation of output characteristics of each of the batteries was performed three times each for 2-second output and 5-second output.

In addition, based on the volume of each of the batteries, battery output density (W/L) at 25°C in 2-second output was calculated.

Evaluation results of output characteristics are shown in Table 14. In Table 14, "2-second output" refers to an output outputted at 2 seconds after the start of discharging, and "5-second output" refers to an output outputted at 5 seconds after the start of discharging.

As shown in Table 14, regardless of the difference in temperature, the output of the battery of Example C was significantly higher than the output of the battery of Comparative Example C. Similarly, the output of the battery of Example D was significantly higher than the output of the battery of Comparative Example D.

In addition, the battery output density of the battery of Example C was significantly higher than the battery output density of the battery of Comparative Example C. Similarly, the battery output density of the battery of Example D was significantly higher than the battery output density of the battery of Comparative Example D.

[Table 14]

| Battery | | Example C | Comparative Example C | Example D | Comparative Example D |
|---|---|---|---|---|---|
| Electrolytic solution | | Example 13 | Comparative Example 18 | Example 13 | Comparative Example 18 |
| SOC80%, 25°C | 2-second input (mW) | 1285.1 | 732.2 | 1113.6 | 756.9 |
| | 5-second input (mW) | 1004.2 | 602.2 | 858.2 | 614.2 |
| SOC80%, 0°C | 2-second input (mW) | 498.5 | 232.3 | 423.2 | 218.3 |
| | 5-second input (mW) | 408.4 | 206.8 | 348.6 | 191.2 |
| SOC20%, 25°C | 2-second output (mW) | 924.6 | 493.5 | 1079.3 | 696.0 |
| | 5-second output (mW) | 899.6 | 425.9 | 1057.3 | 659.9 |
| SOC20%, 0°C | 2-second output (mW) | 305.2 | 175.3 | 354.8 | 207.5 |
| | 5-second output (mW) | 291.7 | 165.6 | 347.1 | 202.1 |
| Battery input density (W/L): SOC80%, 25°C | | 6255.0 | 3563.9 | 3762.1 | 2558.4 |
| Battery output density (W/L): SOC20%, 25°C | | 4497.4 | 2399.6 | 3647.1 | 2352.6 |

(Example E)

A half-cell using the electrolytic solution of Example 13 was produced in the following manner.

90 parts by mass of a graphite which is an active material and whose mean particle diameter is 10 $\mu$m was mixed with 10 parts by mass of polyvinylidene fluoride which is a binding agent. The mixture was dispersed in a proper amount of N-methyl-2-pyrrolidone to create a slurry. As the current collector, a copper foil having a thickness of 20 $\mu$m was prepared. The slurry was applied in a film form on the surface of the copper foil by using a doctor blade. The copper foil on which the slurry was applied was dried to remove N-methyl-2-pyrrolidone, and then the copper foil was pressed to obtain a joined object. The obtained joined object was heated and dried in a vacuum dryer for 6 hours at 120°C to obtain a copper foil having the active material layer formed thereon. This was used as the working electrode. The mass of the active material per 1 cm$^2$ of the copper foil was 1.48 mg. In addition, the density of the graphite and polyvinylidene fluoride before pressing was 0.68 g/cm$^3$, whereas the density of the active material layer after pressing was 1.025 g/cm$^3$.

Metal Li was used as the counter electrode.

The working electrode, the counter electrode, as a separator interposed therebetween, Whatman glass fiber filter paper having a thickness of 400 $\mu$m, and the electrolytic solution of Example 13 were housed in a battery case (CR2032 type coin cell case manufactured by Hohsen Corp.) having a diameter of 13.82 mm to form a half-cell. This was used as a half-cell of Example E.

(Example F)

A half-cell of Example F was produced with a method similar to that in Example E, except for using the electrolytic solution of Example 15 as the electrolytic solution.

(Example G)

A half-cell of Example G was produced with a method similar to that in Example E, except for using the electrolytic solution of Example 20 as the electrolytic solution.

(Example H)

A half-cell of Example H was produced with a method similar to that in Example E, except for using the electrolytic solution of Example 23 as the electrolytic solution.

(Comparative Example E)

A half-cell of Comparative Example E was produced with a method similar to that in Example E, except for using the electrolytic solution of Comparative Example 18 as the electrolytic solution.

(Evaluation Example 13: Rate Characteristics)

Rate characteristics of the half-cells of Examples E to H and Comparative Example E were tested using the following method. With respect to the half-cells, at 0.1C, 0.2C, 0.5C, 1C, and 2C rates (1C refers to a current required for full charging or discharging a battery in 1 hour under a constant current), charging and then discharging were performed, and the capacity (discharge capacity) of the working electrode was measured at each rate. In the description here, the counter electrode was regarded as the negative electrode and the working electrode was regarded as the positive electrode. With respect to the capacity of the working electrode at 0.1C rate, proportions of capacities (rate characteristics) at other rates were calculated. The results are shown in Table 15.

[Table 15]

| | Example E | Example F | Example G | Example H | Comparative Example E |
|---|---|---|---|---|---|
| 0.2C capacity / 0.1C capacity | 0.982 | 0.981 | 0.981 | 0.985 | 0.974 |
| 0.5C capacity / 0.1C capacity | 0.961 | 0.955 | 0.956 | 0.960 | 0.931 |
| 1C capacity / 0.1C capacity | 0.925 | 0.915 | 0.894 | 0.905 | 0.848 |
| 2C capacity / 0.1C capacity | 0.840 | 0.777 | 0.502 | 0.538 | 0.575 |

When compared to the half-cell of Comparative Example E, since decrease in capacity was suppressed at rates of 0.2C, 0.5C and 1C in the half-cells of Examples E to H, and at 2C rate in Examples E and F, the half-cells of Examples E to H were confirmed to display excellent rate characteristics. In addition, the graphite-containing electrode was confirmed to show excellent rate characteristics under presence of the electrolytic solution of the present invention.

(Evaluation Example 14: Capacity Retention Rate)

Capacity retention rates of the half-cells of Examples E to H and Comparative Example E were tested using the following method.
With respect to each of the half-cells, a charging/discharging cycle from 2.0 V to 0.01 V involving CC charging (constant current charging) to a voltage of 2.0 V and CC discharging (constant current discharging) to a voltage of 0.01 V was performed at 25°C for three cycles at a charging/discharging rate of 0.1C. Then, charging and discharging were performed for three cycles at respective charging/discharging rates of 0.2C, 0.5C, 1C, 2C, 5C, and 10C, sequentially. Lastly, charging and discharging were performed for three cycles at 0.1C. Capacity retention rate (%) of each of the half-cells was obtained from the following formula.

```
Capacity Retention rate (%) = B/A × 100
```

A: Second discharge capacity of the working electrode in the first charging/discharging cycle at 0.1C
B: Second discharge capacity of the working electrode in the last charging/discharging cycle at 0.1C

The results are shown in Table 16. In the description here, the counter electrode was regarded as the negative electrode and the working electrode was regarded as the positive electrode.

[Table 16]

| | Example E | Example F | Example G | Example H | Comparative Example E |
|---|---|---|---|---|---|
| Capacity retention rate (%) | 98.1 | 98.7 | 98.9 | 99.8 | 98.8 |

All the half-cells performed the charging/discharging reaction finely, and displayed suitable capacity retention rate. In particular, the half-cells of Examples F, G, and H were significantly superior in capacity retention rate. In addition, the graphite-containing electrode was confirmed to show excellent capacity retention rate under presence of the electrolytic solution of the present invention.

(Evaluation Example 15: Reversibility of Charging and Discharging)

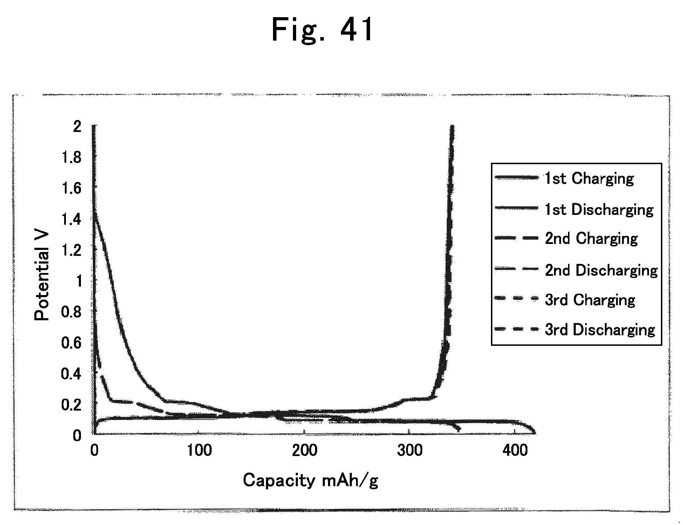

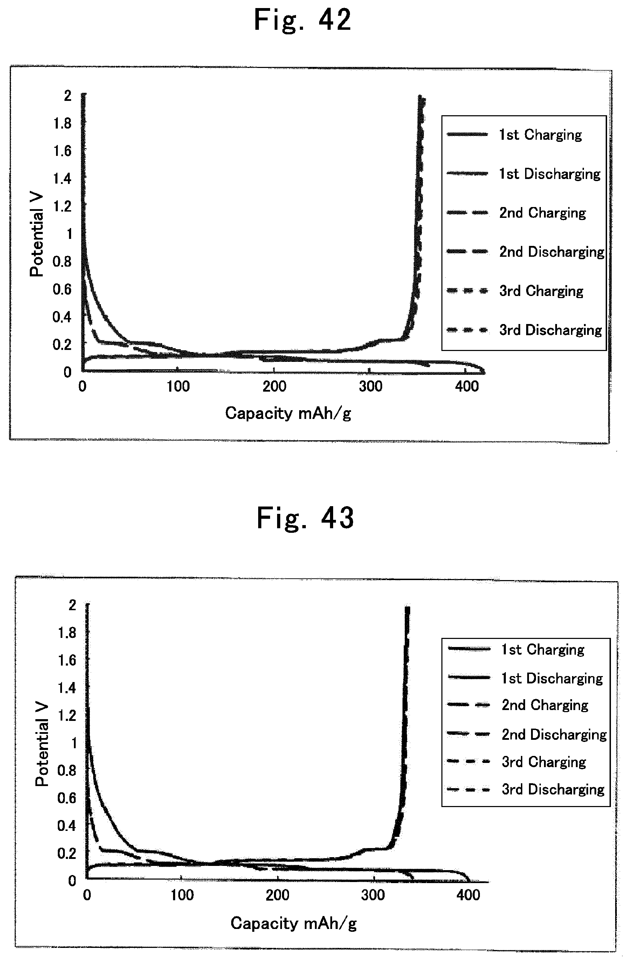

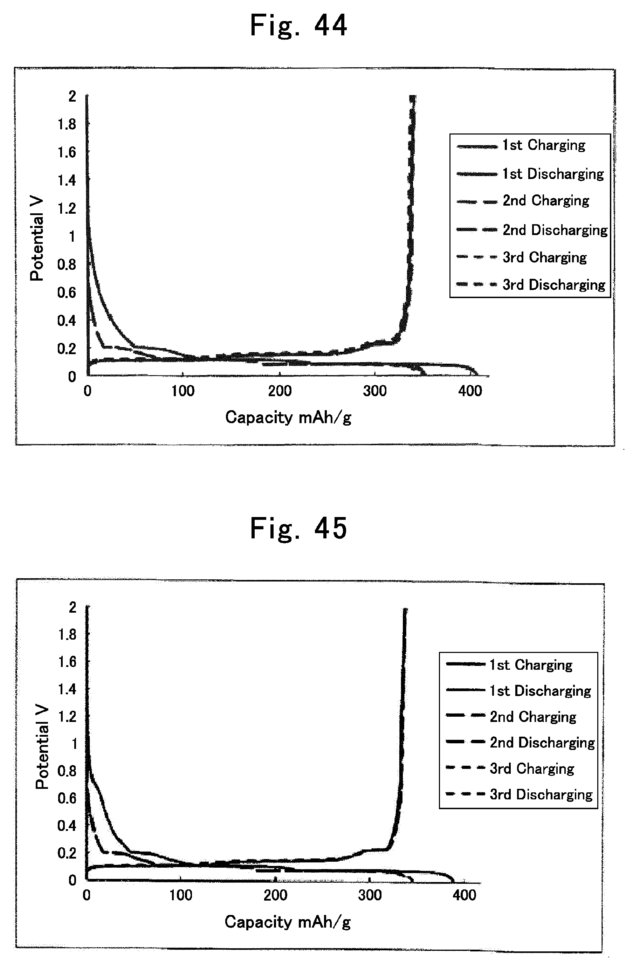

With respect to each of the half-cells of Examples E to H and Comparative Example E, a charging/discharging cycle from 2.0 V to 0.01 V involving CC charging (constant current charging) to a voltage of 2. 0 V and CC discharging (constant current discharging) to a voltage of 0.01 V was performed at 25°C for three cycles at a charging/discharging rate of 0.1C. The charging/discharging curves of each of the half-cells are shown in Figs. 41 to 45.
As shown in Figs. 41 to 45, reversible charging/discharging reaction is understood to be performed successfully in the half-cells of Examples E to H in a manner similar to the half-cell of Comparative Example E using a general electrolytic solution. In addition, the graphite-containing electrode is confirmed to undergo charging/discharging reaction reversibly under presence of the electrolytic solution of the present invention.

(Example I)

A half-cell using the electrolytic solution of Example 13 was produced in the following manner.
An aluminum foil (JIS A1000 series) having a diameter of 13.82 mm, an area size of 1.5 cm$^2$, and a thickness of 20 $\mu$m was used as the working electrode, and metal Li was used as the counter electrode. As the separator, a Whatman glass nonwoven fabric filter (stock number: 1825-055) having a thickness of 400 $\mu$m was used.
The working electrode, the counter electrode, the separator, and the electrolytic solution of Example 13 were housed in a battery case (CR2032 type coin cell case manufactured by Hohsen Corp.) to form a half-cell. This was used as a half-cell of Example I.

(Example J)

A half-cell of Example J was produced similarly to the half-cell of Example I, except for using the electrolytic solution of Example 15.

(Example K)

A half-cell of Example K was produced similarly to the half-cell of Example I, except for using the electrolytic solution of Example 17.

(Example L)

A half-cell of Example L was produced similarly to the half-cell of Example I, except for using the electrolytic solution of Example 20.

(Example M)

A half-cell of Example M was produced similarly to the half-cell of Example I, except for using the electrolytic solution of Example 23.

(Comparative Example F)

A half-cell of Comparative Example F was produced similarly to the half-cell of Example I, except for using the electrolytic solution of Comparative Example 18.

(Comparative Example G)

A half-cell of Comparative Example G was produced similarly to the half-cell of Example I, except for using the electrolytic solution of Comparative Example 15.

(Evaluation Example 16: Cyclic Voltammetry Evaluation using A1 Working Electrode)

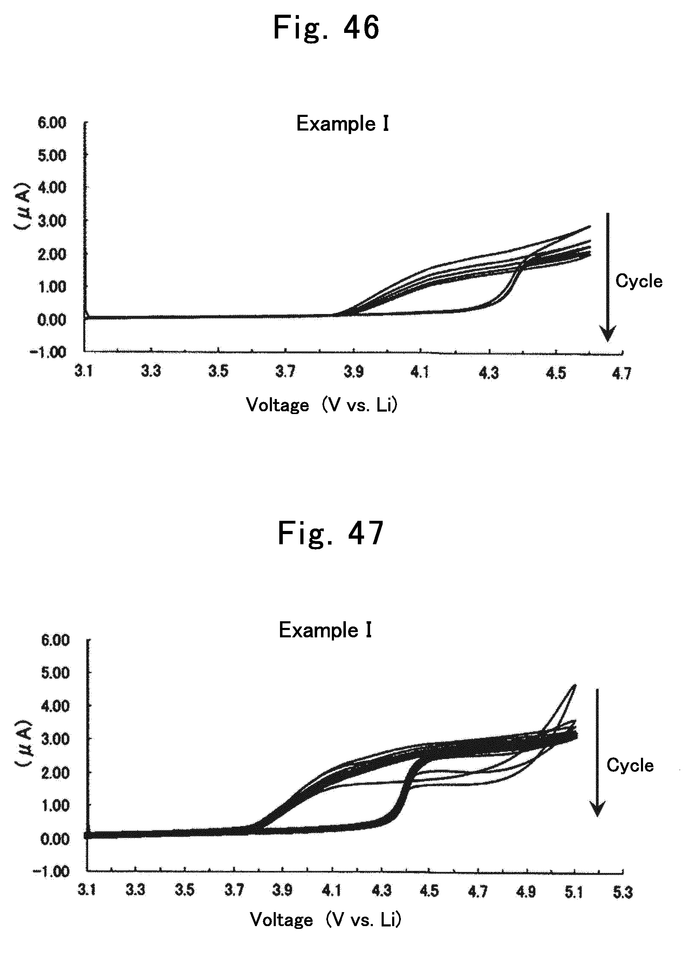

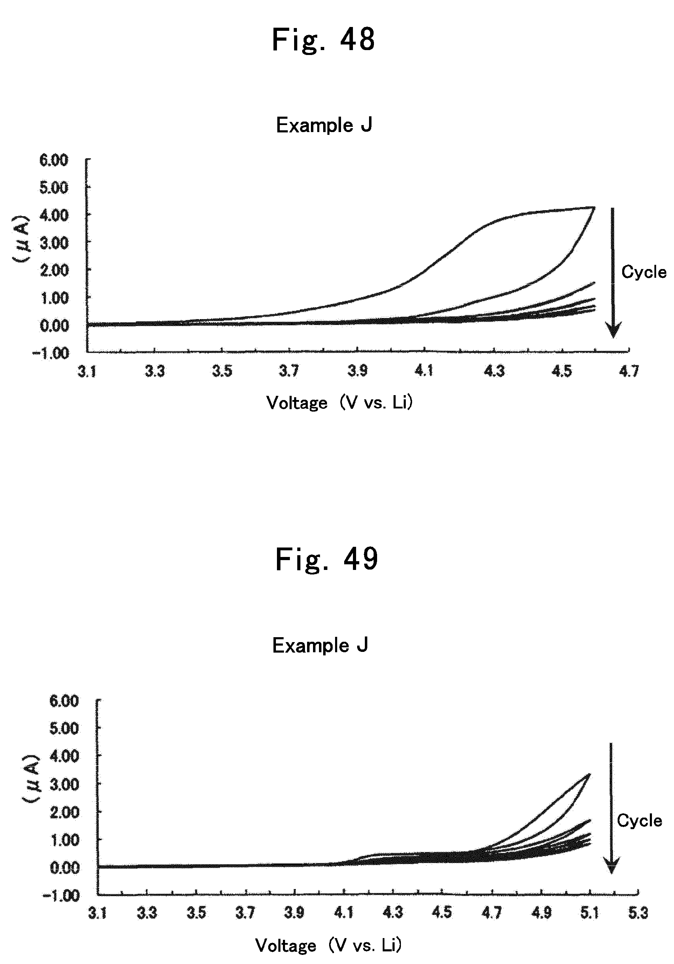

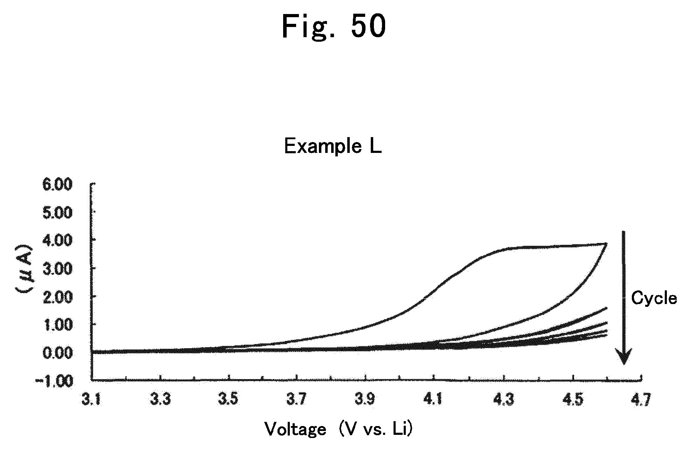

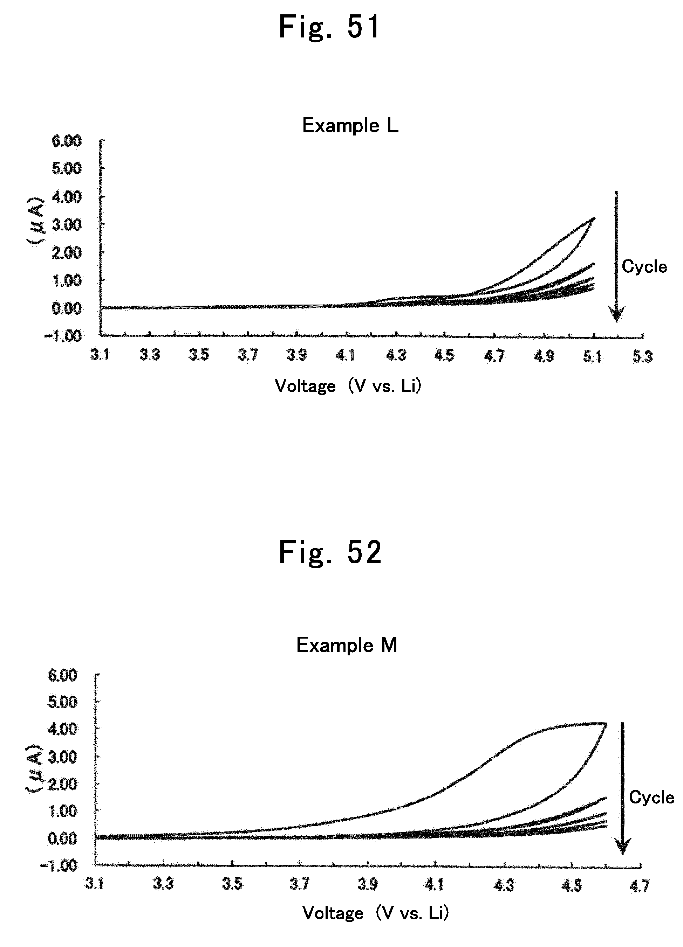

With respect to the half-cells of Examples I to J and L to M and Comparative Example F, 5 cycles of cyclic voltammetry evaluation were performed with a condition of 1 mV/s in a range of 3.1 V to 4.6V. Then, 5 cycles of cyclic voltammetry evaluation were performed with a condition of 1 mV/s in a range of 3.1 V to 5.1 V. Figs. 46 to Fig. 54 show graphs showing the relationship between potential and response current in the half-cells of Examples I to J and L to M and Comparative Example F.

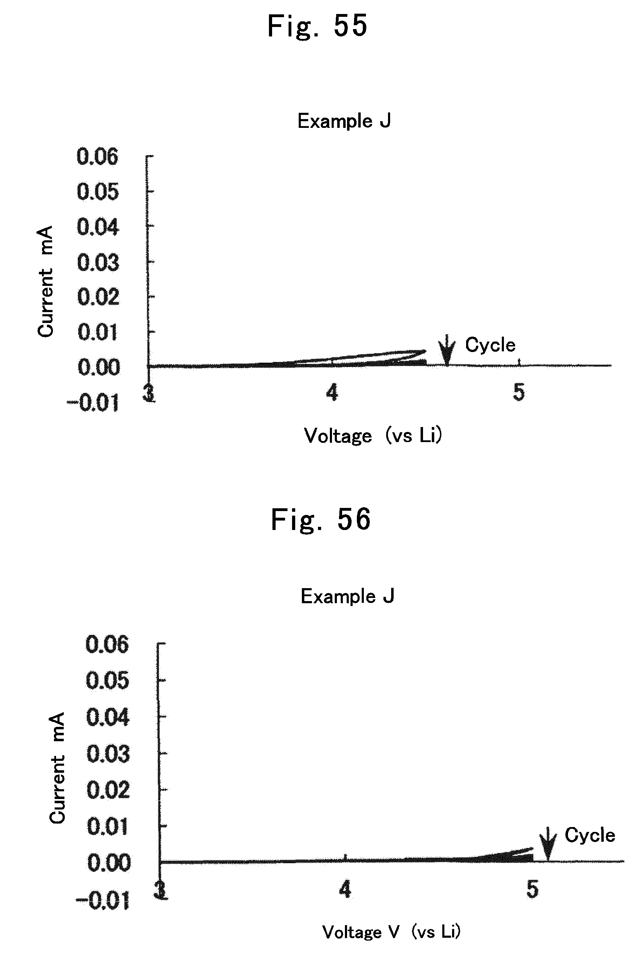

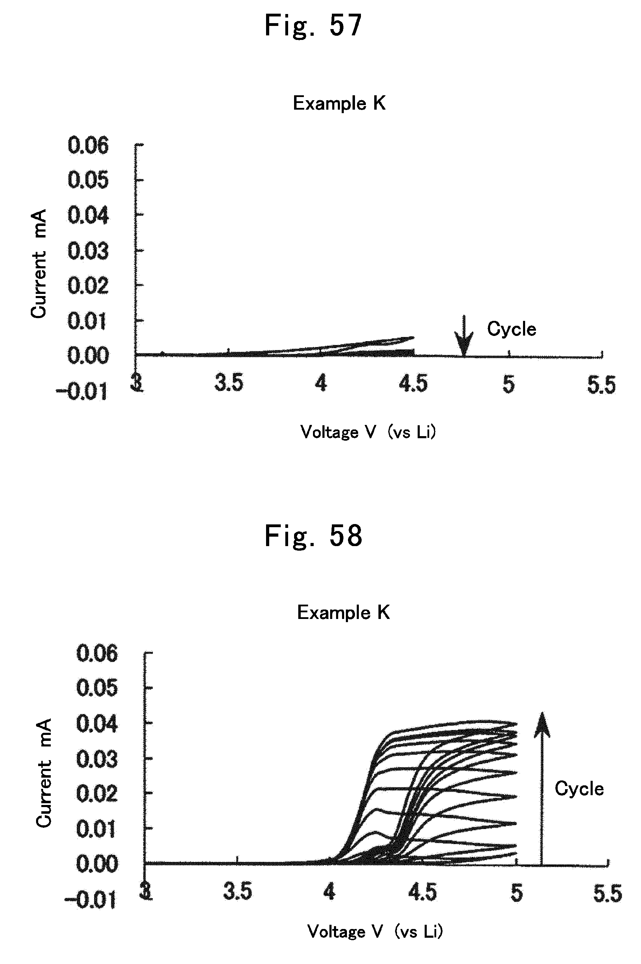

With respect to the half-cells of Examples J and K and Comparative Example G, 10 cycles of cyclic voltammetry evaluation were performed with a condition of 1 mV/s in a range of 3.0 V to 4.5 V. Then, 10 cycles of cyclic voltammetry evaluation were performed with a condition of 1 mV/s in a range of 3.0 V to 5.0 V. Figs. 55 to Fig. 60 show graphs showing the relationship between potential and response current in the half-cells of Examples J and K and Comparative Example G.

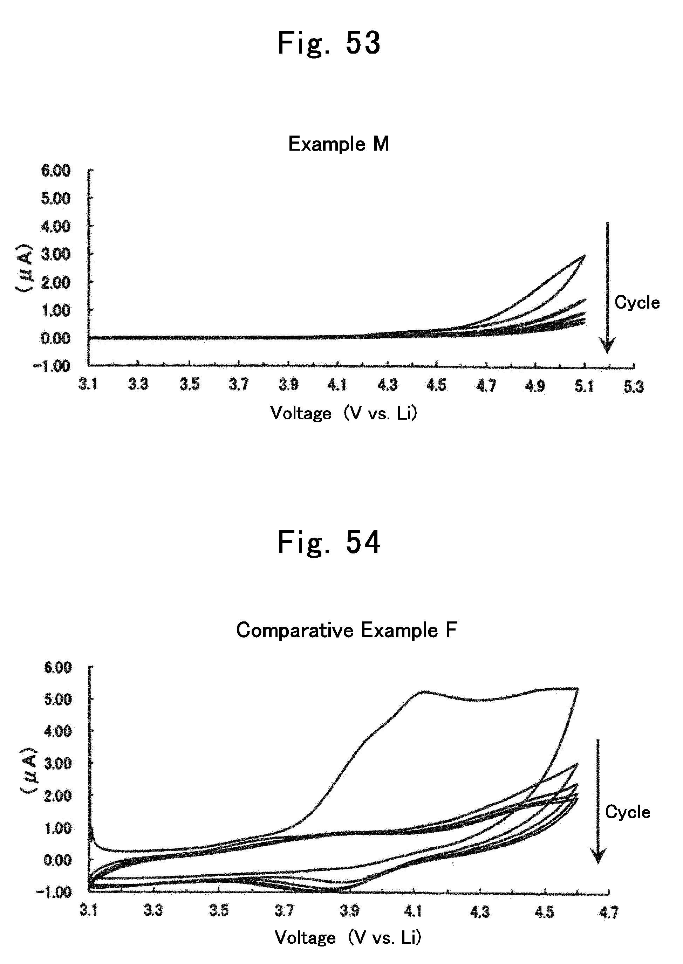

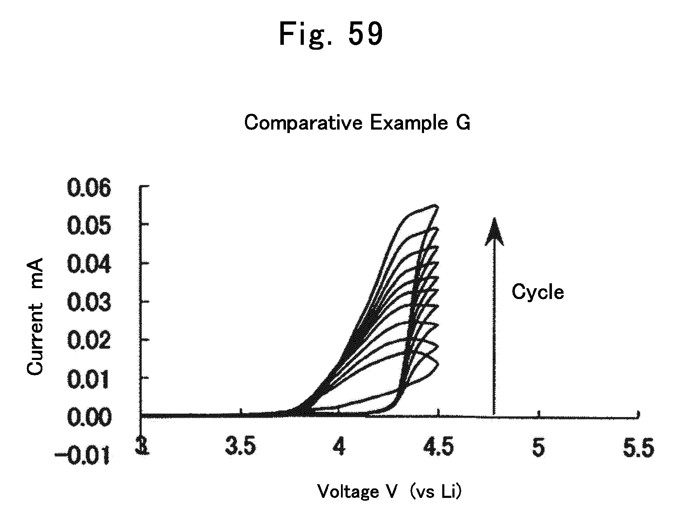

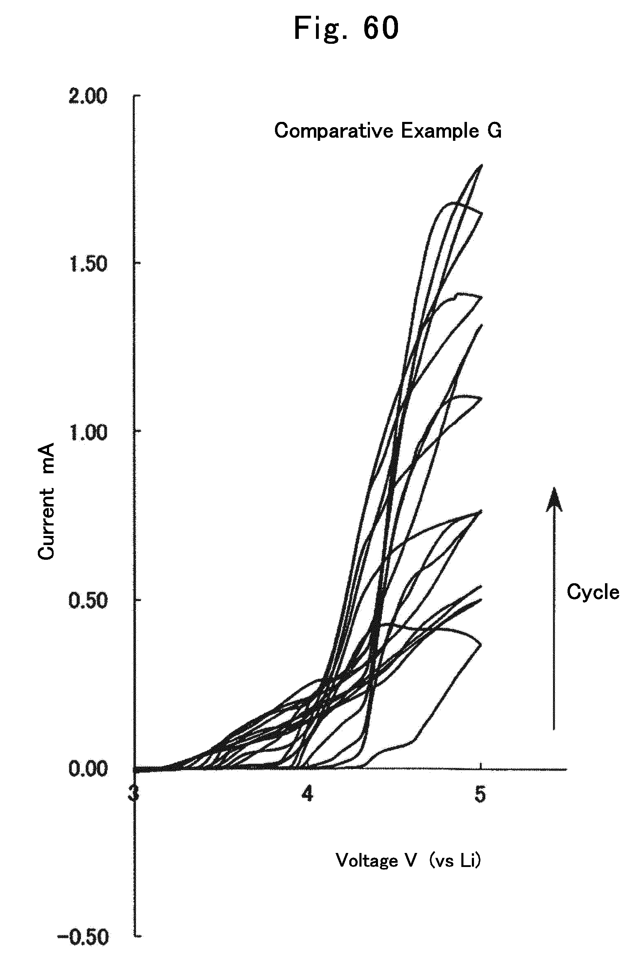

From Fig. 54, with the half-cell of Comparative Example F, current is understood to be flowing in a range of 3.1 V to 4.6 V during and after the second cycle, and the current is understood to increase as the potential became higher. In addition, from Figs. 59 and 60, also with the half-cell of Comparative Example G, current flowed in a range of 3.0 V to 4.5 V during and after the second cycle, and current increased as the potential became higher. This current is estimated to be a current resulting from oxidation of Al, generated through corrosion of aluminum of the working electrode.

On the other hand, from Figs. 46 to 53, with the half-cells of Examples I to J and L to M, almost no current is understood as to flow in a range of 3.1 V to 4.6 V during and after the second cycle. Although a slight increase in current was observed associated with an increase in potential in a range equal to or higher than 4.3 V, the amount of current decreased and became steady as the cycle was repeated. Particularly in the half-cells of Examples J and L to M, a significant increase in current was not observed up to a high potential of 5.1 V, and a decrease in the amount of current associated with repeated cycles was observed.

Inaddition, from Figs. 55 to 58, similarlywith the half-cells of Examples J and K, almost no current is understood as to flow in a range of 3.0 V to 4.5 V during and after the second cycle. In particular, during and after the third cycle, almost no increase in current was observed until reaching 4.5 V. Although an increase in current beyond a high potential of 4.5 V was observed in the half-cell of Example K, the value was much smaller when compared to a current value beyond 4.5 V in the half-cell of Comparative Example G. In the half-cell of Example J, almost no increase in current was observed beyond 4.5 V up to 5.0 V, and a decrease in the amount of current associated with repeated cycles was observed.

From the results of cyclic voltammetry evaluation, corrosiveness of respective electrolytic solutions of Examples 13, 15, 17, 20, and 23 with respect to aluminum is considered to be low even at a high potential condition exceeding 5 V. Thus, respective electrolytic solutions of Examples 13, 15, 17, 20, and 23 are considered as electrolytic solutions suitable for a capacitor and a battery using aluminum as a current collector or the like.

(Example N)

A lithium ion secondary battery of Example N was obtained with a method similar to that in Example A, except for using the electrolytic solution of Example 12 as the electrolytic solution.

(Comparative Example H)

A lithium ion secondary battery of Comparative Example H was obtained with a method similar to that in Example N, except for using the electrolytic solution of Comparative Example 18 as the electrolytic solution.

(Evaluation Example 17: Rate Characteristics at Low Temperature)

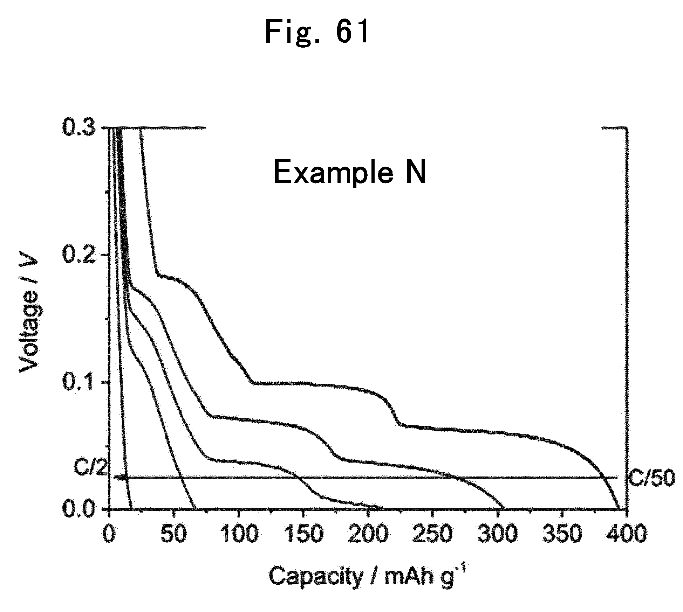

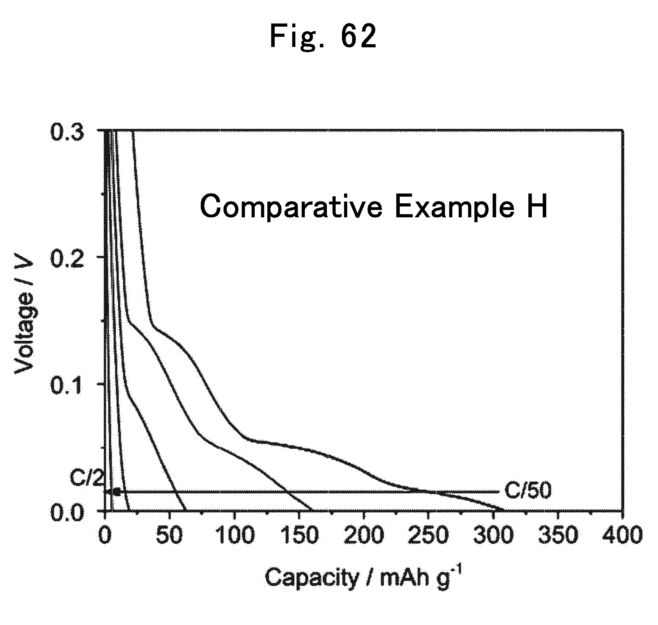

By using the lithium ion secondary batteries of Example N and Comparative Example H, rate characteristics at -20°C were evaluated in the following manner. The results are shown in Figs. 61 and 62.

(1) Current is supplied in a direction that causes occlusion of lithium to the negative electrode (evaluation electrode).
(2) Voltage range: From 2 V down to 0.01 V (v.s. Li/Li$^+$)

(3) Rate: 0.02C, 0.05C, 0.1C, 0.2C, and 0.5C (stop current after reaching 0.01 V)

1C represents a current value required for fully charging or discharging a battery in 1 hour under constant current.

Based on Figs. 61 and 62, voltage curves of the lithium ion secondary battery of Example N are understood as to show high voltage at each of the current rates when compared to voltage curves of the lithium ion secondary battery of Comparative Example H. Under presence of the electrolytic solution of the present invention, the graphite-containing electrode was confirmed to show excellent rate characteristics even in a low-temperature environment. Thus, the lithium ion capacitor and the lithium ion secondary battery using the electrolytic solution of the present invention were confirmed to show excellent rate characteristics even in a low-temperature environment.

(Example O)

A lithium ion secondary battery of Example O using the electrolytic solution of Example 13 was produced in the following manner.

90 parts by mass of a lithium-containing metal oxide that has a layered rock salt structure and is represented by $LiNi_{5/10}Co_{2/10}Mn_{3/10}O_2$, which is a positive electrode active material, 8 parts by mass of acetylene black, which is a conductive additive, and 2 parts by mass of polyvinylidene fluoride which is a binding agent, were mixed. The mixture was dispersed in a proper amount of N-methyl-2-pyrrolidone to create a slurry. As the positive electrode current collector, an aluminum foil having a thickness of 20 μm was prepared. The slurry was applied in a film form on the surface of the aluminum foil by using a doctor blade. The aluminum foil on which the slurry was applied was dried for 20 minutes at 80°C to remove N-methyl-2-pyrrolidone through volatilization. Then, the aluminum foil was pressed to obtain a joined object. The obtained joined object was heated and dried in a vacuum dryer for 6 hours at 120°C to obtain an aluminum foil having the positive electrode active material layer formed thereon. This was used as the positive electrode.

98 parts by mass of a natural graphite, which is a negative electrode active material, and 1 part by mass of a styrene butadiene rubber and 1 part by mass of carboxymethyl cellulose, which are binding agents, were mixed. The mixture was dispersed in a proper amount of ion exchanged water to create a slurry. As the negative electrode current collector, a copper foil having a thickness of 20 μm was prepared. The slurry was applied in a film form on the surface of the copper foil by using a doctor blade. The copper foil on which the slurry was applied was dried to remove water, and then the copper foil was pressed to obtain a joined object. The obtained joined object was heated and dried in a vacuum dryer for 6 hours at 100°C to obtain a copper foil having the negative electrode active material layer formed thereon. This was used as the negative electrode.

As the separator, a nonwoven fabric made from cellulose and having a thickness of 20 μm was prepared.

An electrode assembly was f ormedby sandwiching the separator between the positive electrode and the negative electrode. The electrode assembly was covered with a set of two sheets of a laminate film. The laminate film was formed into a bag-like shape by having three sides thereof sealed, and the electrolytic solution of Example 13 was poured in the laminate film. Four sides were sealed airtight by sealing the remaining one side to obtain a lithium ion secondary battery in which the electrode assembly and the electrolytic solution were sealed. This battery was used as the lithium ion secondary battery of Example O.

(Example P)

A lithium ion secondary battery of Example P was obtained with a method similar to that in Example O, except for using the electrolytic solution of Example 15 as the electrolytic solution.

(Example Q)

A lithium ion secondary battery of Example Q was obtained with a method similar to that in Example O, except for using the electrolytic solution of Example 17 as the electrolytic solution.

(Comparative Example I)

A lithium ion secondary battery of Comparative Example I was obtained with a method similar to that in Example O, except for using the electrolytic solution of Comparative Example 18 as the electrolytic solution.

(Evaluation Example 18: Internal Resistance of Battery)

The lithium ion secondary batteries of Examples O to Q and Comparative Example I were prepared, and internal resistances of the batteries were evaluated.

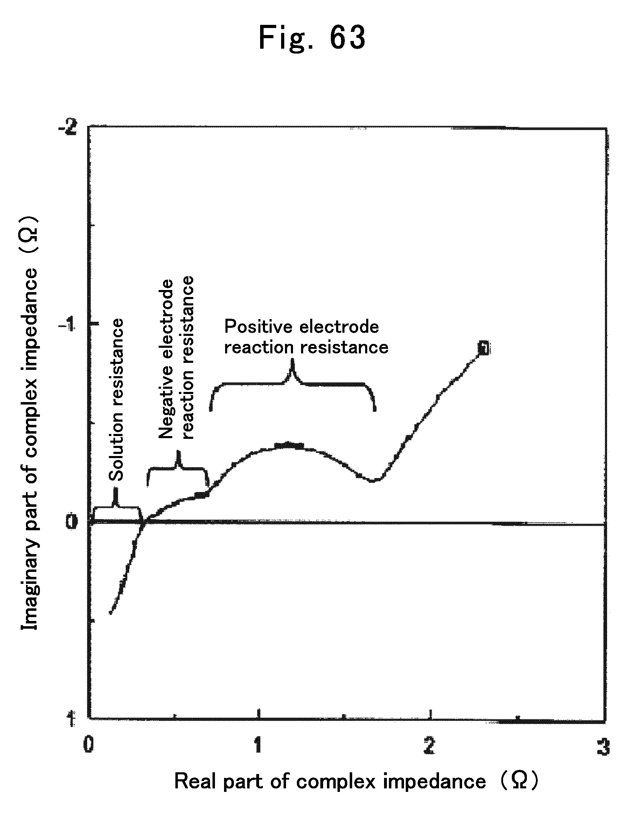

With each of the lithium ion secondary batteries, CC charging and discharging, i.e., constant current charging and discharging, were repeated at room temperature in a range of 3.0 V to 4.1 V (vs. Li reference). Then, an alternating current impedance after the first charging and discharging and an alternating current impedance after 100 cycles were measured. Based on obtained complex impedance planar plots, reaction resistances of electrolytic solutions, negative electrodes, and positive electrodes were each analyzed. As shown in Fig. 63, two circular arcs were observed in a complex impedance planar plot. A circular arc on the left side of the figure (i.e., a side in which the real part of complex impedance is smaller) is referred to as a first circular arc. A circular arc on the right side of the figure is referred to as a second circular arc. Reaction resistance of a negative electrode was analyzed based on the size of the first circular arc, and reaction resistance of a positive electrode was analyzed based on the size of the second circular arc. Resistance of an electrolytic solution was analyzed based on a plot continuing from the first circular arc toward the leftmost side in Fig. 63. The analysis results are shown in Tables 17 and 18. Table 17 shows a resistance of an electrolytic solution (i.e., solution resistance), a reaction resistance of a negative electrode, and a reaction resistance of a positive electrode after the first charging and discharging. Table 18 shows respective resistances after 100 cycles.

[Table 17]

| <Beginning alternating-current resistance> | | | Unit: Ω | |
|---|---|---|---|---|
| | Example O | Example P | Example Q | Comparative Example I |
| Electrolytic solution | Example 13 | Example 15 | Example 17 | Comparative Example 18 |
| Organic solvent | AN | DMC | DMC | EC/DEC |
| Metal salt | LiFSA | LiFSA | LiFSA | LiPF$_6$ |
| Solution resistance | 0.3 | 0.5 | 0.4 | 0.3 |
| Negative-electrode reaction resistance | 0.4 | 0.5 | 0.4 | 0.4 |
| Positive-electrode reaction resistance | 0.1 | 0.5 | 0.5 | 1.0 |

[Table 18]

| <Alternating-current resistance after 100 cycles> | | | Unit: Ω | |
|---|---|---|---|---|
| | Example O | Example P | Example Q | Comparative Example 1 |
| Electrolytic solution | Example 13 | Example 15 | Example 17 | Comparative Example 18 |
| Organic solvent | AN | DMC | DMC | EC/DEC |
| Metal salt | LiFSA | LiFSA | LiFSA | LiPF$_6$ |
| Solution resistance | 0.3 | 0.5 | 0.3 | 0.3 |
| Negative-electrode reaction resistance | 0.2 | 0.4 | 0.3 | 0.4 |
| Positive-electrode reaction resistance | 0.3 | 0.2 | 0.2 | 0.6 |
| Durability | A | AA | AA | B |

As shown in Tables 17 and 18, in each of the lithium ion secondary batteries, the reaction resistances of the negative and positive electrodes tended to decrease after 100 cycles when compared to respective resistances after the first charging and discharging. After 100 cycles as shown in Table 18, the reaction resistances of the negative and positive electrodes of the lithium ion secondary batteries of Examples O to Q were lower when compared to the reaction resistances of the negative and positive electrodes of the lithium ion secondary battery of Comparative Example I.

The solution resistances of the electrolytic solutions in the lithium ion secondary battery of Examples O and Q and Comparative Example I were almost identical, whereas the solution resistance of the electrolytic solution in the lithium ion secondary battery of Example P was higher compared to those of Examples O and Q and Comparative Example I. In addition, the solution resistance of each of the electrolytic solutions of the lithium ion secondary batteries was comparable between after the first charging and discharging and after 100 cycles. Thus, deterioration in durability is considered not to be occurring in each of the electrolytic solutions. The difference that emerged between the reaction resistances of the negative and positive electrodes in the Comparative Examples and Examples is considered to be occurring in the electrode itself and not related to deterioration in durability of the electrolytic solution.

Internal resistance of a lithium ion secondary battery is comprehensively determined from a solution resistance of an electrolytic solution, a reaction resistance of a negative electrode, and a reaction resistance of a positive electrode. Based on the results of Tables 17 and 18 and from a standpoint of suppressing an increase in internal resistance of a lithium ion secondary battery, the lithium ion secondary batteries of Examples P and Q are considered to excel the most in durability, and the lithium ion secondary battery of Example O is considered to excel the next in durability.

(Evaluation Example 19: Cycle Durability of Battery)

With the lithium ion secondary batteries of Examples O to Q and Comparative Example I, CC charging and discharging were repeated at room temperature in a range of 3.0 V to 4.1 V (vs. Li reference), and a discharge capacity at the first charging and discharging, a discharge capacity at the 100-th cycle, and a discharge capacity at the 500-th cycle were measured. When a capacity of each of the lithium ion secondary batteries at the first charging and discharging was defined as 100%, capacity retention rates (%) of each of the lithium ion secondary batteries at the 100-th cycle and the 500-th cycle were calculated. The results are shown in Table 19.

[Table 19]

| | Example O | Example P | Example Q | Comparative Example 1 |
|---|---|---|---|---|
| Electrolytic solution | Example 13 | Example 15 | Example 17 | Comparative Example 18 |
| Organic solvent | AN | DMC | DMC | EC/DEC |
| Metal salt | LiFSA | LiFSA | LiFSA | $LiPF_6$ |
| Capacity retention rate at 100th cycle (%) | 92 | 97 | 97 | 96 |
| Capacity retention rate at 500th cycle (%) | 67 | 90 | - | 85 |

As shown in Table 19, the lithium ion secondary batteries of Examples O to Q, even though not containing EC that becomes a material of SEI, showed a capacity retention rate at 100 cycles comparable to that of the lithium ion secondary battery of Comparative Example I containing EC. The reason may be that a coating originated from the electrolytic solution of the present invention exists on the positive electrode and the negative electrode of each of the lithium ion secondary batteries of Examples O to Q. The lithium ion secondary battery of Example P showed an extremely high capacity retention rate even after 500 cycles, and was particularly excellent in durability. From this result, durability is considered to improve more when DMC is selected as the organic solvent of the electrolytic solution compared to when AN is selected.

(Example R)

A capacitor of the present invention was produced in the following manner.
As a positive electrode and a negative electrode of the capacitor of the present invention, MDLC-105N2 manufactured by Hohsen Corp., was used. A coin type cell was produced with a glass filter impregnated with the electrolytic solution of Example 11, the positive electrode, and the negative electrode. This cell was used as the capacitor of Example R. The positive electrode and the negative electrode were vacuum dried at 120°C for 24 hours before being used for producing the cell. The production of the cell was performed within a glovebox with an inert gas atmosphere adjusted to have a dew point not higher than -70°C.

(Comparative Example J)

A capacitor of Comparative Example J was produced with a method similar to that in Example R except for using 1-ethyl-3-methylimidazolium bis(fluorosulfonyl)amide as the electrolytic solution.

(Evaluation Example 20)

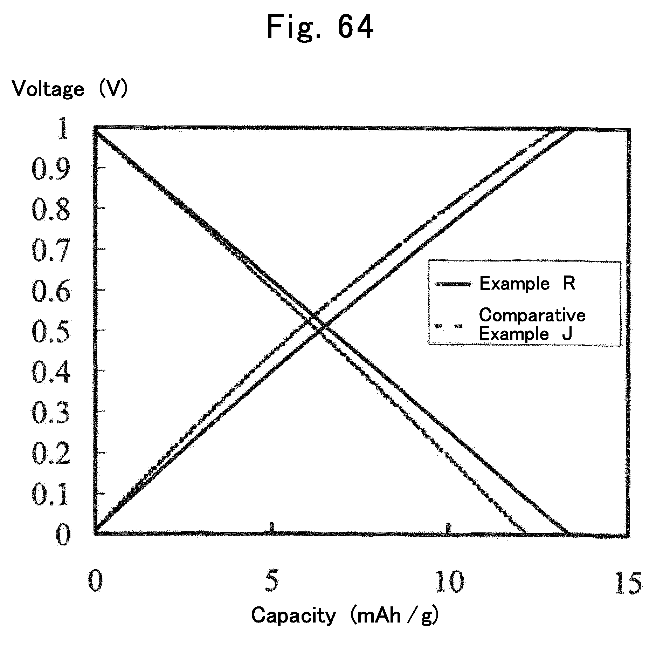

The following test was performed on the capacitors of Example R and Comparative Example J.
With respect to each of the capacitors, as conditioning, charging and discharging were performed for 10 times at a current density of 100 mA/g and cut-off voltages of 0 to 1 V. Fig. 64 shows final charging/discharging curves of the conditioning for each of the capacitors.
Based on Fig. 64, the capacitor of Example R is understood as to have a large capacity when compared to the capacitor of Comparative Example J.

In addition, with respect to the capacitors of Example R and Comparative Example J obtained through charging and discharging described above, charging and discharging were performed at a current density of 100, 500, 1000, or 2000 mA/g and cut-off voltages of 0 to 2 V. The results are shown in Table 20.

[Table 20]

|  | Current density (mA/g) | Discharge capacity (mAh/g) | Charge capacity (mAh/g) |
|---|---|---|---|
| Example R | 100 | 29 | 30 |
| | 500 | 26 | 27 |
| | 1000 | 24 | 24 |
| | 2000 | 20 | 20 |
| Comparative Example J | 100 | 29 | 29 |
| | 500 | 27 | 27 |
| | 1000 | 23 | 22 |
| | 2000 | 16 | 18 |

The capacitor of Example R showed a capacity comparable to or larger than the capacitor of Comparative Example J. In particular, the capacitor of Example R showed a sufficient capacity also for charging and discharging at a high rate.

(Example S)

As a positive electrode and a negative electrode of a capacitor, MDLC-105N2 manufactured by Hohsen Corp., was prepared. A coin type cell was produced with the electrolytic solution of Example 26, a cellulose nonwoven fabric having a thickness of 20 $\mu$m, the positive electrode, and the negative electrode. This cell was used as the capacitor of Example S. The positive electrode and the negative electrode were vacuum dried at 120°C for 24 hours before being used for producing the cell. The production of the cell was performed within a glovebox with an inert gas atmosphere adjusted to have a dew point not higher than -70°C.

(Comparative Example K)

A capacitor of Comparative Example K was produced with a method similar to that in Example S except for using 1-ethyl-3-methylimidazolium bis(fluorosulfonyl)imide as the electrolytic solution.

(Evaluation Example 21)

The following test was performed on the capacitors of Example S and Comparative Example K.

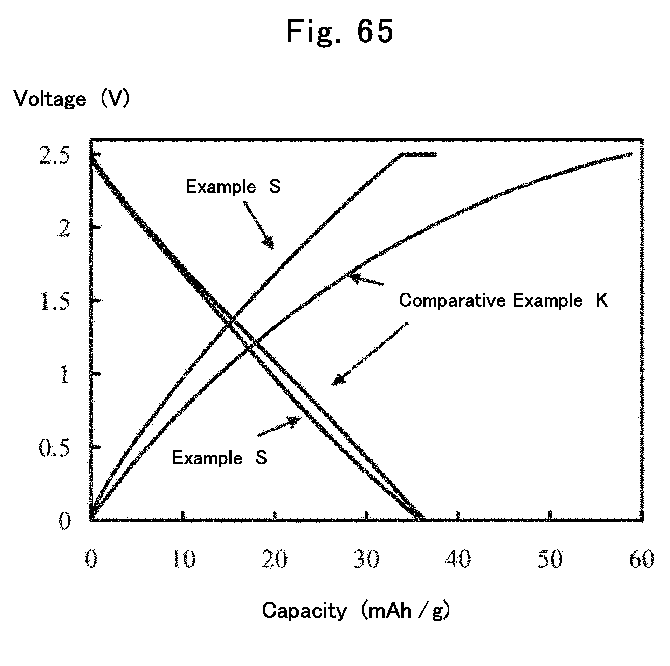

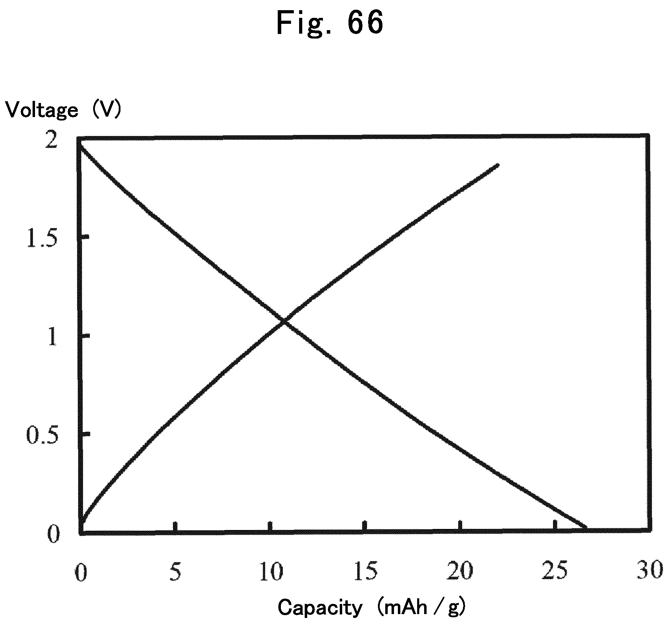

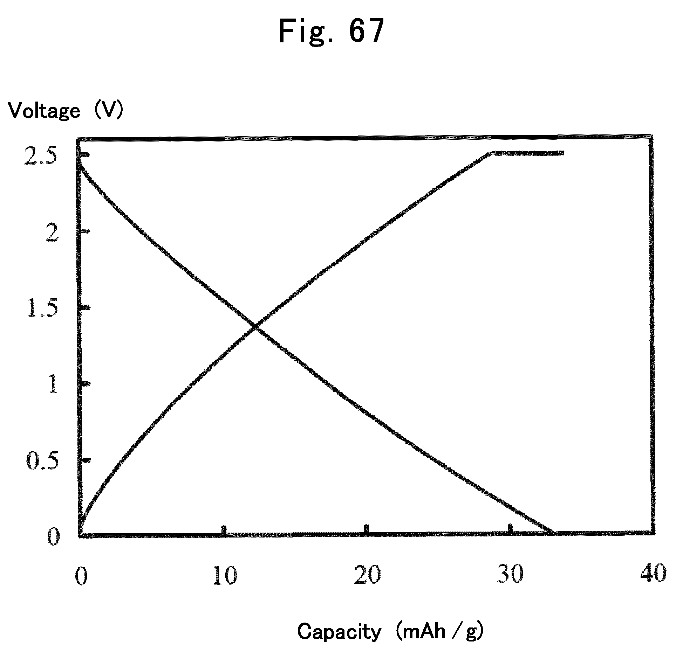

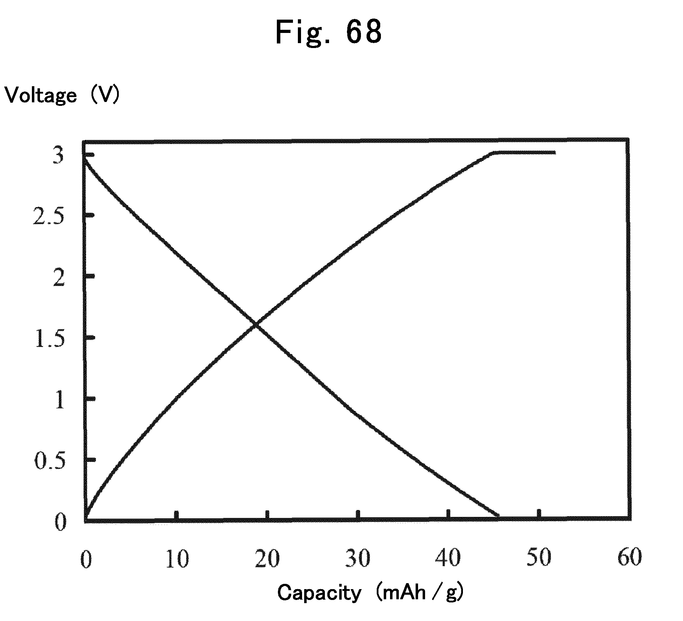

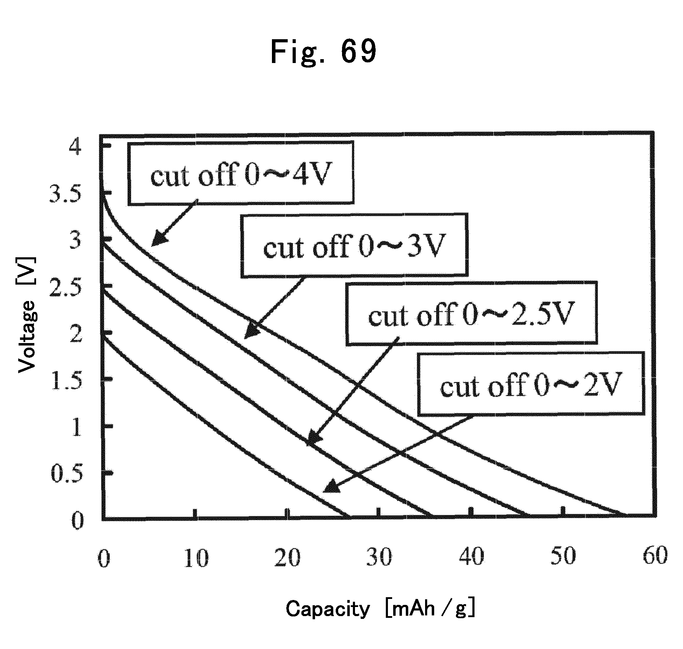

With respect to each of the capacitors, charging and discharging were performed for 10 times at a current density of 100 mA/g and cut-off voltages of 0 to 1 V. With respect to each of the capacitors obtained through charging and discharging described above, charging and discharging were performed at a current density of 100 mA/g and cut-off voltages of 0 to 2.5 V. The results are shown in Fig. 65 and Table 21. Charging/discharging efficiency refers to a proportion of discharge capacity with respect to charge capacity. In a manner similar to that described above, with respect to the capacitor of Example S, charging and discharging were performed at cut-off voltages of 0 to 2 V, 0 to 2.5 V, 0 to 3 V, or 0 to 4 V and a current density of 100 mA/g. For the cut-off voltages of 0 to 2 V, 0 to 2.5 V, and 0 to 3 V; respective charging/discharging curves are shown in Figs. 66 to 68, respective discharging curves are shown in Fig. 69, and respective discharge capacities are shown in Table 22.

[Table 21]

|  | Discharge capacity (mAh/g) | Charge capacity (mAh/g) | Charging/Discharging efficiency (%) |
|---|---|---|---|
| Example S | 33 | 33 | 100 |

(continued)

|  | Discharge capacity (mAh/g) | Charge capacity (mAh/g) | Charging/Discharging efficiency (%) |
|---|---|---|---|
| Comparative Example K | 35 | 58 | 57 |

Based on Fig. 65, the charging curves of the capacitor of Comparative Example K are seen as to deviate from a straight line part way through the charging. In the charging curves, particularly after the voltage exceeds about 2 V, since the slopes of the charging curves became small, the voltage is understood as to not increase easily. This phenomenon is estimated to be due to applied current being used for undesired irreversible reactions such as degradation of the electrolytic solution. Furthermore, based on the results in Table 21, the charging/discharging efficiency of the capacitor of Comparative Example K is understood as to be inferior. On the other hand, since the charging curves were straight lines and the charging/discharging efficiencies were 100% for the capacitor of Example S, applied current is considered to act as capacitor capacity and not used for irreversible reactions such as degradation of the electrolytic solution in the capacitor of the Example S. Thus, the capacitor of Example S is considered as to operate stably.

[Table 22]

|  | Voltage | Discharge capacity (mAh/g) |
|---|---|---|
| Example S | 0 to 2V | 27 |
|  | 0 to 2.5V | 33 |
|  | 0 to 3V | 46 |
|  | 0 to 4V | 56 |

As shown in Figs. 66 to 69, the capacitor of Example S operated suitably at respective potentials. The capacitor of Example S operating suitably also at a charging potential of 4 V is particularly noteworthy. Based on the results in Table 22, the discharge capacity of the capacitor of Example S is understood as to increase suitably as the charging potential increases.

(Example T)

A lithium ion capacitor of the present invention was produced in the following manner.
A negative electrode was produced as described in the following.
A natural graphite, polyvinylidene fluoride, and N-methyl-2-pyrrolidone were added and mixed to prepare a negative electrode mixture material in a slurry form. The composition ratio of each component (solid content) in the slurry was graphite : polyvinylidene fluoride = 90:10 (mass ratio).
When Raman spectrum analysis (device: RMP-320 manufactured by JASCO Corp., excitation wavelength: $\lambda$ = 532 nm, grating: 1800 gr/mm, resolution: 3 cm$^{-1}$) was performed on a powder of the natural graphite used here, the G/D ratio , which is the intensity ratio of G-band and D-band peaks in the obtained Raman spectrum, was 12.3.
The negative electrode mixture material in the slurry form was applied on the surface of an electrolytic copper foil (current collector) having a thickness of 20 $\mu$m using a doctor blade to form a negative electrode active material layer on the copper foil. Then, the organic solvent was removed from the negative electrode active material layer through volatilization by drying the negative electrode active material layer at 80°C for 20 minutes. After the drying, the current collector and the negative electrode active material layer were attached firmly and joined by using a roll press machine. The obtained joined object was vacuum dried at 120 °C for 6 hours to form a negative electrode whose weight per area and density of the negative electrode active material layer were 0.9 mg/cm2 and 0.5 g/cm$^3$, respectively.
A cell was produced from the negative electrode, the electrolytic solution of Example 15, a cellulose nonwoven fabric having a thickness of 20 $\mu$m, and a positive electrode identical to the positive electrode of the capacitor of Example R. This cell was used as the lithium ion capacitor of Example T.

(Evaluation Example 22)

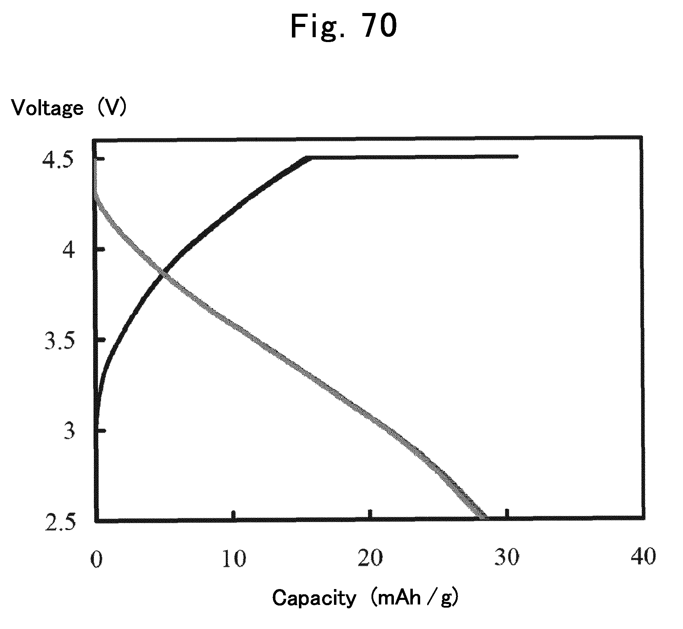

The following test was performed on the lithium ion capacitor of Example T.
With respect to the capacitor, charging and discharging were performed at a current density of 20 mA/g and cut-off voltages of 0 to 1 V until a charging/discharging curve stabilized. With respect to the capacitor obtained through charging and discharging described above, charging and discharging involving charging at a current density of 20 mA/g up to 4.5 V, maintaining the voltage of 4.5 V for 2 hours, and then discharging at a current density of 20 mA/g down to 2.5 V was performed multiple times until the charging/discharging curve of the capacitor stabilized. A curve of the last charging/discharging is shown in Fig. 70.

Based on the charging/discharging curve in Fig. 70, the lithium ion capacitor of Example T is understood as to operate suitably as a lithium ion capacitor at high potential. In the lithium ion capacitor of Example T, a graphite is used for the negative electrode, and the electrolytic solution of the present invention containing the lithium salt at a high concentration is used. Generally in a lithium ion capacitor using a graphite for the negative electrode, in order to lower the potential thereof, the negative electrode is considered necessary to be in a state pre-doped with lithium ions. However, the lithium ion capacitor of Example T using the electrolytic solution of the present invention operated stably as a lithium ion capacitor at high potential even though the graphite of the negative electrode was not pre-doped with lithium ions. This is considered a result of the graphite of the negative electrode being gradually doped with lithium ions in the electrolytic solution, due to having the lithium ion capacitor operate at a high potential under an environment where the electrolytic solution of the present invention in which lithium ions exist excessively than a conventional electrolytic solution is used. Thus, the lithium ion capacitor of the present invention has an advantage of not requiring pre-doping with external lithium. As shown in Example U in the following, the lithium ion capacitor of the present invention is produced even when lithium pre-doping, conducted on ordinary lithium ion capacitors, is performed.

As described above, by using the electrolytic solution of the present invention in the lithium ion capacitor using a graphite for the negative electrode, lithium ions in the electrolytic solution of the present invention become inserted in the graphite through charging and discharging and the negative electrode potential of the capacitor becomes lower, thus proving a lithium ion capacitor is obtained even without doping the graphite with lithium ions in advance. Graphites are widely known to cause insertion and elimination of cations and anions contained in an electrolytic solution depending on the potential. Thus, a type of a capacitor in which anions are inserted to and eliminated from a positive electrode, i.e., a capacitor using a graphite for the positive electrode, may be provided.

(Example U)

A lithium ion capacitor of the present invention obtained through lithium pre-doping, which is ordinarily conducted on lithium ion capacitors, is produced in the following manner.

A negative electrode is produced as described in the following.

A natural graphite, polyvinylidene fluoride, and N-methyl-2-pyrrolidone are added and mixed to prepare a negative electrode mixture material in a slurry form. The composition ratio of each component (solid content) in the slurry is graphite : polyvinylidene fluoride = 90:10 (mass ratio).

The negative electrode mixture material in the slurry form is applied on the surface of an electrolytic copper foil (current collector) having a thickness of 20 $\mu$m using a doctor blade to form a negative electrode active material layer on the copper foil. The obtained negative electrode active material layer is dried at 80°C for 20 minutes to remove the organic solvent from the negative electrode active material layer through volatilization. After the drying, the current collector and the negative electrode active material layer are attached firmly and joined by using a roll press machine. The obtained joined object is vacuum dried at 120°C for 6 hours to form a negative electrode whose weight per area and density of the negative electrode active material layer are 0.9 mg/cm$^2$ and 0.5 g/cm$^3$, respectively. Metal lithium is compressed and bonded to the negative electrode active material layer of the negative electrode. By using the bonded object, the electrolytic solution of Comparative Example 18, and a carbon electrode known in the art, a cell is produced and used as a cell for lithium pre-doping. The cell for lithium pre-doping is charged and discharged for several cycles. The cell at a discharged state (a state in which the negative electrode active material is doped with lithium) is disassembled, and a lithium pre-doped negative electrode is extracted.

A cell is produced from the lithium pre-doped negative electrode, a glass filter impregnated with the electrolytic solution of Example 15, and a positive electrode identical to the positive electrode of the capacitor of Example R. This cell is used as the lithium ion capacitor of Example U.

**Claims**

1. An electrolytic solution comprising a salt whose cation is an alkali metal, an alkaline earth metal, or aluminum, and an organic solvent having a heteroelement, wherein
regarding an intensity of a peak derived from the organic solvent in a vibrational spectroscopy spectrum of the electrolytic solution, Is>Io is satisfied when an intensity of an original peak of the organic solvent is represented as Io and an intensity of a peak resulting from shifting of the original peak is represented as Is.

2.  An electrolytic solution comprising a salt whose cation is an alkali metal, an alkaline earth metal, or aluminum, and an organic solvent having a heteroelement, wherein
    d/c obtained by dividing a density d ($g/cm^3$) of the electrolytic solution by a salt concentration c (mol/L) of the electrolytic solution satisfies $0.15 \le d/c \le 0.71$.

3.  An electrolytic solution comprising a salt whose cation is an alkali metal, an alkaline earth metal, or aluminum, and an organic solvent having a heteroelement, wherein
    a viscosity $\eta$ (mPa ·s) of the electrolytic solution satisfies $10 < \eta < 500$, and an ionic conductivity $\sigma$ (mS/cm) of the electrolytic solution satisfies $1 \le \sigma$.

4.  The electrolytic solution according to any one of claims 1 to 3, wherein the cation of the salt is lithium.

5.  The electrolytic solution according to any one of claims 1 to 4, wherein a chemical structure of an anion of the salt includes at least one element selected from a halogen, boron, nitrogen, oxygen, sulfur, or carbon.

6.  The electrolytic solution according to any one of claims 1 to 5, wherein a chemical structure of an anion of the salt is represented by general formula (1), general formula (2), or general formula (3) below:

    $$(R^1X^1)(R^2X^2)N \qquad \text{General Formula (1)}$$

    ($R^1$ is selected from: hydrogen; a halogen; an alkyl group optionally substituted with a substituent group; a cycloalkyl group optionallysubstituted with a substituent group; an unsaturated alkyl groupoptionallysubstituted with a substituent group; an unsaturated cycloalkyl group optionally substituted with a substituent group; an aromatic group optionally substituted with a substituent group; a heterocyclic groupoptionallysubstituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; CN; SCN; or OCN.
    $R^2$ is selected from: hydrogen; a halogen; an alkyl group optionally substituted with a substituent group; a cycloalkyl group optionallysubstituted with a substituent group; an unsaturated alkyl groupoptionallysubstituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; CN; SCN; or OCN.
    $R^1$ and $R^2$ optionally bind with each other to form a ring.
    $X^1$ is selected from $SO_2$, C=O, C=S, $R^aP$=O, $R^bP$=S, S=O, or Si=O.
    $X^2$ is selected from $SO_2$, C=O, C=S, $R^cP$=O, $R^dP$=S, S=O, or Si=O.
    $R^a$, $R^b$, $R^c$, and $R^d$ are each independently selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; OH; SH; CN; SCN; or OCN.
    $R^a$, $R^b$, $R^c$, and $R^d$ each optionally bind with $R^1$ or $R^2$ to form a ring.);

    $$R^3X^3Y \qquad \text{General Formula (2)}$$

    ($R^3$ is selected from: hydrogen; a halogen; an alkyl group optionally substituted with a substituent group; a cycloalkyl group optionallysubstituted with a substituent group; an unsaturated alkyl group optionally substituted with a substituent group; an unsaturated cycloalkyl group optionally substituted with a substituent group; an aromatic group optionally substituted with a substituent group; a heterocyclic groupoptionallysubstituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; CN; SCN; or OCN.

$X^3$ is selected from $SO_2$, C=O, C=S, $R^eP=O$, $R^fP=S$, S=O, or Si=O.

$R^e$ and $R^f$ are each independently selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; OH; SH; CN; SCN; or OCN.

$R^e$ and $R^f$ each optionally bind with $R^3$ to form a ring.

Y is selected from O or S.); and

$$(R^4X^4) (R^5X^5) (R^6X^6)C \qquad \text{General Formula (3)}$$

($R^4$ is selected from: hydrogen; a halogen; an alkyl group optionally substituted with a substituent group; a cycloalkyl group optionallysubstituted with a substituent group; an unsaturated alkyl group optionally substituted with a substituent group; an unsaturated cycloalkyl group optionally substituted with a substituent group; an aromatic group optionally substituted with a substituent group; a heterocyclic groupoptionallysubstituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; CN; SCN; or OCN.

$R^5$ is selected from: hydrogen; a halogen; an alkyl group optionally substituted with a substituent group; a cycloalkyl group optionallysubstituted with a substituent group; an unsaturated alkyl groupoptionallysubstituted with a substituent group; an unsaturated cycloalkyl group optionally substituted with a substituent group; an aromatic group optionally substituted with a substituent group; a heterocyclic groupoptionallysubstituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; CN; SCN; or OCN.

$R^6$ is selected from: hydrogen; a halogen; an alkyl group optionally substituted with a substituent group; a cycloalkyl group optionallysubstituted with a substituent group; an unsaturated alkyl groupoptionallysubstituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; CN; SCN; or OCN.

Any two or three of $R^4$, $R^5$, and $R^6$ optionally bind with each other to form a ring.

$X^4$ is selected from $SO_2$, C=O, C=S, $R^gP=O$, $R^hP=S$, S=O, or Si=O.

$X^5$ is selected from $SO_2$, C=O, C=S, $R^iP=O$, $R^jP=S$, S=O, or Si=O.

$X^6$ is selected from $SO_2$, C=O, C=S, $R^kP=O$, $R^1P=S$, S=O, or Si=O.

$R^g$, $R^h$, $R^i$, $R^j$, $R^k$, and $R^l$ are each independently selected from: hydrogen; a halogen; an alkyl group optionally substituted with a substituent group; a cycloalkyl group optionally substituted with a substituent group; an unsaturated alkyl group optionally substituted with asubstituentgroup;an unsaturated cycloalkyl group optionally substituted with a substituent group; an aromatic group optionallysubstituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; OH; SH; CN; SCN; or OCN.

$R^g$, $R^h$, $R^i$, $R^j$, $R^k$, and $R^l$ each optionally bind with $R^4$, $R^5$, or $R^6$ to form a ring.).

7. The electrolytic solution according to any one of claims 1 to 6, wherein a chemical structure of an anion of the salt is represented by general formula (4), general formula (5), or general formula (6) below:

$$(R^7X^7) (R^8X^8)N \qquad \text{General Formula (4)}$$

($R^7$ and $R^8$ are each independently $C_nH_aF_bCl_cBr_dI_e (CN)_f (SCN)_g (OCN)_h$.

"n," "a," "b," "c," "d," "e," "f," "g," and "h" are each independently an integer not smaller than 0, and satisfy 2n+1=a+b+c+d+e+f+g+h.

$R^7$ and $R^8$ optionally bind with each other to form a ring, and, in that case, satisfy 2n=a+b+c+d+e+f+g+h.

$X^7$ is selected from $SO_2$, C=O, C=S, $R^m$P=O, $R^n$P=S, S=O, or Si=O.

$X^8$ is selected from $SO_2$, C=O, C=S, $R^o$P=O, $R^p$P=S, S=O, or Si=O.

$R^m$, $R^h$, $R^o$, and $R^p$ are each independently selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; OH; SH; CN; SCN; or OCN.

$R^m$, $R^h$, $R^o$, and $R^p$ each optionally bind with $R^7$ or $R^8$ to form a ring.);

$R^9X^9Y$     General Formula (5)

($R^9$ is $C_nH_aF_bCl_cBr_dI_e(CN)_f(SCN)_g(OCN)_h$.

"n," "a," "b," "c," "d," "e," "f," "g," and "h" are each independently an integer not smaller than 0, and satisfy 2n+1=a+b+c+d+e+f+g+h.

$X^9$ is selected from $SO_2$, C=O, C=S, $R^q$P=O, $R^r$P=S, S=O, or Si=O.

$R^q$ and $R^r$ are each independently selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionally substituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; OH; SH; CN; SCN; or OCN.

$R^q$ and $R^r$ each optionally bind with $R^9$ to form a ring.

Y is selected from O or S.); and

($R^{10}X^{10}$) ($R^{11}X^{11}$) ($R^{12}X^{12}$)C     General Formula (6)

($R^{10}$, $R^{11}$, and $R^{12}$ are each independently $C_nH_aF_bCl_cBr_dI_e (CN)_f(SCN)_g(OCN)h$.

"n," "a," "b," "c," "d," "e," "f," "g," and "h" are each independently an integer not smaller than 0, and satisfy 2n+1=a+b+c+d+e+f+g+h.

Any two of $R^{10}$, $R^{11}$, and $R^{12}$ optionally bind with each other to form a ring, and, in that case, groups forming the ring satisfy 2n=a+b+c+d+e+f+g+h. Three of $R^{10}$, $R^{11}$, and $R^{12}$ optionally bind with each other to form a ring, and, in that case, among the three, two groups satisfy 2n=a+b+c+d+e+f+g+h and one group satisfies 2n-1=a+b+c+d+e+f+g+h.

$X^{10}$ is selected from $SO_2$, C=O, C=S, $R^s$P=O, $R^t$P=S, S=O, or Si=O.

$X^{11}$ is selected from $SO_2$, C=O, C=S, $R^u$P=O, $R^v$P=S, S=O, or Si=O.

$X^{12}$ is selected from $SO_2$, C=O, C=S, $R^w$P=O, $R^x$P=S, S=O, or Si=O.

$R^s$, $R^t$, $R^u$, $R^v$, $R^w$, and $R^x$ are each independently selected from: hydrogen; a halogen; an alkyl group optionally substituted with a substituent group; a cycloalkyl group optionally substituted with a substituent group; an unsaturated alkyl group optionally substituted with a substituent group; an unsaturated cycloalkyl group optionally substituted with a substituent group; an aromatic group optionallysubstituted with a substituent group; a heterocyclic group optionally substituted with a substituent group; an alkoxy group optionally substituted with a substituent group; an unsaturated alkoxy group optionally substituted with a substituent group; a thioalkoxy group optionally substituted with a substituent group; an unsaturated thioalkoxy group optionally substituted with a substituent group; OH; SH; CN; SCN; or OCN.

$R^s$, $R^t$, $R^u$, $R^v$, $R^w$, and $R^x$ each optionally bind with $R^{10}$, $R^{11}$, or $R^{12}$ to form a ring.).

8. The electrolytic solution according to any one of claims 1 to 7, wherein a chemical structure of an anion of the salt is represented by general formula (7), general formula (8), or general formula (9) below:

$$(R^{13}SO_2)(R^{14}SO_2)N \qquad \text{General Formula (7)}$$

($R^{13}$ and $R^{14}$ are each independently $C_nH_aF_bCl_cBr_dI_e$.
"n," "a," "b," "c," "d," and "e" are each independently an integer not smaller than 0, and satisfy $2n+1=a+b+c+d+e$.
$R^{13}$ and $R^{14}$ optionally bind with each other to form a ring, and, in that case, satisfy $2n=a+b+c+d+e$.);

$$R^{15}SO_3 \qquad \text{General Formula (8)}$$

($R^{15}$ is $C_nH_aF_bCl_cBr_dI_e$.
"n," "a," "b," "c," "d," and "e" are each independently an integer not smaller than 0, and satisfy $2n+1=a+b+c+d+e$.); and

$$(R^{16}SO_2)(R^{17}SO_2)(R^{18}SO_2)C \qquad \text{General Formula (9)}$$

($R^{16}$, $R^{17}$, and $R^{18}$ are each independently $C_nH_aF_bCl_cBr_dI_e$. "n," "a," "b," "c," "d," and "e" are each independently an integer not smaller than 0, and satisfy $2n+1=a+b+c+d+e$.
Any two of $R^{16}$, $R^{17}$, and $R^{18}$ optionally bind with each other to form a ring, and, in that case, groups forming the ring satisfy $2n=a+b+c+d+e$. Three of $R^{16}$, $R^{17}$, and $R^{18}$ optionally bind with each other to form a ring, and, in that case, among the three, two groups satisfy $2n=a+b+c+d+e$ and one group satisfies $2n-1=a+b+c+d+e$.).

9. The electrolytic solution according to any one of claims 1 to 8, wherein the salt is $(CF_3SO_2)_2NLi$. $(FSO_2)_2NLi$, $(C_2F_5SO_2)_2NLi$, $FSO_2(CF3SO_2)NLi$, $(SO_2CF_2CF_2SO_2)NLi$, or $(SO_2CF_2CF_2CF_2SO_2)NLi$.

10. The electrolytic solution according to any one of claims 1 to 9, wherein a heteroelement of the organic solvent is at least one selected from nitrogen, oxygen, sulfur, or a halogen.

11. The electrolytic solution according to any one of claims 1 to 10, wherein the organic solvent is an aprotic solvent.

12. The electrolytic solution according to any one of claims 1 to 11, wherein the organic solvent is selected from acetonitrile or 1,2-dimethoxyethane.

13. The electrolytic solution according to any one of claims 1 to 11, wherein the organic solvent is selected from a linear carbonate represented by general formula (10) below:

$$R^{19}OCOOR^{20} \qquad \text{General Formula (10)}$$

($R^{19}$ and $R^{20}$ are each independently selected from $C_nH_aF_bCl_cBr_dI_e$ that is a linear alkyl, or $C_mH_fFgCl_hBr_iI_j$ whose chemical structure includes a cyclic alkyl. "n," "a," "b," "c," "d," "e," "m," "f," "g," "h," "i," and "j" are each independently an integer not smaller than 0, and satisfy $2n+1=a+b+c+d+e$ and $2m=f+g+h+i+j$.).

14. The electrolytic solution according to any one of claims 1 to 11 and 13, wherein the organic solvent is selected from dimethyl carbonate, ethyl methyl carbonate, or diethyl carbonate.

15. The electrolytic solution according to any one of claims 1 to 14, wherein the electrolytic solution is an electrolytic solution for batteries.

16. The electrolytic solution according to any one of claims 1 to 15, wherein the electrolytic solution is an electrolytic solution for secondary batteries.

17. The electrolytic solution according to any one of claims 1 to 16, wherein the electrolytic solution is an electrolytic solution for lithium ion secondary batteries.

**18.** A capacitor comprising the electrolytic solution according to claim 1.

**19.** A method for producing an electrolytic solution, the method comprising:

preparing a first electrolytic solution by mixing an organic solvent having a heteroelement, and a salt whose cation is an alkali metal, an alkaline earth metal, or aluminum to dissolve the salt;
preparing a second electrolytic solution in a supersaturation state by adding the salt to the first electrolytic solution under stirring and/or heating conditions to dissolve the salt; and
preparing a third electrolytic solution by adding the salt to the second electrolytic solution under stirring and/or heating conditions to dissolve the salt.

# Fig. 1

Example 4

# Fig. 2

Example 3

# Fig. 3

# Fig. 4

# Fig. 5

Example 11

(cm⁻¹)

# Fig. 6

Comparative Example 7

(cm⁻¹)

# Fig. 7

Comparative Example 14

# Fig. 8

Acetonitrile

# Fig. 9

# Fig. 10

# Fig. 11

Example 15

# Fig. 12

Example 16

# Fig. 13

# Fig. 14

Fig. 15

Example 19

Fig. 16

Comparative Example 15

# Fig. 17

Dimethyl carbonate

# Fig. 18

Example 20

# Fig. 19

Example 21

# Fig. 20

Example 22

# Fig. 21

Comparative Example 16

# Fig. 22

Ethyl methyl carbonate

# Fig. 23

Example 23

# Fig. 24

Example 24

# Fig. 25

Example 25

# Fig. 26

Comparative Example 17

## Fig. 27

## Fig. 28

# Fig. 29

Example 26

# Fig. 30

Example 27

# Fig. 31

# Fig. 32

Example 13

$(cm^{-1})$

# Fig. 33

# Fig. 34

Example 15

# Fig. 35

# Fig. 36

# Fig. 37

# Fig. 38

Solid line :
Example A : 1st – 3rd

Dotted line :
Comparative Example A :
1st – 3rd

# Fig. 39

# Fig. 40

# Fig. 41

# Fig. 42

# Fig. 43

Fig. 44

Fig. 45

# Fig. 46

# Fig. 47

# Fig. 48

Example J

Voltage (V vs. Li)

# Fig. 49

Example J

Voltage (V vs. Li)

# Fig. 50

Example L

# Fig. 51

Example L

# Fig. 52

Example M

# Fig. 53

Example M

# Fig. 54

Comparative Example F

# Fig. 55

Example J

Voltage (vs Li)

# Fig. 56

Example J

Voltage V (vs Li)

# Fig. 57

Example K

# Fig. 58

Example K

# Fig. 59

Comparative Example G

# Fig. 60

Comparative Example G

# Fig. 61

Example N

Fig. 62

# Fig. 63

# Fig. 64

Voltage (V)

Capacity (mAh / g)

Example R

Comparative Example J

# Fig. 65

Fig. 66

Voltage (V)

Capacity (mAh / g)

# Fig. 67

Voltage (V)

Capacity (mAh / g)

# Fig. 68

# Fig. 69

# Fig. 70

<div align="center">**INTERNATIONAL SEARCH REPORT**</div>

| International application No. |
| --- |
| PCT/JP2014/004913 |

**A. CLASSIFICATION OF SUBJECT MATTER**
*H01M10/0568*(2010.01)i, *H01G11/06*(2013.01)i, *H01G11/60*(2013.01)i, *H01G11/62*(2013.01)i, *H01M10/0569*(2010.01)i

According to International Patent Classification (IPC) or to both national classification and IPC

**B. FIELDS SEARCHED**

Minimum documentation searched (classification system followed by classification symbols)
H01M10/0568, H01G11/06, H01G11/60, H01G11/62, H01M10/0569

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | Ryo YAEGASHI, "Yobai Bunshi no Haii Jotai Seigyo ni yoru Yuki Yoeki no Shinkino Hatsugen", Abstracts, the 53rd Battery Symposium in Japan, The Committee of Battery Technology, The Electrochemical Society of Japan, 13 November 2012 (13.11.2012), page 507 | 1-12<br>5-14 |
| X<br>Y | WO 2006/115023 A1 (Matsushita Electric Industrial Co., Ltd.), 02 November 2006 (02.11.2006), claims 1, 2, 7, 14; paragraphs [0002], [0003], [0016], [0017], [0019], [0026] to [0028]; examples 6, 9<br>& US 2009/0023074 A1  & EP 1879252 A1<br>& CN 101164189 A  & KR 10-2007-0121034 A | 1-12,15-19<br>5-14 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 November, 2014 (26.11.14) | 09 December, 2014 (09.12.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/004913

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 2001-507043 A　(Acep Inc.),<br>29 May 2001 (29.05.2001),<br>claims 1, 27 to 29, 33, 36; page 19, line 15 to page 20, line 5<br>& US 2002/0013381 A1　& US 2003/0195269 A1<br>& US 2005/0158631 A1　& US 2007/0205388 A1<br>& EP 928287 A　　　　& EP 1388546 A2<br>& WO 1999/005100 A1　& DE 69818627 D<br>& DE 69818627 T　　　& DE 69841891 D<br>& CA 2266643 A　　　　& UA 73914 C | 5-14 |
| Y | JP 2008-047479 A　(Matsushita Electric Industrial Co., Ltd.),<br>28 February 2008 (28.02.2008),<br>paragraphs [0023], [0029]<br>(Family: none) | 13,14 |
| X | Yuki YAMADA et al., Electrochemical Lithium Intercalation into Graphite in Dimethyl Sulfoxide-Based Electrolytes: Effect of Solvation Structure of Lithium Ion, Journal of Physical Chemistry, 2010, Vol.114, p.11680-11685 | 19 |
| A | Keizo FURUKAWA, "Konodo Acetonitrile Denkaieki o Mochiita Kuki Denchi", Abstracts, the 53rd Battery Symposium in Japan, The committee of Battery Technology, The Electrochemical Society of Japan, 13 November 2012 (13.11.2012), page 455 | 1-19 |
| A | JP 2004-511887 A　(E.I. Du Pont de Nemours & Co.),<br>15 April 2004 (15.04.2004),<br>entire text<br>& JP 2009-43737 A　　& US 6699623 B1<br>& US 2003/0003369 A1　& EP 1328996 A<br>& WO 2002/031905 A2　& AU 1137802 A<br>& TW 550847 B　　　　& CN 1468455 A<br>& KR 10-2004-0005831 A | 1-19 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013149477 A
- JP 2013134922 A
- JP 2013145724 A
- JP 2013137873 A
- JP 2004111294 A
- JP 2008010613 A
- WO 2004019356 A1
- WO 2004027789 A1
- WO 2005076299 A1
- JP H1131637 A
- JP H1027733 A
- JP 4732072 B
- JP 2013065493 A

**Non-patent literature cited in the description**

- Raman spectrometry. **HIROO HAMAGUCHI ; AKIKO HIRAKAWA.** Spectroscopical Society of Japan measurement method series 17. Japan Scientific Societies Press, 231-249
- *J. Electrochem. Soc.,* 2012, vol. 159 (8), A1329-A1334